(19) Europäisches Patentamt
European Patent Office
Office européen des brevets

(11) **EP 1 578 884 B1**

(12) **EUROPEAN PATENT SPECIFICATION**

(45) Date of publication and mention of the grant of the patent:
**24.04.2013 Bulletin 2013/17**

(21) Application number: **03716719.4**

(22) Date of filing: **19.03.2003**

(51) Int Cl.:
***C09K 9/00*** *(2006.01)* ***C08F 220/34*** *(2006.01)*
***C08F 220/50*** *(2006.01)* ***C08F 222/30*** *(2006.01)*
***C08F 290/06*** *(2006.01)* ***C08F 290/14*** *(2006.01)*
***C08F 293/00*** *(2006.01)* ***G02F 1/361*** *(2006.01)*
***C08L 53/00*** *(2006.01)*

(86) International application number:
**PCT/US2003/008541**

(87) International publication number:
**WO 2003/085065 (16.10.2003 Gazette 2003/42)**

(54) **POLYMER, PRODUCING METHOD THEREOF, AND PHOTOREFRACTIVE COMPOSITION**

POLYMER, VERFAHREN ZU SEINER HERSTELLUNG UND LICHTBRECHENDE ZUSAMMENSETZUNG

POLYMERE, PROCEDE DE PRODUCTION ASSOCIE ET COMPOSITION PHOTOREFRACTIVE

(84) Designated Contracting States:
**AT BE BG CH CY CZ DE DK EE ES FI FR GB GR HU IE IT LI LU MC NL PT RO SE SI SK TR**

(30) Priority: **29.03.2002 US 113127**
**29.03.2002 US 113330**

(43) Date of publication of application:
**28.09.2005 Bulletin 2005/39**

(60) Divisional application:
**10075480.3 / 2 261 270**

(73) Proprietors:
- **NITTO DENKO CORPORATION**
  **Osaka, Ibaraki 567-8680 (JP)**
- **Arizona Board of Regents**
  **on behalf of the University of Arizona**
  **Tucson, AZ 85721-0158 (US)**

(72) Inventors:
- **YAMAMOTO, Michiharu**
  **Oceanside, CA 92054 (US)**
- **MARDER, Seth, R.**
  **Atlanta GA 30305 (US)**
- **KIPPELEN, Bernard**
  **Decatur GA 30030 (US)**

(74) Representative: **Miles, John Stephen et al**
**Potter Clarkson LLP**
**The Belgrave Centre**
**Talbot Street**
**Nottingham NG1 5GG (GB)**

(56) References cited:
**JP-A- 10 333 195**

EP 1 578 884 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

FIELD OF THE INVENTION

The invention relates to photorefractive compositions. More particularly, the invention relates to polymers and copolymers that include functional groups that provide photorefractive capabilities, and to methods of making such polymers. The invention also relates to photorefractive compositions composing a novel fused ring structure chromophore and/or mixture of more than two different structure chromophores that provide photorefractive capabilities.

BACKGROUND OF THE INVENTION

Photorefractivity is a phenomenon in which the refractive index of a material can be altered by changing the electric field within the material, such as by laser beam irradiation. The change of refractive index is achieved by a series of steps, including: (1) charge generation by laser irradiation, (2) charge transport, resulting in separation of positive and negative charges, and (3) trapping of one type of charge (charge delocalization), (4) formation of a non-uniform internal electric field (space-charge field) as a result of charge delocalization, and (5) refractive index change, induced by the non-uniform electric field.

Therefore, good photorefractive properties can be seen only for materials that combine good charge generation, good charge transport, or photoconductivity, and good electro-optical activity.

Photorefractive materials have many promising applications, such as high-density optical data storage, dynamic holography, optical image processing, phase conjugated mirrors, optical computing, parallel optical logic, and pattern recognition.

Originally, the photorefractive effect was found in a variety of inorganic electro-optical (EO) crystals, such as $LiNbO_3$. In these materials, the mechanism of the refractive index modulation by the internal space-charge field is based on a linear electro-optical effect.

In 1990 and 1991, the first organic photorefractive crystal and polymeric photorefractive materials were discovered and reported. Such materials are disclosed, for example, in U.S. Patent 5,064,264, to Ducharme et al. Organic photorefractive materials offer many advantages over the original inorganic photorefractive crystals, such as large optical nonlinearities, low dielectric constants, low cost, lightweight, structural flexibility, and ease of device fabrication. Other important characteristics that may be desirable depending on the application include sufficiently long shelf life, optical quality, and thermal stability. These kinds of active organic polymers are emerging as key materials for advanced information and telecommunication technology.

In recent years, efforts have been made to optimize the properties of organic, and particularly polymeric, photorefractive materials. As mentioned above, good photorefractive properties depend upon good charge generation, good charge transport, also known as photoconductivity, and good electro-optical activity. Various studies that examine the selection and combination of the components that give rise to each of these features have been done. The photoconductive capability is frequently provided by incorporating materials containing carbazole groups. Phenyl amine groups can also be used for the charge transport part of the material.

Non-linear optical ability is generally provided by including chromophore compounds, such as an azo-type dye, which can absorb photon radiation. The chromophore may also provide adequate charge generation. Alternatively, a material known as a sensitizer may be added to provide or boost the mobile charge required for photorefractivity to occur. Many materials, including wide range of dyes and pigments, can serve as sensitizers.

The photorefractive composition may be made simply by mixing the molecular components that provide the individual properties required into a host polymer matrix. However, most compositions prepared in this way are not stable over time, because phase separation tends to occur as the components crystallize or phase separate.

Efforts have been made, therefore, to make polymers that include one or more of the active components in the polymer structure.

A major improvement was to replace the inert polymer matrix by the photoconductive polymer poly(N-vinylcarbazole) (PVK). This allowed the concentration of the charge-transport agent to be increased, while completely excluding crystallization of the carbazole groups. This breakthrough, achieved at the University of Arizona, is reported by N. Peyghambarian et al. (Nature, 1994, 371, 497).

In this case, a photorefractive composition was made by adding an azo dye (DMNPAA; 2,5-dimethyl-4-(p-nitrophenylazo) anisole) as chromophore, and trinitrofluorenone (TNF) as sensitizer. The resulting compositions showed almost 100% diffraction efficiency at laser intensity of $1 W/cm^2$ and 90 V/$\mu$m biased voltage. The response time was slow, however, at over 100 msec.

To achieve good photorefractivity, materials are typically doped with large concentrations of chromophore, such as 25 wt% or more. Thus, crystallization and phase separation of the strongly dipolar chromophore remain a major problem.

To completely eliminate the instability caused by phase separation, it has been recognized that it would be desirable to prepare fully functionalised photorefractive polymers, that is, polymers in which both the photoconductivity and the non-linear optical capability reside within the polymer itself.

Building on the original University of Arizona work, efforts have been made to develop fully functional photorefractive polymers, as well as to speed up the response time. For example, PVK polymers in which some of the carbazole groups are tricyanovinylated have been made (N. Peyghambarian et al., Applied Phys. Lett., 1992, 60, 1803). However, the photoconductivity of this polymer was reported as only 0.98 pS/cm and the diffraction efficiency was less than 1%, too low to show good photorefractivity. Also, the polydispersity of the polymer was high, at 3.3. Subsequently, the same group has reported PVK-based materials with an amazing response time of 4 msec, and a very high photoconductivity of 2,800 pS/cm (N. Peyghambarian et al., J. Mater. Chem., 1999, 9, 2251).

A number of efforts at materials improvement have used methacrylate-based polymers and copolymers that include photoconductive and chromophore side groups. A paper by T. Kawakami and N. Sonoda, (Applied Phys. Lett., 1993, 62, 2167.) discloses acrylate-based polymers containing dicyanovinylideneyl phenylamines as charge transport groups. The diffraction efficiency was reported as around 0.01 %.

Japanese Patent Application laid-open JP-A 1995-318992, to Hitachi Ltd. discloses acrylate-based polymers and copolymers made by conventional polymerization techniques and containing charge transport and non-linear-optical groups, but gives no photorefractive performance data.

A report by H. Sato et al., (Technical report of IEICE., 1995, OME-95-53, OPE95-94, 43) describes the preparation of several copolymers having both charge transport components and non-linear optical components in the side groups of the copolymer. However, the charge transport speeds seem to be too slow for good photorefractive materials. The polymers are reported to have polydispersity in the range about 2.3-2.9.

Japanese Patent Application Laid-open JP-A 1998-333195, to Showa Denko, discloses acrylate-based polymers incorporating triphenylamine groups as charge transport agents. Fast response times (50 msec. at 70 V/μm biased voltage) and good polydispersity (1.58) are reported, although there is no description or data regarding diffraction efficiency.

A paper by Van Steenwickel et al. (Macromolecules, 2000, 33, 4074) describes acrylate-based polymers that include carbazole-based side chains and several stilbene-type side chains. The paper cites a high diffraction efficiency of 60% at 58 V/μm, but a slow response time of the sub-second order. Poly dispersity of between 2.5 and 3.8 is reported.

A paper by Y.Chen et al. (Modern Optics, 1999, 46, 1003) discusses a methacrylate polymer that has both carbazole-type side chains to provide charge transport capability and nitrophenyl azo-type side chains to provide non-linear optical capability. The materials again show slow response times of over 20 sec.

None of the materials described above achieves the optimum combination of a high diffraction efficiency with a fast response time, long-term stability and easy processability. Thus, there remains a need for photorefractive compositions that combine these attributes.

In recent years, a new type of polymerization, termed living radical polymerization, has been developed for polymerization of functional monomers, including methacrylate and styrene derivatives. Living radical polymerization differs from conventional radical polymerization in that the polymer growth terminals can be temporarily protected by protection bonding. This enables polymerization to be well controlled, including being stopped and started at will.

This process can be used to prepare homopolymers and copolymers, including block copolymers. Details of the living radical polymerization method are described in the literature. They may be found, for example, in the following papers:

1. T. Patten et al., "Radical polymerization yielding polymers with Mw/Mn ~1.05 by homogeneous atom transfer radical polymerization", Polymer Preprints, 1996, 37, 575.
2. Matyjasewski et al., "Controlled/living radical polymerization. Halogen atom transfer radical polymerization promoted by a Cu(I)/Cu(II) redox process", Macromolecules, 1995, 28, 7901.
3. M. Sawamoto et al., " Ruthenium-mediated living radical polymerization of methyl methacrylate", Macromolecules, 1996, 29, 1070.

Living radical polymerization is also described in U.S. Patent 5,807,937 to Carnegie-Mellon University, which is incorporated herein by reference in its entirety.

As an example of block copolymers prepared by living radical polymerization, novel styrene and butyl acrylate block copolymers for pressure sensitive adhesives have been reported (JP-A 2001-115124, M. Yamamoto et al.). Such block copolymers could not be prepared by conventional polymerization methods.

The only example known to the present inventors of photorefractive polymer preparation by living radical polymerization is in a paper by E. Hattemer et al. (Polymer Preprints, Am. Chem. Soc., Div. Polym. Chem., 2000, 41, 785). This reference discloses the polymerization of a triphenylamine-type styrene monomer, using a phenylethoxy-tetramethylpiperidine (TEMPO-type) initiator. The resulting polymers have low polydispersities of 1.2-1.4. No photorefractive or

electro-optical performance data are reported in the citation.

SUMMARY OF THE INVENTION

The invention relates to photorefractive compositions. More particularly, the invention relates to polymers and copolymers that include functional groups that provide photorefractive capabilities, and to methods of making such polymers. The invention also relates to photorefractive compositions composing a novel fused ring structure chromophore and/or mixture of more than two different structure chromophores that provide photorefractive capabilities.

A first aspect of the present invention is a polymer which is represented by a formula selected from the group consisting of formulae (I), (II), (III) and (IV):

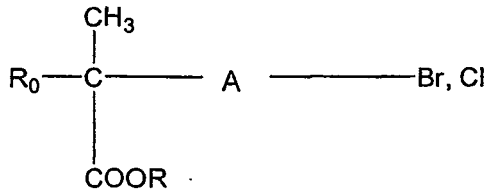

(I)

wherein $R_0$ represents a hydrogen atom or alkyl group with up to 10 carbons; R is selected from the group consisting of a hydrogen atom, a linear alkyl group with up to 10 carbons, a branched alkyl group with up to 10 carbons, and an aromatic group with up to 10 carbons; A represents a repeating structure comprising at least one of the below repeating unit 1 and repeating unit 2;

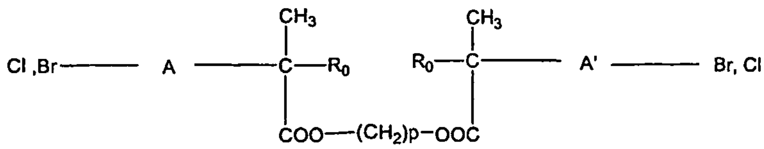

(II)

wherein $R_0$ represents each independently a hydrogen atom or alkyl group with up to 10 carbons; p is an integer of 2 to 6; A and A' represents each independently a repeating structure comprising at least one of the below repeating unit 1 and repeating unit 2;

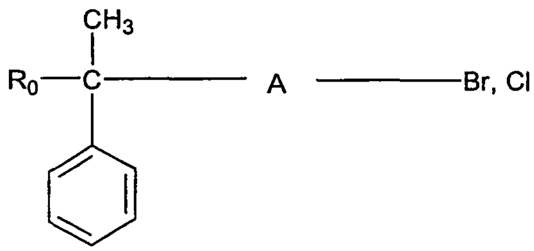

(III) ,

wherein $R_0$ represents a hydrogen atom or alkyl group with up to 10 carbons; A represents a repeating structure comprising at least one of the below repeating unit 1 and repeating unit 2;

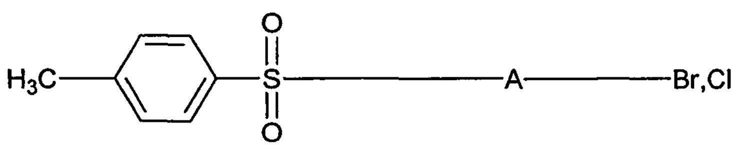

(IV)

wherein A represents a repeating structure comprising at least one of the below repeating unit 1 and repeating unit 2;

repeating unit 1

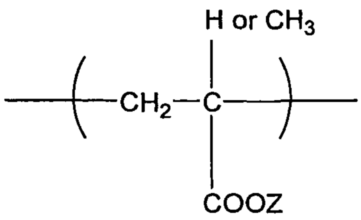

repeating unit 2

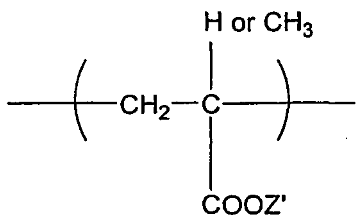

wherein Z is represented by a structure selected from the group consisting of structures (i), (ii) and (iii); and Z' is represented by formula (0);

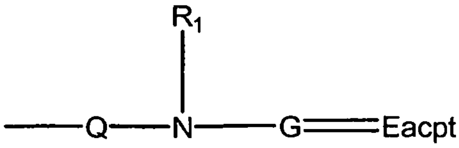
formula (0)

wherein Q represents an alkylene group, with or without a hetero atom; such as oxygen or sulfur, and preferably Q is an alkylene group represented by $(CH_2)p$; where p is an integer of about 2 to 6; $R_1$ is selected from the group consisting of a hydrogen atom, a linear alkyl group with up to 10 carbons, a branched alkyl group with up to 10 carbons, and an aromatic group with up to 10 carbons, and preferably $R_1$ is an alkyl group which is selected from methyl, ethyl, propyl, butyl, pentyl and hexyl; G is a group having a bridge of $\pi$-conjugated bond; and Eacpt is an electron acceptor group; wherein the structures (i), (ii) and (iii) are:

Structure (i)

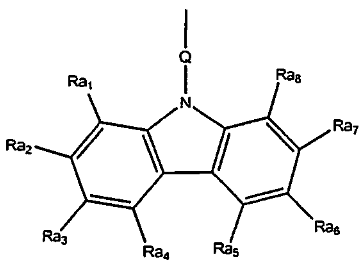

wherein Q represents an alkylene group, with or without a hetero atom, such as oxygen or sulfur, and preferably Q is an alkylene group represented by $(CH_2)p$; where p is an integer of about 2 to 6; and wherein $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

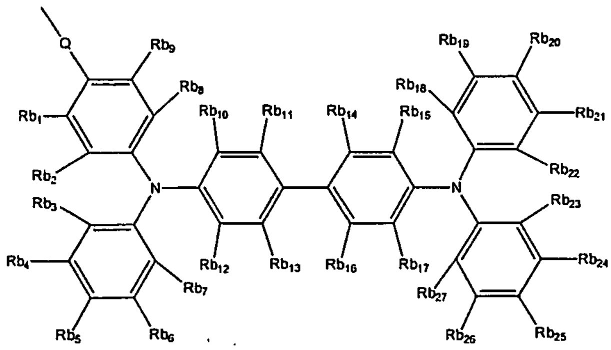

wherein Q represents an alkylene group, with or without a hetero atom, such as oxygen or sulfur, and preferably Q is an alkylene group represented by $(CH_2)p$; where p is an integer of about 2 to 6; and wherein $Rb_1$-$Rb_{27}$ are independently selected from the group consisting of a hydrogen atom, a linear alkyl group with up to 10 carbons, a branched alkyl group with up to 10 carbons, and an aromatic group with up to 10 carbons; and

Structure (iii)

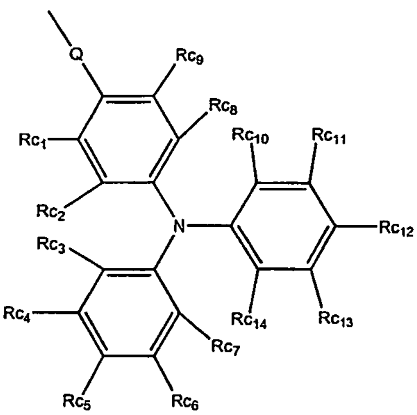

wherein Q represents an alkylene group, with or without a hetero atom, such as oxygen or sulfur, and preferably Q is an alkylene group represented by $(CH_2)p$; where p is an integer of about 2 to 6, and wherein $Rc_1$-$Rc_{14}$ are independently selected from the group consisting of a hydrogen atom, a linear alkyl group with up to 10 carbons, a branched alkyl group with up to 10 carbons, and an aromatic group with up to 10 carbons.

A second aspect of the present invention is a method for producing a polymer comprising polymerizing a monomer by a living radical polymerization technique, wherein the monomer comprises a structure selected from the group consisting of the above structures (i), (ii) and (iii).

A third aspect of the present invention is a method for producing a polymer comprising polymerizing a monomer by a living radical polymerization technique, wherein the monomer comprises a structure represented by the above formula (0).

A fourth aspect of the present invention is a method for producing a polymer comprising copolymerizing at least a first monomer and a second monomer by a living radical polymerization technique, wherein the first monomer comprises a structure selected from the group consisting of the above structures (i), (ii) and (iii), and wherein the second monomer comprises a structure represented by the above formula (0).

A fifth aspect of the present invention is a composition comprising a sensitizer and a polymer according to the first aspect of the present invention, wherein the composition exhibits photorefractive ability.

A sixth aspect of the present invention is a composition comprising a polymer prepared by living radical polymerization, wherein: (a) the living radical polymerization is carried out using a monomer, a polymerization initiator, transition metal catalyst and a ligand capable of reversibly forming a complex with the transition metal catalyst, (b) the polymer comprises at least one of a first repeat unit including a moiety having charge transport ability and a second repeat unit including a moiety having non-linear-optical ability, and (c) the composition exhibits photorefractive ability. One or both of the photoconductive (charge transport) and non-linear optical components are incorporated into the chemical structure of the polymer itself, typically as side groups.

The object of the present invention is to also provide a photorefractive composition which exhibits high photoconductivity, and a copolymer which is desirably used for the photorefractive composition.

A seventh aspect of the present invention is a composition comprising a co-polymer, wherein: (a) the co-polymer comprises a first repeating unit including a first moiety selected from the group consisting of the structures (i), (ii) and (iii), and a second repeating unit including a second moiety represented by the formula (0); wherein (b) the composition exhibits photorefractive ability:

Structure (i)

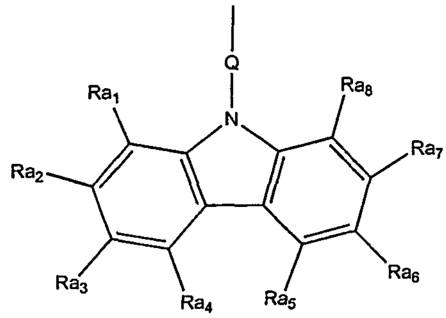

wherein Q represents an alkylene group, with or without a hetero atom, such as oxygen or sulfur, and preferably Q is an alkylene group represented by $(CH_2)p$; where p is between about 2 and 6; and wherein $Ra_1$, $Ra_2$, $Ra_3$, $Ra_4$, $Ra_5$, $Ra_6$, $Ra_7$, and $Ra_8$ are each independently selected from the group consisting of a hydrogen atom, a linear alkyl group with up to 10 carbons, a branched alkyl group with up to 10 carbons, and an aromatic group with up to 10 carbons;

Structure (ii)

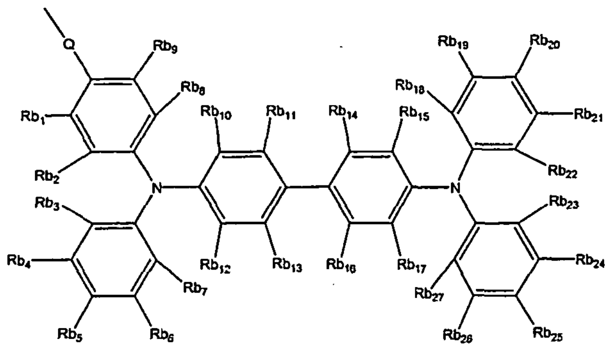

wherein Q represents an alkylene group, with or without a hetero atom, such as oxygen or sulfur, and preferably Q is an alkylene group represented by $(CH_2)p$; where p is between about 2 and 6; and wherein $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)

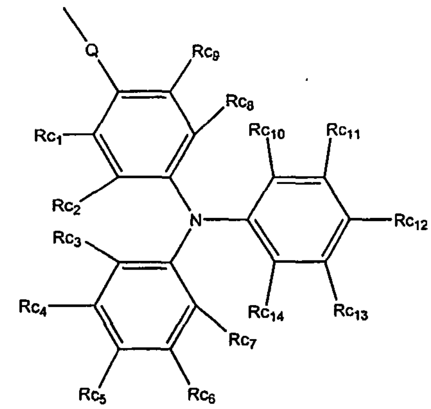

wherein Q represents an alkylene group, with or without a hetero atom, such as oxygen or sulfur, and preferably Q is an alkylene group represented by $(CH_2)p$; where p is between about 2 and 6, and wherein $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons;

Formula (0)

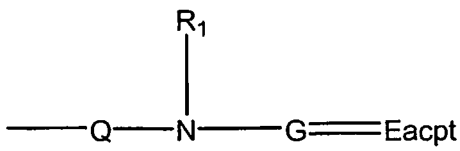

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group.

An eighth aspect of the present invention is a composition comprising a co-polymer prepared by radical polymerization, wherein: (a) the co-polymer comprises a first repeating unit selected from the group consisting of the structures (i)", (ii)" and (iii)", and a second repeating unit represented by the formula (0)"; wherein (b) the composition exhibits photorefractive ability:

Structure (i)"

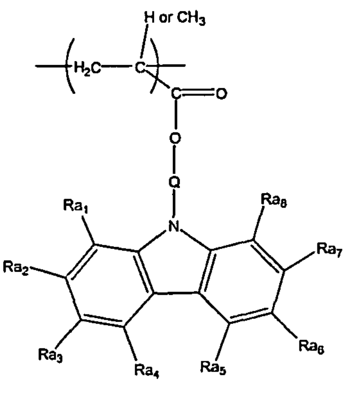

wherein Q represents an alkylene group, with or without a hetero atom, such as oxygen or sulfur, and preferably Q is an alkylene group represented by $(CH_2)p$; where p is between about 2 and 6; and wherein $Ra_1$, $Ra_2$, $Ra_3$, $Ra_4$, $Ra_5$, $Ra_6$, $Ra_7$, and $Ra_8$ are each independently selected from the group consisting of a hydrogen atom, a linear alkyl group with up to 10 carbons, a branched alkyl group with up to 10 carbons, and an aromatic group with up to 10 carbons;

Structure (ii)”

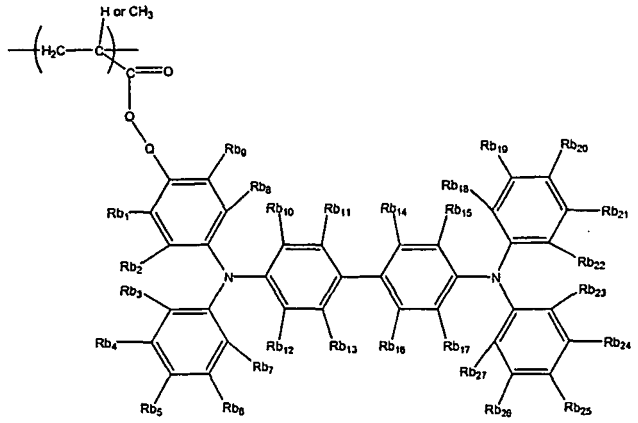

wherein Q represents an alkylene group, with or without a hetero atom, such as oxygen or sulfur, and preferably Q is an alkylene group represented by $(CH_2)p$; where p is between about 2 and 6; and wherein $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)”

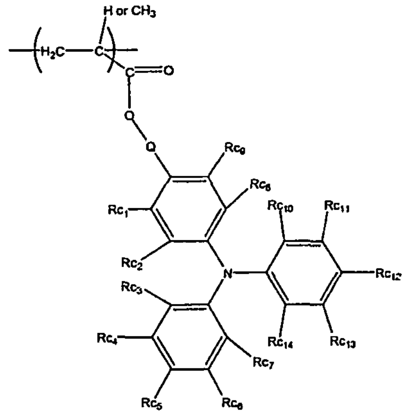

wherein Q represents an alkylene group, with or without a hetero atom, such as oxygen or sulfur, and preferably Q is an alkylene group represented by $(CH_2)p$; where p is between about 2 and 6, and wherein $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons;

Formula (0)”

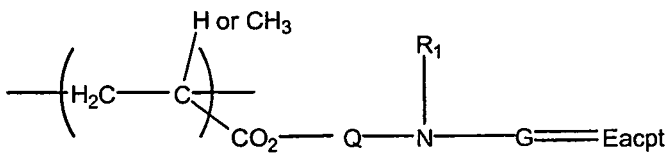

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group.

A nineth aspect of the present invention is a composition comprising a block co-polymer, wherein: (a) the block co-polymer comprises a first block unit including a first moiety selected from the group consisting of the above structures (i), (ii) and (iii), and a second block unit including a second moiety represented by the above formula (0); wherein (b)

the composition exhibits photorefractive ability:

A tenth aspect of the present invention is a composition comprising a block co-polymer prepared by living radical polymerization, wherein: (a) the block co-polymer comprises a first block unit having charge transport ability, and a second block unit having non-linear-optical ability; wherein (b) the composition exhibits photorefractive ability.

An eleventh aspect of the present invention is a composition comprising a block co-polymer, wherein: (a) the block co-polymer comprises a first block unit containing a unit selected from the group consisting of the above structures (i)", (ii)" and (iii)", and a second block unit containing a unit represented by the above formula (0)"; wherein (b) the composition exhibits photorefractive ability.

The composition comprises a polymer matrix, and includes a component that provides photoconductive (charge transport) ability and a component that provides non-linear optical ability, and, optionally, sensitizer and plasticizer components. Both of the photoconductive and non-linear optical components are incorporated into the chemical structure of the polymer itself, typically as side groups.

The object of the present invention is to also provide a photorefractive composition which exhibits fast response time and high diffraction efficiency, along with very good composition stability which is desirably used for the photorefractive composition. By inventors, various chromophore studies have been done. Several excellent chromophores and their containing photorefractive compositions, which show very good photorefractive performances described in the above, have been found in this invention.

A twelfth aspect of the present invention is a composition comprising at least a chromophore, wherein:

chromophore selected from the group consisting of formulae (i) and (ii), wherein the composition exhibits photorefractive ability.

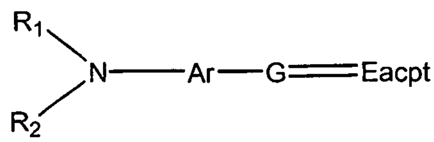

formula (i)

wherein Ar represents an aromatic group, with or without a hetero atom; $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different; G is a group having a bridge of $\pi$-conjugated bond; and Eacpt is an electron acceptor group;

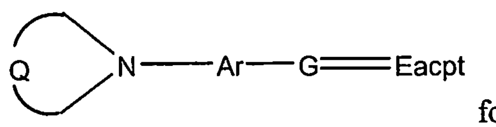

formula (ii)

wherein Ar represents an aromatic group, with or without a hetero atom; G is a group having a bridge of $\pi$-conjugated bond; and Eacpt is an electron acceptor group; Q represents an alkylene group, with or without a hetero atom.

Particularly, in a chromophore formulae (i),

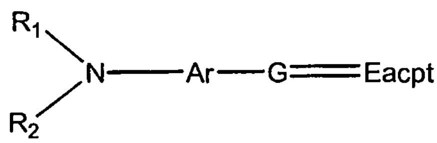

formula (i)

wherein Ar is an aromatic group and selected from phenylene, naphthylene, and thiophenylene,
wherein G in formula (i) is represented by a structure selected from the group consisting of the structures (v) and (vi); wherein structures (v) and (vi) are:

Structure (v)

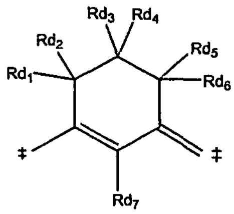

wherein, $Rd_1$-$Rd_7$ are each independently selected from the group consisting of a hydrogen atom, a linear alkyl group with up to 10 atoms, a branched alkyl group with up to 10 atoms, and an aromatic group with up to 10 carbons;

Structure (vi)

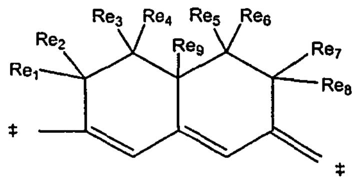

wherein $Re_1$-Re9 represent hydrogen or a linear or branched alkyl group with up to 10 carbons; and
wherein Eacpt is an electron acceptor group and represented by a structure selected from the group consisting of the structures;

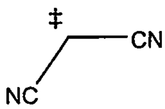 , 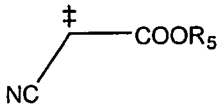 , 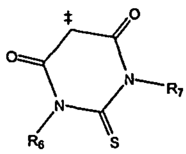 , 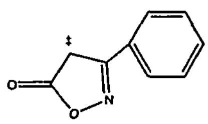 , 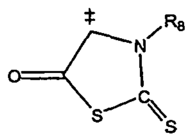

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

Also, in a chromophore formulae (ii),

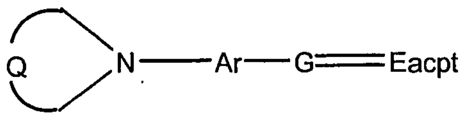

formula (ii)

wherein Ar is an aromatic group and selected from phenylene, naphthylene, and thiophenylene; wherein Q represents an alkylene group and selected from phenylene, naphtylene, and thiophenylene;
wherein G in formula (ii) is represented by a structure selected from the group consisting of the structures (v) and (vi); wherein structures (v) and (vi) are:

Structure (v)

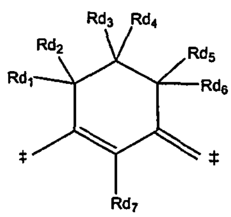

,

wherein, $Rd_1$-$Rd_7$ are each independently selected from the group consisting of a hydrogen atom, a linear alkyl group with up to 10 atoms, a branched alkyl group with up to 10 atoms, and an aromatic group with up to 10 carbons;

Structure (vi)

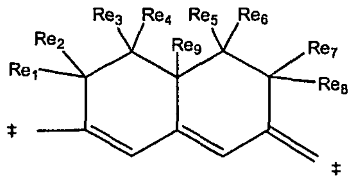

wherein $Re_1$-$Re_9$ represent hydrogen or a linear or branched alkyl group with up to 10 carbons; and
wherein Eacpt is an electron acceptor group and represented by a structure selected from the group consisting of the structures;

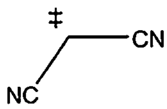 , 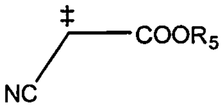 , 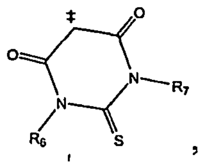 , 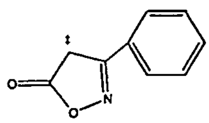 , 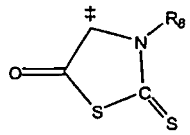

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

A thirteenth aspect of the present invention is a composition comprising mixture of more than two different type chromophores selected from the the group consisting of formulae (i), (ii), (iii), and (iv) wherein the composition exhibits photorefractive ability.

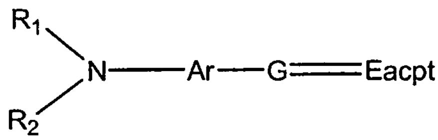

formula (i)

wherein Ar represents an aromatic group, with or without a hetero atom; $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different; G is a group having a bridge of $\pi$-conjugated bond; and Eacpt is an electron acceptor group;

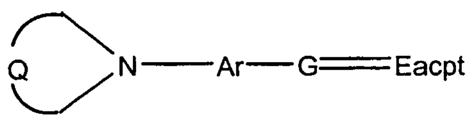

formula (ii)

wherein Ar represents an aromatic group, with or without a hetero atom; G is a group having a bridge of $\pi$-conjugated bond; and Eacpt is an electron acceptor group; Q represents an alkylene group, with or without a hetero atom.

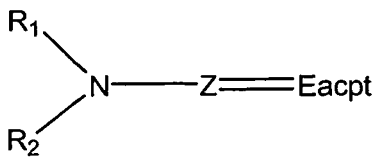

formula (iii)

wherein $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different;

wherein Z is a group having a bridge of $\pi$-conjugated bond; and Eacpt is an electron acceptor group.wherein the composition exhibits photorefractive ability.

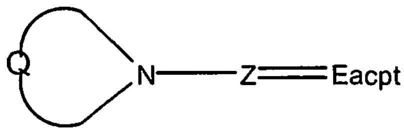

formula (iv)

wherein Q represents an alkylene group, with or without a hetero atom; wherein Z is a group having a bridge of $\pi$-conjugated bond; and Eacpt is an electron acceptor group.wherein the composition exhibits photorefractive ability.

Particularly, in a chromophore formulae (i),

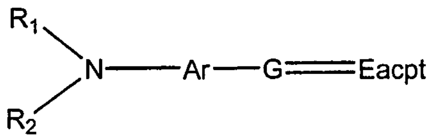

formula (i)

wherein Ar is an aromatic group and selected from phenylene, naphthylene, and thiophenylene,
wherein G in formula (i)

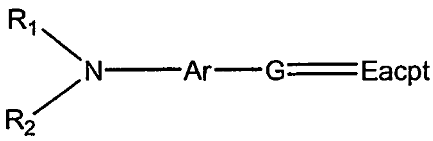

formula (i)

wherein Ar is an aromatic group and selected from phenylene, naphthylene, and thiophenylene.
wherein G in formula (i) is represented by a structure selected from the group consisting of the structures (v) and (vi); wherein structures (v) and (vi) are:

Structure (v)

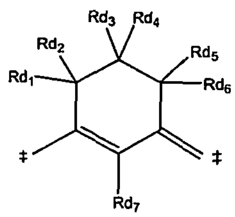

,

wherein, $Rd_1$-$Rd_7$ are each independently selected from the group consisting of a hydrogen atom, a linear alkyl group with up to 10 atoms, a branched alkyl group with up to 10 atoms, and an aromatic group with up to 10 carbons;

Structure (vi)

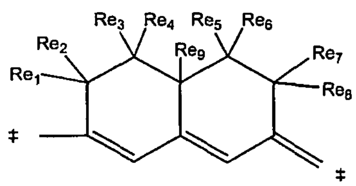

wherein $Re_1$-Re9 represent hydrogen or a linear or branched alkyl group with up to 10 carbons; and
wherein Eacpt is an electron acceptor group and represented by a structure selected from the group consisting of the structures;

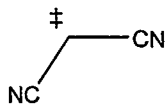 , 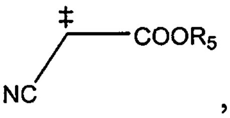 , 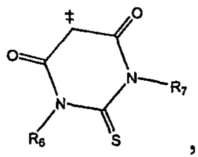 , 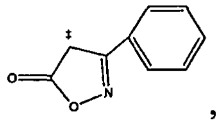 , 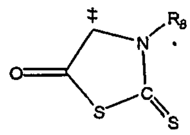

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

Also, in a chromophore formula (ii)

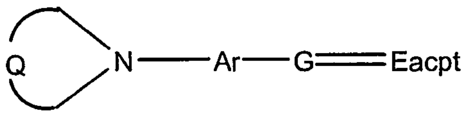

formula (ii)

Ar is an aromatic group and selected from phenylene, naphthylene, and thiophenylene; wherein Q represents an alkylene group and selected from phenylene, naphtylene, and thiophenylene;.

wherein G in formula (ii) is represented by a structure selected from the group consisting of the structures (v) and (vi); wherein structures (v) and (vi) are:

Structure (v)

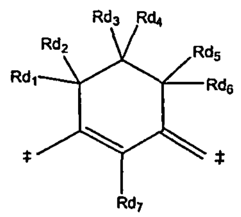

,

wherein, $Rd_1$-$Rd_7$ are each independently selected from the group consisting of a hydrogen atom, a linear alkyl group with up to 10 atoms, a branched alkyl group with up to 10 atoms, and an aromatic group with up to 10 carbons;

Structure (vi)

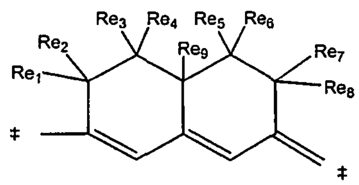

wherein $Re_1$-$Re_9$ represent hydrogen or a linear or branched alkyl group with up to 10 carbons; and

wherein Eacpt is an electron acceptor group and represented by a structure selected from the group consisting of the structures;

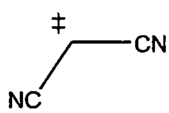 , 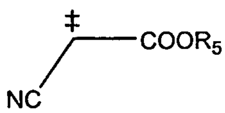 , 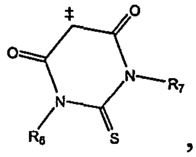 , 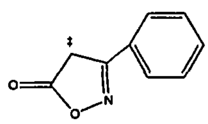 , 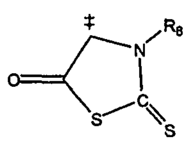

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

Also, wherein wherein formula (iii)

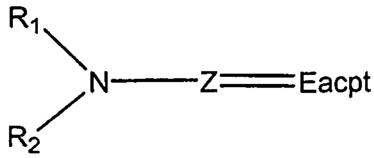

formula (iii)

wherein $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different; wherein Z is a group selected from the group consisting of the structures (vii), (viii) and (ix); wherein structures (vii), (viii) and (ix) are:

Structure (vii)

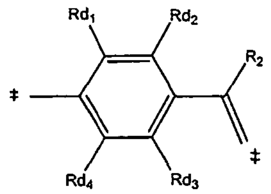

,

Structure (viii)

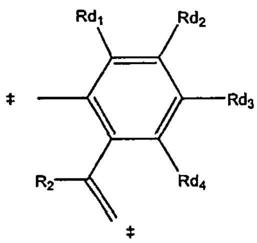

wherein, in both structures (vii) and (viii), $Rd_1$-$Rd_4$ are each independently selected from the group consisting of a hydrogen atom, a linear alkyl group with up to 10 atoms, a branched alkyl group with up to 10 atoms, and an aromatic group with up to 10 carbons; $R_2$ is selected from the group consisting of a hydrogen atom, a linear alkyl group with up to 10 atoms, a branched alkyl group with up to 10 atoms, and an aromatic group with up to 10 carbons;

Structure (ix)

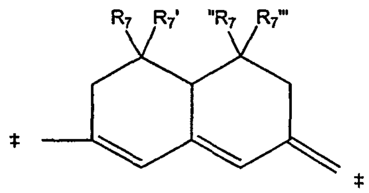

wherein $R_7$, $R_7'$, $R_7''$, and $R_7'''$ represent hydrogen or a linear or branched alkyl group with up to 10 carbons; and wherein Eacpt in formula (iii) is an electron acceptor group and represented by a structure selected from the group consisting of the structures;

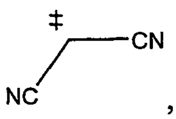 , 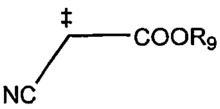 , 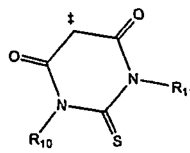 , 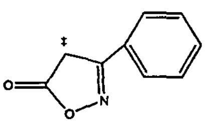 , 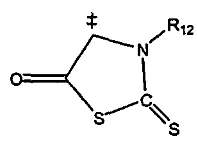

wherein $R_9$, $R_{10}$, $R_{11}$ and $R_{12}$ are each independently selected from the group consisting of a hydrogen atom, a linear alkyl group with up to 10 atoms, a branched alkyl group with up to 10 atoms, and an aromatic group with up to 10 carbons.

Also, in a chromophore formula(iv)

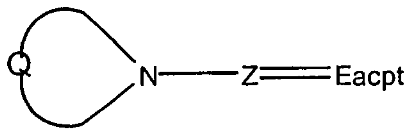

formula (iv)

wherein Q represents an alkylene group and selected from phenylene, naphtylene, and thiophenylene;
wherein Z is a group selected from the group consisting of the structures (vii), (viii) and (ix);
wherein structures (vii), (viii) and (ix) are:

Structure (vii)

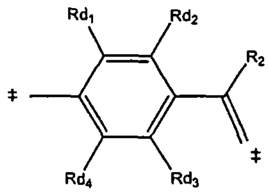

,

Structure (viii)

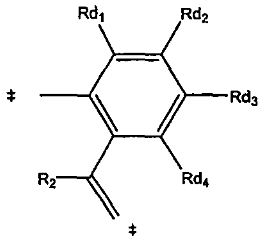

wherein, in both structures (vii) and (viii), $Rd_1$-$Rd_4$ are each independently selected from the group consisting of a hydrogen atom, a linear alkyl group with up to 10 atoms, a branched alkyl group with up to 10 atoms, and an aromatic group with up to 10 carbons; $R_2$ is selected from the group consisting of a hydrogen atom, a linear alkyl group with up to 10 atoms, a branched alkyl group with up to 10 atoms, and an aromatic group with up to 10 carbons;

Structure (ix)

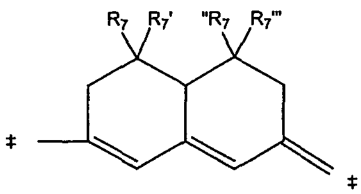

wherein $R_7$, $R_7$', $R_7$", and $R_7$"' represent hydrogen or a linear or branched alkyl group with up to 10 carbons; and wherein Eacpt in formula (iii) is an electron acceptor group and represented by a structure selected from the group consisting of the structures;

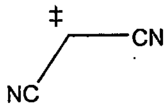, 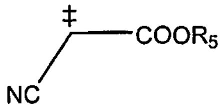, 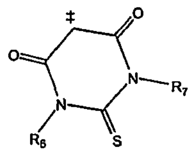, 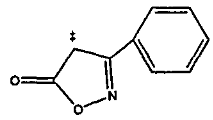, 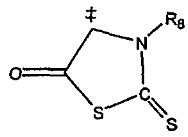

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

A fourteenth aspect of the present invention is a composition at least comprising both one or more than one type of chromophore which is already described in before; and a) a polymer which comprises a repeating unit including moiety selected from the group consisting of the structures (x), (xi), and (xii), wherein the composition exhibits photorefractive ability.

Structure (x)

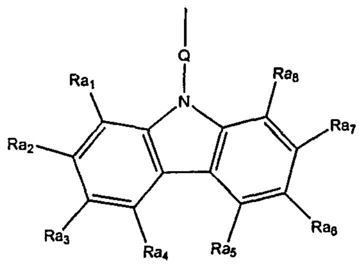

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (xi)

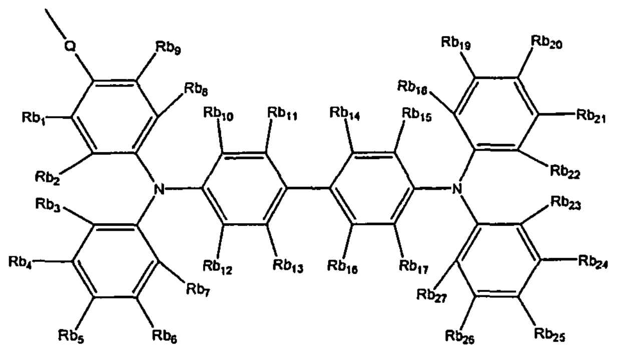

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (xii)

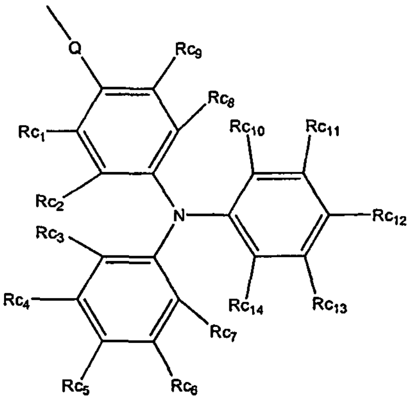

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons.

A fifteenth aspect of the present invention is a composition at least comprising both a) one or more than one type of chromophore which is already described in before; and b) polymer selected from the group consisting of the structures (xiii), (xiv), and (xv), wherein the composition exhibits photorefractive ability.

Structure (xiii)

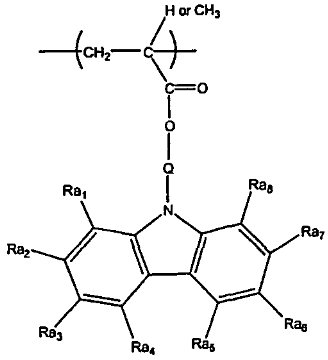

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (xiv)

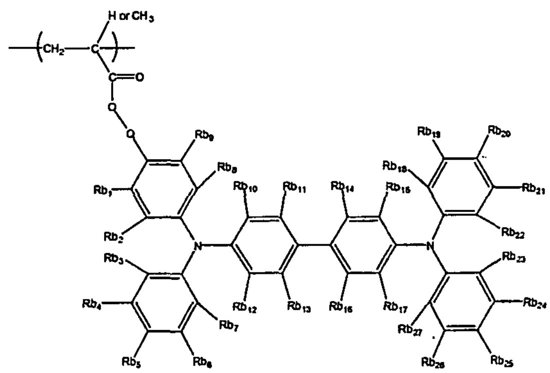

wherein Q represents an alkylene group, with or without a hetero atom; $Rb_1$-$Rb_{27}$ are each independently selected from

the group consisting of a hydrogen atom, a linear alkyl group with up to 10 carbons, a branched alkyl group with up to 10 carbons, and an aromatic group with up to 10 carbons;

Structure (xv)

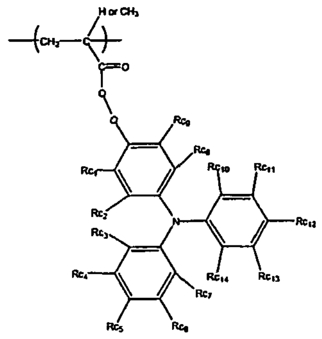

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons.

A sixteenth aspect of the present invention is a composition comprising chromophore and a polymer, further comprising a plascticizer and sensitizer, wherein the composition exhibits photorefractive ability.

A seventeenth aspect of the present invention is a composition comprising chromophore and a polymer, further comprising a plascticizer which is N-alkyl carbazole or triphenylamine derivatives containing electron acceptor group, as depicted in the following structure 4, 5, and 6, can be used.

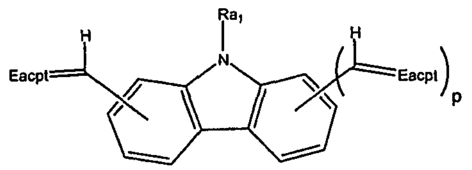

structure 4

wherein $Ra_1$ is independently selected from the group consisting of a hydrogen atom, a linear alkyl group with up to 10 carbons, a branched alkyl group with up to 10 carbons, and an aromatic group with up to 10 carbons; p is 0 or 1.

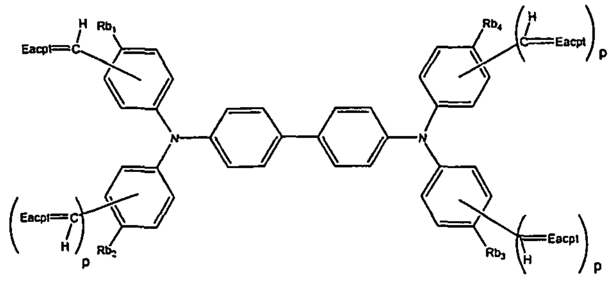

structure 5

wherein $Rb_1$-$Rb_4$ are each independently selected from the group consisting of a hydrogen atom, a linear alkyl group with up to 10 carbons, a branched alkyl group with up to 10 carbons, and an aromatic group with up to 10 carbons; p is 0 or 1

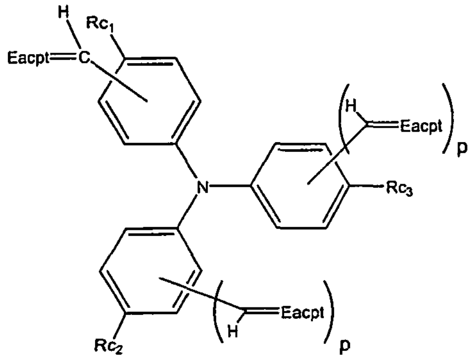

structure 6

wherein $Rc_1$-$Rc_3$ are each independently selected from the group consisting of a hydrogen atom, a linear alkyl group with up to 10 carbons, a branched alkyl group with up to 10 carbons, and an aromatic group with up to 10 carbons; P is 0 or 1; wherein Eacpt is an electron acceptor group and represented by a structure selected from the group consisting of the structures;

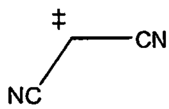 , 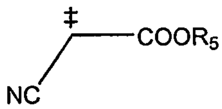 , 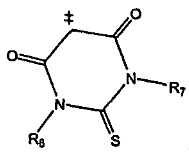 , 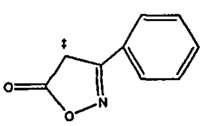 , 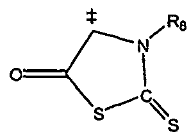

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

The plascticizer, which is N-alkyl carbazole or triphenylamine derivatives containing electron acceptor group and depicted in the following structure 4, 5, and 6, can help the photorefarctive composition more stable, since the plascticizer contains both N-alkyl carbazole or triphenylamine moiety and non-liner optics moiety at same time in one compound.

The composition, wherein provide photorefractive capabilities, comprises novel fused ring structure chromophore and/or mixture of more than two different structure chromophore, that provides non-linear optical ability, and, optionally, a polymer matrix which provides photoconductive (charge transport) ability and a component sensitizer and plasticizer components.

The composition differs from photorefractive compositions previously known in the art in several points.

In a first point, it can be prepared by living radical polymerization, preferably by using a transition metal catalyst.

In a second point, the composition may provide high photoconductivity compared with prior art photoconductive materials, and/or one or more other advantageous properties, such as high diffraction efficiency, fast response time, low polydispersity, and comparatively low glass transition temperature. Furthermore these properties can typically be provided in conjunction with one or more other desirable attributes, such as stability, that is, resistance to phase separation, low viscosity, and excellent handling and processing capability.

Alternatively, in a third point, the composition may provide fast response time compared with prior art photoconductive materials, and/or one or more other advantageous properties, such as high diffraction efficiency and high photoconductivity. Furthermore these properties can typically be provided in conjunction with one or more other desirable attributes, such as, comparatively low glass transition temperature, low viscosity, and excellent handling and processing capability.

In a fourth point, the composition may comprise a random copolymer or a block copolymer incorporating blocks containing the photoconductive side group and blocks containing the non-linear-optical (chromophore) side group. Random-type or block-type copolymers comprising two functional groups, a charge transport functional group and a nonlinear optical functional group, are provided, and can be readily made by the processes of the invention.

In a fifth point, the composition is characterized by a low polydispersity compared with typical polymers, and combines low polydispersity with one or more good photorefractive properties, such as high diffraction efficiency, high photoconductivity and fast response time. Furthermore, as above, these properties can typically be provided in conjunction with one or more other desirable attributes, such as stability, low viscosity, and excellent handling and processing capability.

In a sixth point, the composition may comprise a copolymer which showed very good phase stability, that is, resistance to phase separation. Both the random copolymers and the block copolymers disclosed herein provide the

advantage of long-term stability, due to lower likelihood of phase separation or crystallization, compared with polymer materials in which the functionality is provided by adding functional materials in the form of dopants.

In a seventh point, the composition comprises a (co)polymer which showed very good charge transport ability, as matrix polymer. This polymer system can contribute fast response time of the compositions.

In an eighth point, the composition comprises either at least one newly developed chromophore or several chromophore mixtures. These new chromophore concepts can contribute better phase stability without sacrificing other important photorefarctive performances.

In a nineth point, the composition comprises newly developed plasticizer, which have both good charge transport ability moiety, such as triphenylamine derivatives, and hydrophilic moiety in the molecule. This kind of plasticizer can enhance phase stability of the composition effecively. Even if the chromophore or plascticizer functional material is mixed in the form of dopant, the composition still provides the long-term stability.

With respect to the first point of the invention, it was discovered by the inventors that living radical polymerization techniques could be adapted to provide polymers with improved properties for use in photorefractive compositions. Living radical polymerization technique by the inventors makes available to the art a number of innovative features, including use of acrylate-based monomers incorporating charge transport groups and/or non-linear-optical (chromophore) groups, use of transition metal catalyst systems for preparation of photorefractive materials, and use of a monomer incorporating a chromophore precursor group.

With respect to the second point of the invention, it was found by the inventors that photorefractive compositions of the present invention exhibit high photoconductivity. High photoconductivity is supposed to contribute to high response time. As explained in more detail below, photoconductivity is the increase in conductivity of a material when exposed to light. Conventional organic photorefractive materials typically exhibit photoconductivities in the range 0.01-1,000 pS/cm, with most having photoconductivity no higher than about 10 pS/cm. Materials of the present invention are typically able to exhibit higher photoconductivity of at least about 100 pS/cm, preferably about 200 pS/cm or more, and more preferably about 500 pS/cm or more.

To inventors' knowledge, the highest photoconductivity that has ever been reported for a photorefractive material is 2,800 pS/cm, in a PVK-type material. However materials with photoconductivity above 3,000 pS/cm have been produced by the inventors, and specifically as high as 3,500 pS/cm.

Also, unlike polycarbazole, which becomes viscous and sticky during processing, materials of the present invention retain their low viscosity and have excellent handling properties for standard device fabrication techniques, such as injection molding, extrusion, and various film-forming processes.

Furthermore, materials of the present invention combine exceptional photoconductivity with very fast response times, such as 50 ms or less.

With respect to the fourth point of the invention, the first photorefractive block copolymers in the art was developed by the inventors. The block copolymers of the invention can manifest essentially any combination of blocks containing units with photoconductive (charge transport) ability and blocks containing units with non-linear optical ability. For example, if A represents a polymer block that incorporates charge transport ability groups and B represents a polymer block that incorporates non-linear-optical ability groups, then the copolymers of the invention include any combinations of A and B units. As representative, but non-limiting examples, polymers of the forms A-B, B-A, A-B-A, B-A-B, and so on, are included.

The copolymers of the invention can be readily made by adapted conventional radical polymerization techniques, such as by azo-type initiator system catalysis or by the adapted living radical polymerization techniques.

Also included are copolymers that include more diverse monomer units, such as A1-A2-B, A1-B1-A2-B2 and so on, where A1 and A2 represent different types of A polymer and B1 and B2 represent different types of B polymer.

The block copolymers of the invention can be readily made by the adapted living radical polymerization techniques discovered by the inventors.

Random-type copolymers comprising at least two functional groups, a charge transport functional group and a non-linear optical functional group, are also provided, and can be readily made by the processes of the invention.

Both the random copolymers and the block copolymers disclosed herein provide the advantage of long-term stability, due to lower likelihood of phase separation or crystallization, compared with polymer materials in which the functionality is provided by adding functional materials in the form of dopants.

The block copolymers of the invention can manifest essentially any combination of blocks containing units with photoconductive ability and blocks containing units with non-linear optical ability. For example, if A represents a polymer block that incorporates charge transport ability groups and B represents a polymer block that incorporates non-linear-optical ability groups, then the copolymers of the invention include any combinations of A and B units. As representative, but non-limiting examples, polymers of the forms A-B, B-A, A-B-A, B-A-B, and so on, are included.

With respect to the fifth point of the invention, the polymers of the invention exhibit low polydispersity. As discussed in more detail below, polydispersity is a measure of the spread of molecular weights of the molecules in a polymer. In general, the lower the polydispersity, the more uniform are the bulk physical properties of the polymer, such

as thermal and mechanical characteristics. This is an important feature for the performance of photorefractive compositions. Typically, polymers prepared by conventional techniques exhibit a polydispersity of greater than about 2.5. According to the present invention, materials that typically exhibit a polydispersity of about 2.5 or below, and preferably about 2.0 or below, are provided.

Furthermore, for polymers having the same chemical structure and average molecular weight, a polymer composition of low polydispersity exhibits a lower glass transition temperature than the corresponding composition of higher polydispersity. For example, typical glass transition temperature for the types of methacrylate polymers preferred for polymer compositions of the invention is about 90-120°C when made by conventional polymerization techniques. When made by the living radical polymerization technique taught herein, the glass transition temperature of the polymer is typically between about 80°C and 100°C. This is important, because a lower glass transition temperature tends to lead to better photorefractive performances, such as high photoconductivity, fast response time and high diffraction efficiency.

The comparatively lower Tg of polymers of the invention reduces the dependence on large amounts of plasticizer in the finished composition. This improves the handling properties of the composition and the long-term stability.

These materials of comparatively low polydispersity may be readily prepared by living radical polymerization technique of the invention.

With respect to the sixth point of the invention, inventors have developed photorefractive copolymers which are composed of a component that provides photoconductive (charge transport) ability and a component that provides non-linear optical ability. Since the copolymers have both components of charge transport and non-linear optical ability in one polymer chain, it can work as a kind of phase compatibilizer for all components to be mixable without separations. Even if the chtomophore or plascticizer functional material is mixed in the form of dopant, the composition still provides the long-term stability.

The comparatively lower Tg of inventors' polymers reduces the dependence on large amounts of plasticizer in the finished composition. This improves the handling properties and the photorefractive properties of the composition.

The photorefractive compositions according to the present invention have great utility in a variety of optical applications, including holographic storage, optical correlation, phase conjugation, non-destructive evaluation and imaging.

The photorefractive compositions according to the present invention have great utility in a variety of optical applications, including holographic storage, optical correlation, phase conjugation, non-destructive evaluation and imaging.

DETAILED DESCRIPTION OF THE INVENTION

The invention relates to photoreactive compositions. The composition may comprise a polymer matrix, and include a component that provides photoconductive or charge transport ability and a component that provides photoconductive or charge transport ability and a component that provides non-linear optical ability. Optionally, the composition may also include other components as desired, such as sensitizer and plasticizer components. Also, the polymer may comprise a part that provides a plasticizer ability. The invention may comprise a novel ring structure chromophore and/or a mixture of more than two different structure chromophores, wherein a non-linear optical ability and photorefractive capabilities are provided by cooperation of other components. Also, the composition may comprise a component that provides a photoconductive (charge transport) ability.

In one embodyiment, one or both of the photoconductive and non-linear optical components are incorporated as functional groups into the polymer structure, typically as side groups.

The group that provides the charge transport or photoconductive functionality may be any group known in the art to provide such capability. If this group is to be attached to the polymer matrix as a side chain, then the group should be capable of incorporation into a monomer that can be polymerized to form the polymer matrix of the composition.

Preferred photoconductive groups are phenyl amine derivatives, particularly carbazoles and di- and tri-phenyl diamine.

Most preferably the moiety that provides the photoconductive functionality is chosen from the group of phenyl amine derivatives consisting of the following side chain structures (i) to (iii):

Structure (i)

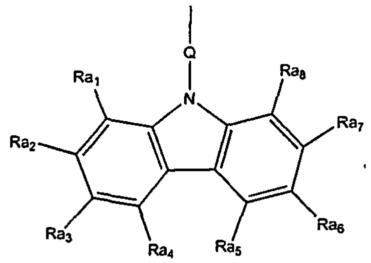

wherein Q represents an alkylene group, with or without a hetero atom, such as oxygen or sulfur, and preferably Q is an alkylene group represented by $(CH_2)p$; where p is an integer of about 2 to 6; and wherein $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

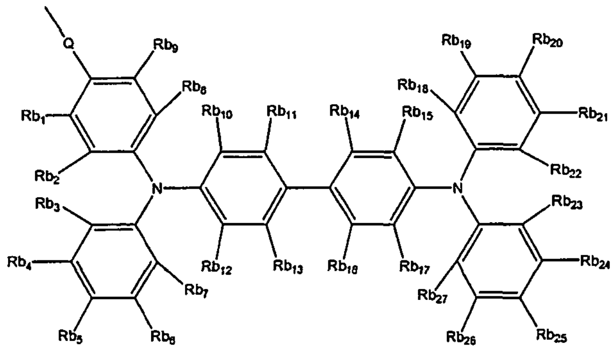

wherein Q represents an alkylene group, with or without a hetero atom, such as oxygen or sulfur, and preferably Q is an alkylene group represented by $(CH_2)p$; where p is an integer of about 2 to 6; and wherein $Rb_1$-$Rb_{27}$ are independently selected from the group consisting of a hydrogen atom, a linear alkyl group with up to 10 carbons, a branched alkyl group with up to 10 carbons, and an aromatic group with up to 10 carbons; and

Structure (iii)

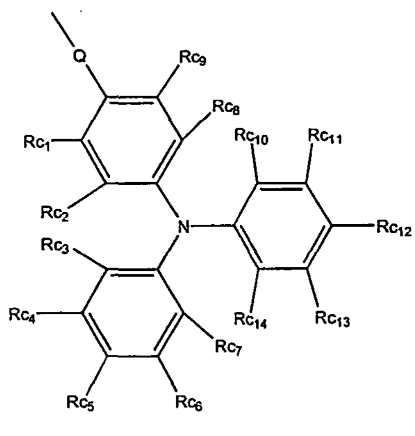

wherein Q represents an alkylene group, with or without a hetero atom, such as oxygen or sulfur, and preferably Q is an alkylene group represented by $(CH_2)p$; where p is an integer of about 2 to 6, and wherein $Rc_1$-$Rc_{14}$ are independently selected from the group consisting of a hydrogen atom, a linear alkyl group with up to 10 carbons, a branched alkyl group with up to 10 carbons, and an aromatic group with up to 10 carbons.

Likewise, the chromophore or group that provides the non-linear optical functionality may be any group known in the art to provide such capability. If this group is to be attached to the polymer matrix as a side chain, then the group,

or a precursor of the group, should be capable of incorporation into a monomer that can be polymerized to form the polymer matrix of the composition.

The chromophore or group that provides the non-linear optical functionality used in the present embodiment is represented by formula (0):

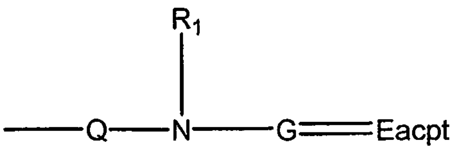 formula (0)

wherein Q represents an alkylene group, with or without a hetero atom; such as oxygen or sulfur, and preferably Q is an alkylene group represented by $(CH_2)p$; where p is an integer of about 2 to 6; $R_1$ is selected from the group consisting of a hydrogen atom, a linear alkyl group with up to 10 carbons, a branched alkyl group with up to 10 carbons, and an aromatic group with up to 10 carbons, and preferably $R_1$ is an alkyl group which is selected from methyl, ethyl, propyl, butyl, pentyl and hexyl; G is a group having a bridge of π-conjugated bond; and Eacpt is an electron acceptor group.

In the above definition, by the term "a bridge of π-conjugated bond", it is meant a molecular fragment that connects two or more chemical groups by π-conjugated bond. A π-conjugated bond contains covalent bonds between atoms that have σ bonds and π bonds formed between two atoms by overlap of their atomic orbitals (s+p hybrid atomic orbitals for σ bonds; p atomic orbitals for π bonds).

By the term "electron acceptor", it is meant a group of atoms with a high electron affinity that can be bonded to a π-conjugated bridge. Exemplary acceptors, in order of increasing strength, are:

$$C(O)NR^2 < C(O)NHR < C(O)NH_2 < C(O)OR < C(O)OH < C(O)R < C(O)H < CN < S(O)_2R < NO_2$$

Also, as typical exemplary electron acceptor groups, functional groups which are described in prior of art USP 6,267,913 and shown in the following structure figure can be used. U.S. Patent No. 6,267,913 is hereby incorporated by reference for the purpose of describing donors and acceptors useful in this invention. The symbol "‡" in a chemical structure herein specifies an atom of attachment to another chemical group and indicates that the structure is missing a hydrogen that would normally be implied by the structure in the absence of the "‡".

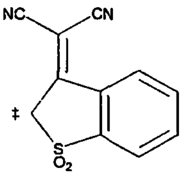 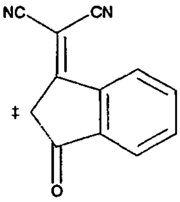 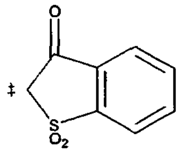 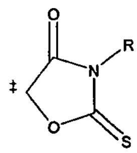

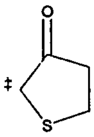 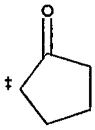 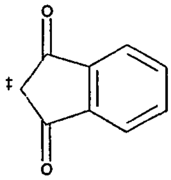 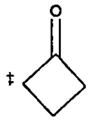 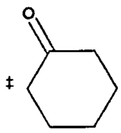 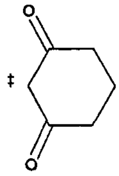

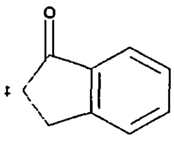 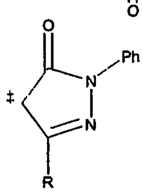 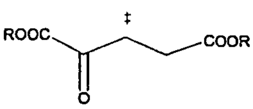 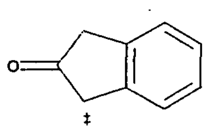

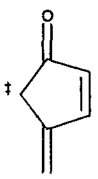 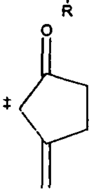 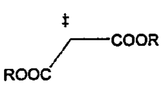 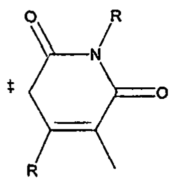 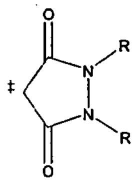

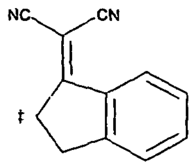 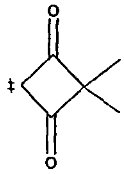 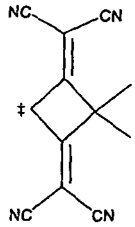 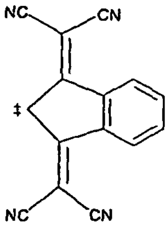 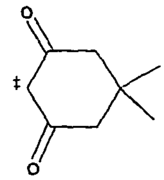

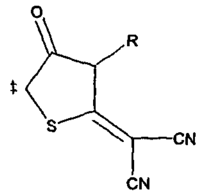 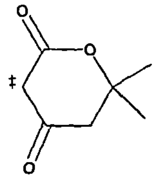 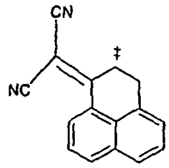 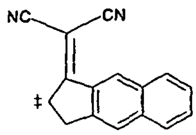

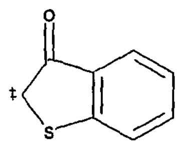 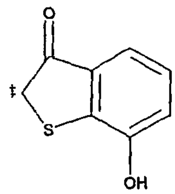 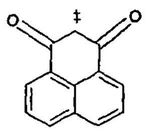 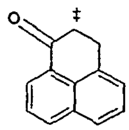

wherein R is selected from the group consisting of a hydrogen atom, a linear alkyl group with up to 10 atoms, a branched alkyl group with up to 10 atoms, and an aromatic group with up to 10 carbons.

Preferred chromophore groups are aniline-type groups or dehydronaphtyl amine groups.

Most preferably the moiety that provides the non-linear optical functionality is such a case that G in formula (0) is represented by a structure selected from the group consisting of the structures (iv), (v) and (vi);

Structure (iv)

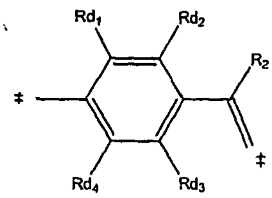 ,

Structure (v)

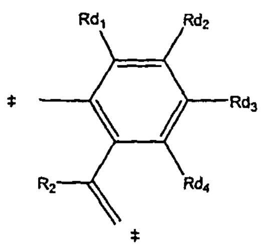

wherein, in both structures (iv) and (v), $Rd_1$-$Rd_4$ are each independently selected from the group consisting of a hydrogen atom, a linear alkyl group with up to 10 atoms, a branched alkyl group with up to 10 atoms, and an aromatic group with up to 10 carbons, and preferably $Rd_1$-$Rd_4$ are all hydrogen; $R_2$ is selected from the group consisting of a hydrogen atom, a linear alkyl group with up to 10 atoms, a branched alkyl group with up to 10 atoms, and an aromatic group with up to 10 carbons;

Structure (vi)

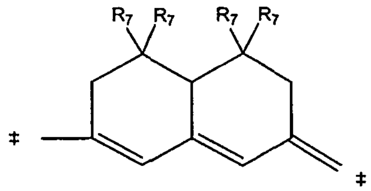

wherein $R_7$ represents a linear or branched alkyl group with up to 10 carbons; and wherein Eacpt in formula (0) is an electron acceptor group and represented by a structure selected from the group consisting of the structures;

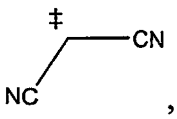 , 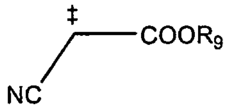 , 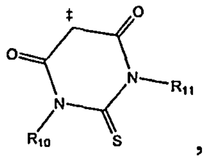 , 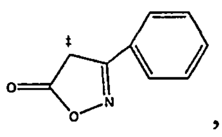 , 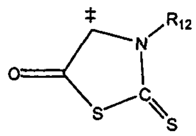

wherein $R_9$, $R_{10}$, $R_{11}$ and $R_{12}$ are each independently selected from the group consisting of a hydrogen atom, a linear alky group with up to 10 atoms, a branched alkyl group with up to 10 atoms, and an aromatic group with up to 10 carbons.

A preferred polymer used for the photorefractive composition is the following formulae (Ia), (IIa), (IIIa), (IVa), (Ib), (IIb), (IIIb), (IVb), (Ic), (IIc), (IIIc) and (IVc):

(Ia)

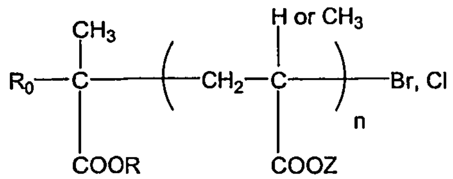

wherein $R_0$, R and Z are the same meaning as in formula (I); and n is an integer of 10 to 10,000;

(IIa)

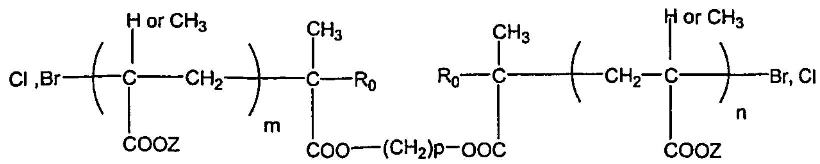

wherein $R_0$, R and Z are the same meaning as in formula (II); and m and n are an integer of 5 to 10,000, respectively;

(IIIa)

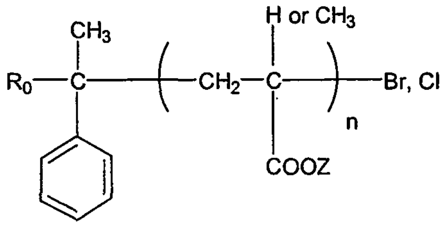

wherein $R_0$ and Z are the same meaning as in formula (III); and n is an integer of 10 to 10,000;

(IVa)

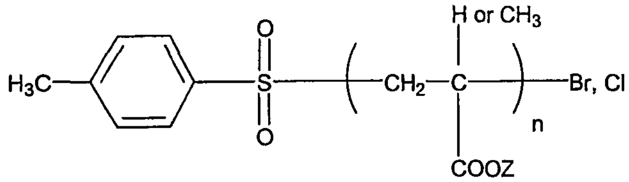

wherein Z is the same meaning as in formula (IV); and n is an integer of 10 to 10,000;

(Ib)

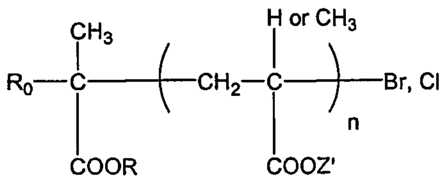

wherein $R_0$, R and Z' are the same meaning as in formula (I); and n is an integer of 10 to 10,000;

(IIb)

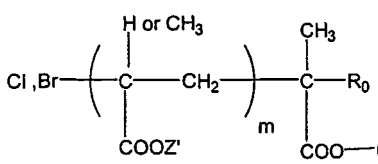

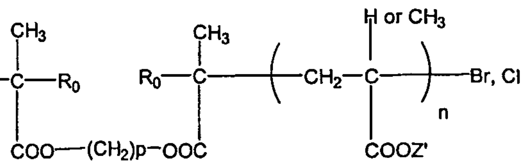

wherein $R_0$, R and Z' are the same meaning as in formula (II); and m and n are an integer of 5 to 10,000, respectively;

(IIIb)

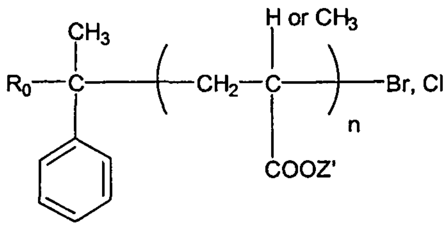

wherein $R_0$ and Z' are the same meaning as in formula (III); and n is an integer of 10 to 10,000;

(IVb)

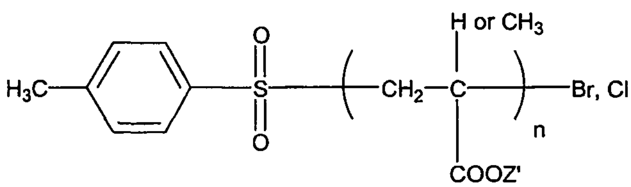

wherein Z' is the same meaning as in formula (IV); and n is an integer of 10 to 10,000;

(Ic)

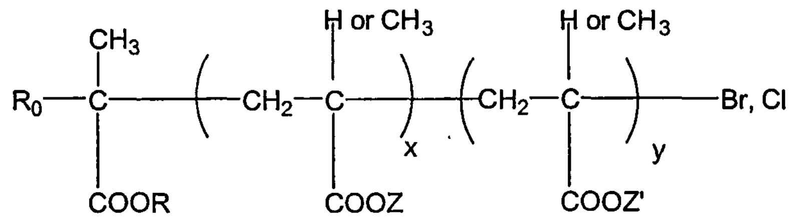

wherein $R_0$, R, Z and Z' are the same meaning as in formula (I); x is an integer of 5 to 10,000; and y is an integer of 5 to 10,000;

(IIc)

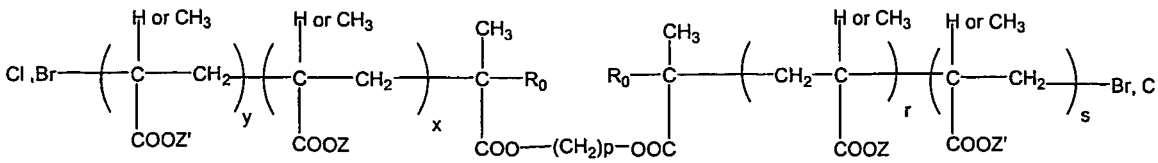

wherein $R_0$, R, Z and Z' are the same meaning as in formula (II); x is an integer of 5 to 10,000; y is an integer of 5 to 10,000; r is an integer of 5 to 10,000; and s is an integer of 5 to 10,000;

(IIIc)

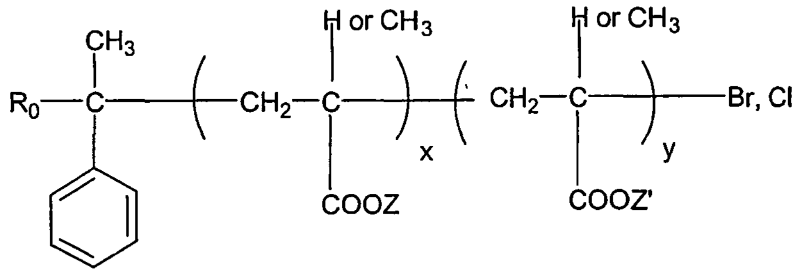

wherein $R_{0,}$ Z and Z' are the same meaning as in formula (III); and x is an integer of 5 to 10,000; and y is an integer of 5 to 10,000;

(IVc)

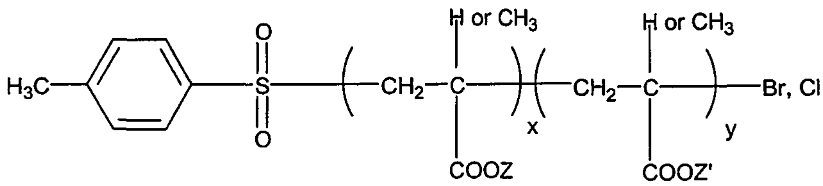

wherein Z and Z' are the same meaning as in formula (IV); and x is an integer of 5 to 10,000; and y is an integer of 5 to 10,000.

The polymer matrix is preferably synthesized from a monomer incorporating at least one of the above photoconductive groups or one of the above chromophore groups. The inventors have recognized that a number of physical and chemical properties are desirable in the polymer matrix. It is preferred if the polymer itself incorporates both a charge transport group and a chromophore group, so the ability of the monomer units to form copolymers is preferred. Physical properties of the formed polymer that are of importance are the molecular weight or more specifically the molecular weight distribution, as reflected in the polydispersity, and the glass transition temperature, Tg. Also, it is valuable and desirable, although not essential, that the polymer should be capable of being formed into films, coatings and shaped bodies of various kinds by standard polymer processing techniques, such as solvent coating, injection molding and

extrusion.

In the present invention, the polymer generally has a weight average molecular weight, Mw, of from about 3,000 to 500,000, preferably from about 5,000 to 100,000. The term "weight average molecular weight" as used herein means the value determined by the GPC (gel permeation chromatography) method in polystyrene standards, as is well known in the art.

More significantly, the polymer preferably has a narrow polydispersity compared with typical polymers. By a narrow polydispersity, it means a polydispersity less than about 2.5, and more preferably less than about 2.0. For the present purposes, polydispersity is given by the ratio Mw/Mn (in which Mw is as defined above, and Mn is number average molecular weight, also determined by GPC in a polystyrene standard).

Polydispersity is important because of its correlation to polymer properties, such as viscosity, glass transition temperature, and other thermal and mechanical properties. Even when a polymer has the same chemical structure and components, a matrix of low polydispersity will tend to have a lower viscosity, and better thermal and mechanical handling properties, than a matrix of the same chemical structure but higher polydispersity. The low viscosity can also give rise to improved photorefractive properties.

For good photorefractive properties, the photorefractive composition should be substantially amorphous and non-crystalline under the conditions of use. Therefore, it is preferred that the finished photorefractive composition has a relatively low glass transition temperature, Tg, such as below about 50°C, more preferably below about 40°C. Preferred temperature ranges for the Tg are 10-50°C, most preferably 20-40°C. If the pure polymer itself has a glass transition temperature higher than these preferred values, which will generally be the case, components may be added to lower the Tg, as discussed in more detail below.

Nevertheless, it is preferred that the polymer itself has a relatively low glass transition temperature, by which the inventors mean a Tg no higher than about 125°C, more preferably no higher than about 120°C, and most preferably no higher than about 110°C or 100°C.

A relatively low glass transition temperature is preferred because the greater mobility of polymer chains that polymers exhibit close to or above their glass transition temperature gives higher orientation during voltage application, and leads to better performance, such as high photoconductivity, fast response time and high diffraction efficiency, of the photorefractive device.

As mentioned in the Summary section above, a polymer composition of low polydispersity exhibits a lower glass transition temperature than the corresponding composition of higher polydispersity. For example, typical glass transition temperature for the types of (meth)acrylate polymers preferred for polymer compositions of the invention is about 90-120°C when made by conventional polymerization techniques. When made by the low-polydispersity methods taught herein, the glass transition temperature is typically between about 80°C and 100°C.

In principle, essentially any polymer backbone, including, but not limited to, polyurethane, epoxy polymers, polystyrene, polyether, polyester, polyamide, polyimide, polysiloxane, and polyacrylate could be used, with the appropriate side chains attached, to make the polymer matrices of the invention.

Preferred types of backbone units are those based on (meth)acrylates or styrene. Particularly preferred are methacrylate-based monomers, and most preferred are acrylate monomers. The first polymeric materials to include photoconductive functionality in the polymer itself were the polyvinyl carbazole materials developed at the University of Arizona. However, these polyvinyl carbazole polymers tend to become viscous and sticky when subjected to the heat-processing methods typically used to form the polymer into films or other shapes for use in photorefractive devices.

In contrast, preferred materials of the present invention, and particularly the (meth)acrylate-based, and more specifically methacrylate-based, polymers, have much better thermal and mechanical properties. That is, they provide better workability during processing by injection-molding or extrusion, for example. This is particularly true when the polymers are prepared by living radical polymerization, as described below, since this method yields a polymer product of lower viscosity than would be the case for the same polymer prepared by other methods.

Particular examples of monomers including a phenyl amine derivative group as the charge transport component are carbazolylpropyl (meth)acrylate monomer; 4-(N,N-diphenylamino)-phenylpropyl (meth)acrylate; N-[(meth)acroyloxypropylphenyl]-N, N', N'-triphenyl-(1,1'-biphenyl)-4,4'-diamine; N-[(meth)acroyloxypropylphenyl]-N'-phenyl-N, N'-di(3-methylphenyl)-(1,1'-biphenyl)-4,4'-diamine; and N-[(meth)acroyloxypropylphenyl]-N'-phenyl- N, N'-di(4-buthoxyphenyl)-(1,1'-biphenyl)-4,4'-diamine. Such monomers can be used singly or in mixtures of two or more monomers.

Particular examples of monomers including a chromophore group as the non-linear optical component are N-ethyl, N-4-dicyanomethylidenyl acrylate and N-ethyl, N-4-dicyanomethylidenyl-3, 4, 5, 6, 10-pentahydronaphtylpentyl acrylate.

In light of the desired features mentioned above, the inventors have recognized that the recently developed polymerization technique known as living radical polymerization has the potential for preparing polymers with unusually good photorefractive properties. In particular, living radical polymerization has the potential to form polymers with unusually low polydispersity, such as less than 2.5, preferably less than 2.0. Living radical polymerization can also be used to form random copolymers and block copolymers, as discussed in more detail below.

Diverse polymerization techniques are known in the art. One such technique is radical polymerization, which is typically carried out by using an azo-type initiator, such as AIBN (azoisobutyl nitrile).

In conventional radical polymerization, the polymer growth terminal is always in the active radical state, so it is easy for unwanted side reactions to occur, such as bimolecular coupling or disproportionation, generally making it difficult to achieve precise control of polymerization. As a result, this technique is not attractive for preparing photorefractive polymer materials.

On the other hand, as stated above, living radical polymerization is a new technique that offers the opportunity to prepare polymers with properties tailored to achieve improved photorefractive capability. Living radical polymerization differs from conventional radical polymerization in that the polymer growth terminals are temporarily protected by protection bonding. Through reversibly and radically severing this bond, it is possible to control and facilitate the growth of polymer molecules. For example, in a polymerization reaction, an initial supply of monomer can be completely consumed and growth can be temporarily suspended. However, by adding another monomer of the same or different structure, it is possible to restart polymerization. Therefore, the position of functional groups within the polymer can be controlled.

Although various polymerization techniques are known to the art and may be used in the invention, it is preferred, therefore, to prepare the polymer matrix materials of the invention by living radical polymerization, and the inventors have developed customized procedures for so doing.

Details of the living radical polymerization method are described in the literature. They may be found, for example, in the following papers:

T. Patten et al., "Radical polymerization yielding polymers with Mw/Mn ~1.05 by homogeneous atom transfer radical polymerization", *Polymer Preprints*, **1996**, *37*, 575.

K. Matyjasewski et al., "Controlled/living radical polymerization. Halogen atom transfer radical polymerization promoted by a Cu(I)/Cu(II) redox process", Macromolecules, 1995, 28, 7901.

M. Sawamoto et al., " Ruthenium-mediated living radical polymerization of methyl methacrylate", Macromolecules, 1996, 29, 1070.

Living radical polymerization is also described at length in U.S. Patent 5,807,937 to Carnegie-Mellon University, which is incorporated herein by reference in its entirety.

Briefly, living radical polymerization technique of the invention involves the use of a polymerization initiator, transition metal catalyst and a ligand (an activating agent) capable of reversibly forming a complex with the transition metal catalyst.

The polymerization initiator is typically a halogen-containing organic compounds. After polymerization, this initiator or components of the initiator are attached to the polymer at both polymer terminals. The polymerization initiator preferably used is an ester-based or styrene-based derivative containing a halogen in the $\alpha$-position.

The polymerization initiator is preferably shown by the following formula (I"), (II") or (III").

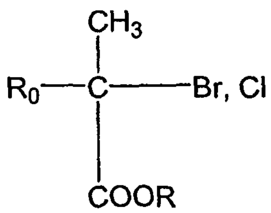

formula (I")

wherein $R_0$ represents a hydrogen atom or alkyl group with up to 10 carbons; and R is selected from the group consisting of a hydrogen atom, a linear alkyl group with up to 10 carbons, a branched alkyl group with up to 10 carbons, and an aromatic group with up to 10 carbons;

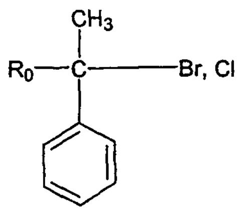

formula (II")

wherein $R_0$ represents a hydrogen atom or alkyl group with up to 10 carbons.

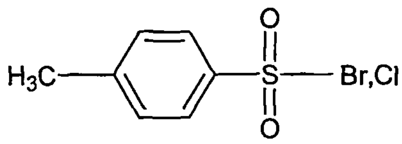

formula (III")

Particularly preferred are 2-bromo(or chloro) methylpropionic acid, or bromo(or chloro)-1-phenyl derivatives. Specific examples of these derivatives include ethyl 2-bromo(or chloro)-2-methylpropionate, ethyl 2-bromo(or chloro) propionate, 2-hydroxyethyl 2-bromo(or chloro)-2-methylpropionate, 2-hydroxyethyl 2-bromo(or chloro)propionate, and 1-phenyl ethyl bromide(chloride).

Instead of a mono bromo(chloro) type initiator, a di-bromo(chloro) type initiator, such as dibromo(chloro) ester derivative, can be used. Such initiators are represented by the formula (IV"):

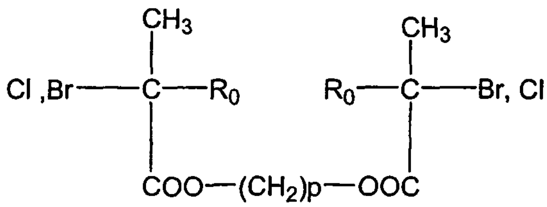

formula (IV")

wherein $R_0$ represents independently a hydrogen atom or alkyl group with up to 10 carbons; and p is 2 to 6.

Of these initiators, most preferred is ethylene bis(2-bromo (chloro)-2-methylpropionate). By using this initiator, the inventors have discovered that block copolymers, and particularly A-B-A type or B-A-B type block copolymers, can be produced very efficiently.

In the process of the invention, the polymerization initiator is generally used in an amount of from 0.01 to 20 mol%, preferably from 0.1 to 10 mol%, and more preferably from 0.2 to 5 mol%, per mole of the sum of the polymerizable monomers.

Various types of catalysts are known, including perfluoroalkyl iodide type, TEMPO (phenylethoxy-tetramethylpiperidine) type, and transition metal type. The inventors have discovered that high-quality polymers can be made by using transition-metal catalysts, which are safer, simpler, and more amenable to industrial-scale operation than TEMPO-type catalysts. Therefore, in the process of the invention a transition-metal catalyst is preferred.

Non-limiting examples of transition metals that may be used include Cu, Ru, Fe, Rh, V, and Ni. Particularly preferred is Cu. Typically, but not necessarily, the transition metal is used in the form of the metal halide (chloride, bromide, etc.).

The transition metal in the form of a halide or the like is generally used in the amount of from 0.01 to 3 moles, and preferably from 0.1 to 1 mole, per mole of polymerization initiator.

The activating agent (ligand) is an organic ligand of the type known in the art that can be reversibly coordinated with the transition metal as a center to form a complex. The ligand preferably used is a bipyridine derivative, mercaptans derivative, trifluorate derivative, or the like. When complexed with the activating ligand, the transition metal catalyst is rendered soluble in the polymerization solvent. In other words, the activating agent serves as a co-catalyst to activate the catalyst, and start the polymerization.

The ligand is used in an amount of normally from 1 to 5 moles, and preferably from 2 to 3 moles, per mole of transition metal halide.

The use of the polymerization initiator and the activating agent in the above recommended proportions makes it possible to provide good results in terms of the reactivity of the living radical polymerization and the molecular weight and weight distribution of the resulting polymer.

In the present invention, living radical polymerization can be carried out without a solvent or in the presence of a solvent, such as butyl acetate, toluene or xylene.

To initiate the polymerization process, the monomer(s), polymerization initiator, transition metal catalyst, activating agent and solvent are introduced into the reaction vessel. As the process starts, the catalyst and initiator form a radical, which attacks the monomer and starts the polymerization growth.

The living radical polymerization is preferably carried out at a temperature of from about 70°C to 130°C, and is allowed to continue for about 1 to 100 hours, depending on the desired final molecular weight and polymerization temperature, and taking into account the polymerization rate and deactivation of catalyst.

To perform the polymerization without using a solvent, the reaction is carried out in a similar manner, above

the melting point of the monomer. For example, the melting point of a TPD monomer may be 125°C, in which case the polymerization may be carried out at 130°C.

By carrying out the living radical polymerization technique based on the teachings and preferences given above, it is possible to prepare homopolymers carrying charge transport or non-linear optical groups, as well as random or block copolymers carrying both charge transport and non-linear optical groups. Further, by following the techniques described herein, it is possible to prepare such materials with exceptionally good properties, such as polydispersity, photoconductivity, response time and diffraction efficiency.

If the polymer is made from monomers that provide only charge transport ability, the photorefractive composition of the invention can be made by dispersing a component that possesses non-linear optical properties through the polymer matrix, as is described in U.S. Patent 5,064,264 to IBM, which is incorporated herein by reference. Suitable materials are known in the art and are well described in the literature, such as in D.S. Chemla & J. Zyss, "Nonlinear Optical Properties of Organic Molecules and Crystals" (Academic Press, 1987). Also, as described in U.S. Patent 6,090,332 to Seth R. Marder et. al., fused ring bridge, ring locked chromophores that form thermally stable photorefractive compositions can be used. For typical, non-limiting examples of chromophore additives, the following chemical structure compounds can be used:

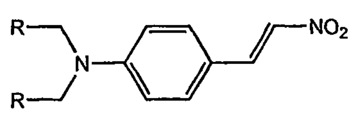
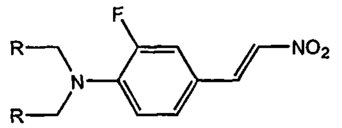
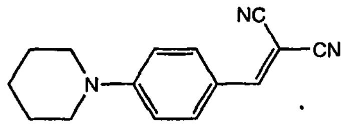

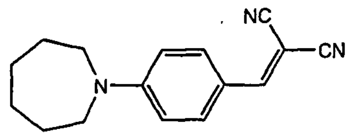

(7-DCST)

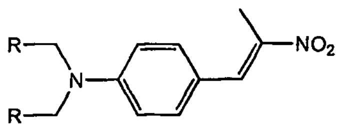
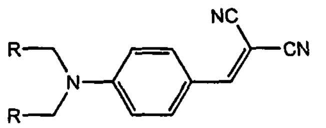

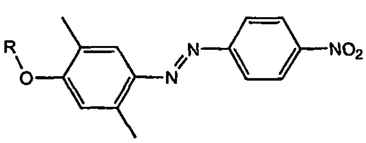
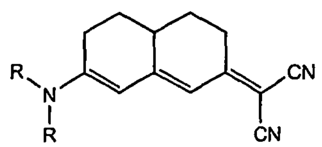

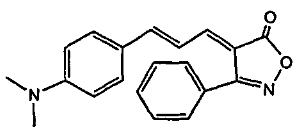
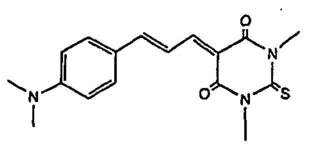
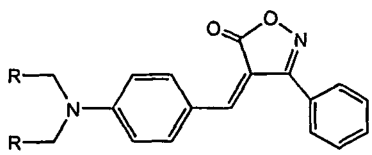

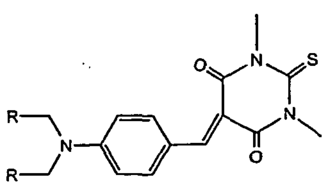
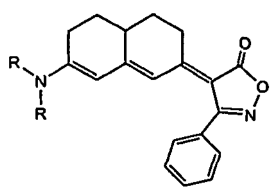
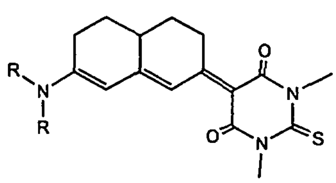

Also, novel chromophores, described below, may be used.

The chosen compound(s) is usually mixed in the matrix charge transport homopolymer in a concentration of about 1-80 wt%, more preferably 5-50 wt%.

On the other hand, if the polymer is made from monomers that provide only non-linear optical ability, the photorefractive composition of the invention can be made by mixing a component that possesses charge transport properties into the polymer matrix, again as is described in U.S. Patent 5,064,264 to IBM. Preferred charge transport compounds are good hole transfer compounds, for example N-alkyl carbazole or triphenylamine derivatives.

As an alternative, or in addition, to adding the charge transport component in the form of a dispersion of entities comprising individual molecules with charge transport capability, a polymer blend can be made of individual polymers with charge transport and non-linear optical abilities. For the charge transport polymer, the polymers already described above, such as containing phenyl-amine derivative side chains, can be used. Since polymers containing only charge transport groups are comparatively easy to prepare by conventional techniques, the charge transport polymer may be made by living radical polymerization or by any other convenient method.

To prepare the non-linear optical polymer itself, monomers that have side-chain groups possessing non-linear-optical ability should be used. Non-limiting examples of monomers that may be used are those containing the following chemical structures:

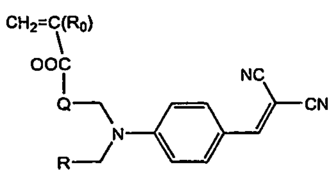
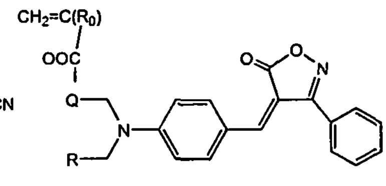
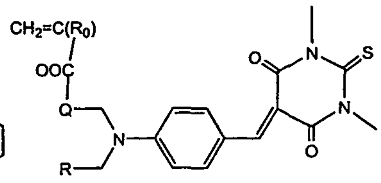

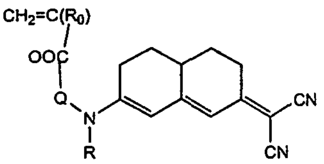
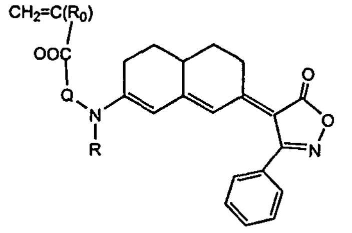
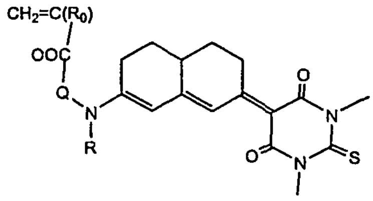

wherein Q represents an alkylene group with or without a hetero atom, such as oxygen or sulfur, and preferably Q is an alkylene group represented by $(CH_2)p$; where p is of about 2 to 6; $R_0$ is a hydrogen atom or methyl group, and R is a linear or branched alkyl group with up to 10 carbons; and preferably R is an alkyl group which is selected from methyl, ethyl, and propyl.

The inventors have discovered a new technique for preparing such polymers. The technique involves the use of a precursor monomer containing a precursor functional group for non-linear optical ability. Typically, this precursor is represented by the general formula:

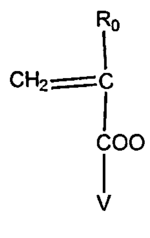

wherein $R_0$ is a hydrogen atom or methyl group, and V is selected from the group consisting of the following structures 1 to 3 :

Structure 1

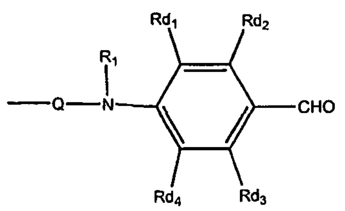

,

Structure 2

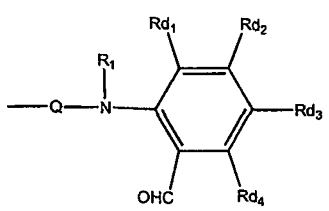

wherein, in both structures 1 and 2, Q represents an alkylene group, with or without a hetero atom, such as oxygen or sulfur, and preferably Q is an alkylene group represented by $(CH_2)p$; where p is of about 2 to 6; and wherein $Rd_1$-$Rd_4$ are independently selected from the group consisting of a hydrogen atom, a linear alkyl group with up to 10 carbons, a

branched alkyl group with up to 10 atoms, and an aromatic group with up to 10 carbons, and preferably $Rd_1$-$Rd_4$ are hydrogen; and wherein $R_1$ represents a linear or branched alkyl group with up to 10 carbons, and preferably $R_1$ is an alkyl group selected from methyl, ethyl, propyl, butyl, pentyl and hexyls; and

Structure 3

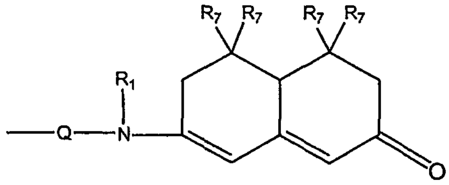

wherein Q represents an alkylene group, with or without a hetero atom, such as oxygen or sulfur, and preferably Q is an alkylene group represented by $(CH_2)p$; where p is of about 2 to 6; and wherein $R_1$ represents a linear or branched alkyl group with up to 10 carbons, and preferably $R_1$ is an alkyl group selected from methyl, ethyl, propyl, butyl, pentyl and hexyls; and wherein $R_7$ represents a linear or branched alkyl group with up to 10 carbons.

The procedure for performing the living radical polymerization in this case involves the use of the same polymerization initiators, transition metal catalysts, activating agents, and solvents, and the same operating conditions and preferences as have already been described above.

After the precursor polymer has been formed, it can be converted into the corresponding polymer having non-linear optical groups and capabilities by a condensation reaction. Typically, the condensation reagent may be selected from the group consisting of

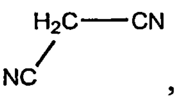 , 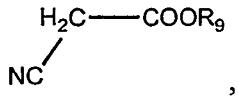 , 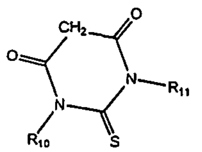 , 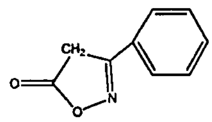

and

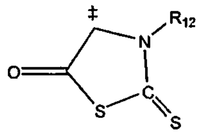

wherein $R_9$ , $R_{10}$, $R_{11}$, and $R_{12}$ are independently selected from the group consisting of a hydrogen atom, a linear alkyl group with up to 10 carbons, a branched alkyl group with up to 10 carbons, and an aromatic group with up to 10 carbons.

The condensation reaction can be done at room temperature for 1-100 hrs, in the presence of a pyridine derivative catalyst. A solvent, such as butyl acetate, chloroform, dichloromethylene, toluene or xylene can be used. Optionally, the reaction may be carried out without the catalyst at a solvent reflux temperature of 30°C or above for about 1 to 100 hours.

The inventors have discovered that use of a monomer containing a precursor group for non-linear-optical ability, and conversion of that group after polymerization tends to result in a polymer product of lower polydispersity than the case if a monomer containing the non-linear-optical group is used. This is, therefore, preferred technique by the invention.

To prepare copolymers, both the non-linear-optical monomer and the charge transport monomer, each of which can be selected from the types mentioned above, should be used.

There are no restrictions on the ratio of monomer units. However, as a typical representative example, the ratio of [a (meth)acrylic monomer having charge transport ability] / [a (meth)acrylate monomer having non-linear optical ability] is between about 4/1 and 1/4 by weight. More preferably, the ratio is between about 2/1 and 1/2 by weight. If this ratio is less than about 1/4, the charge transport ability is weak, and the response time tends to be too slow to give good photorefractivity. On the other hand, if this ratio is more than about 4/1, the non-linear-optical ability is weak, and the diffraction efficiency tends to be too low to give good photorefractivity.

In the living radical polymerization method of the invention, the monomer addition sequence is important for achieving the desired copolymer structure. For example, to make random copolymers, both the chromophore-containing

and the charge-transport-group-containing monomers can be added at the same time.

However, by adding the monomers sequentially, block type copolymers can be prepared. For example, to prepare an A-B type block copolymer, wherein polymer block A has charge transport ability and polymer block B has non-linear-optical ability, firstly the monomer having charge transport ability is polymerized, preferably by using a mono bromo(chloro) type initiator. Subsequently, the second monomer having non-linear-optical ability is added to continue the polymerization. In this way, an A-B type block copolymer can be produced. During this polymerization procedure, the second monomer is added at the time when the first monomer is polymerized more than 50% by weight, normally 70% by weight or more, preferably 80% by weight or more, and more preferably 90% by weight or more.

On the other hand, if the monomer having non-linear-optical ability is polymerized first, a B-A type block copolymer can be produced. Similarly to the above polymerization procedure, the second monomer is added at the time when the first monomer is polymerized more than 50% by weight, normally 70% by weight or more, preferably 80% by weight or more, and more preferably 90% by weight or more.

Further, if living radical polymerization is carried out in a manner such that, first, the monomer having charge transport ability is polymerized, then the second monomer having non-linear- optical ability is added to continue polymerization, and thirdly an additional amount of the monomer having charge transport ability is added to continue polymerization, an A-B-A type block copolymer can be produced. During the successive polymerization procedure, the monomer to be subsequently added is added at the time when the conversion of the monomer which has been previously added exceeds at least 50% by weight, normally 60% by weight or more, preferably 80% by weight or more, and more preferably 90% by weight or more.

Moreover, if the above three-stage polymerization is followed by the addition of the another monomer to continue the polymerization of monomers, an A-B-A-B type block copolymer can be produced. From the above explanation, it will be apparent to those of skill in the art that the new methods that the inventors have developed can be used, by changing the sequence of monomer addition, to produce block copolymers of any desired type, including, but not limited to B-A-B, B-A-B-A, B-A-B-A-B-A, or A-B-A-B-A type block copolymers.

If the copolymer constitutes two or more of polymer blocks A, the A-type constituting blocks need not necessarily be prepared from the same monomer. Likewise, if the copolymer constitutes two or more of polymer blocks B, the B-type blocks need not necessarily be prepared from the same monomer. Thus, the individual blocks may be of different forms represented by A1, A2, A3, etc. and B1, B2, B3 etc. In this way, a large diversity of polymers, such as A1-B-A2, B1-B2-A, or A1-B1-A2-B2 can be produced.

Optionally, other components may be added to the polymer matrix to provide or improve the desired physical properties mentioned earlier in this section. Usually, for good photorefractive capability, it is preferred to add a photosensitizer to serve as a charge generator. A wide choice of such photosensitizers is known in the art. Typical, but non-limiting examples of photosensitizers that may be used are 2, 4,7-trinitro-9-fluorenone (TNF) and C60. The amount of photosensitizer required is usually less than 3 wt%.

As mentioned above, it is preferred that the polymer matrix have a relatively low glass-transition temperature, and be workable by conventional processing techniques. Optionally, a plasticizer may be added to the composition to reduce the glass transition temperature and/or facilitate workability. The type of plasticizer suitable for use in the invention is not restricted; many such materials will be familiar to those of skill in the art. Representative typical examples include N-alkylcarbazole and dioctylphthalate. Oligomer-type compounds of the charge transport or non-linear-optical monomers may also be used to control the Tg of the composition.

In general, the smallest amount of plasticizer required to provide a suitable overall Tg for the composition should be used. Compositions with large amounts of plasticizer tend to have lower stability, as the polymer matrix and the plasticizer may phase separate over time. Also, the photorefractive properties of the material are diminished by dilution of the active components by the plasticizer.

As discussed above, the invention provides polymers of comparatively low Tg when compared with similar polymers prepared in accordance with prior art methods. The inventors have recognized that this provides a benefit in terms of lower dependence on plasticizers. By selecting polymers of intrinsically moderate Tg and by using methods that tend to depress the average Tg, it is possible to limit the amount of plasticizer required for the composition to preferably no more than about 30% or 25%, and more preferably lower, such as no more than about 20%.

Yet another method to adjust the Tg or improve film formation ability, for example, is to add another monomer, such as an acrylic or methacrylic acid alkyl ester, as a modifying co-monomer. Examples of modifying co-monomers are $CH_2=CR_0-COOR$ wherein $R_0$ represents a hydrogen atom or methyl group, and R represents a $C_{2-14}$ alkyl group, such as butylacrylate, ethyl acrylate, propyl acrylate, 2-ethylhexyl (meth)acrylate and hexyl (meth)acrylate.

The photorefractive materials of the invention provide combinations of desirable properties not previously available to the art.

One particularly advantageous feature is the high photoconductivity. In the context of the invention, by photoconductivity the inventors mean the increase in conductivity of the photorefractive material under laser irradiation. The photoconductivity of a sample of material may be measured by the following method. First, the steady-state conductivity

properties are measured in the dark, by applying an electric field across the sample, allowing the system to come to steady state, and measuring the resulting current. Then the measurements are repeated while illuminating the sample with a pulse from a single laser beam. The photoconductivity, $\Phi_{photo}$, can then be calculated using the following relation:

$$\Phi_{photo} = (i_{photo} - i_{dark}) / A_{beam} E_a$$

where:

- $\mathbf{E_a}$ is the applied electric field,
- $\mathbf{A_{beam}}$ is the illuminated area,
- $i_{photo}$ is electric current with laser irradiation, and
- $i_{dark}$ is electric current without irradiation

Photoconductivity is important because it is a measure of how efficiently charge transport can take place in the material. If all other parameters are fixed, the higher the photoconductivity, the faster is the device response time.

Typical photoconductivities for organic materials and polymers are in the range from about 0.01 pS/cm to a maximum of no higher than 1,000 pS/cm. In fact, the value for conventional photorefractive polymers is usually less than 10 pS/cm, as described in several papers, for example in M.A. Diaz-Garcia et al. (Chem. Mater., 1999, 11, 1784). However, surprisingly, the polymers of the invention generally have photoconductivity of more than 100 pS/cm, which is at least an order of magnitude better than currently used materials, and preferably exhibit a photoconductivity of more than 200 pS/cm.

A very few materials have been reported with photoconductivity higher than 10 pS/cm, and even fewer with photoconductivity higher than 100 pS/cm. To the inventors' knowledge, the highest photoconductivity ever reported is 2,800 pS/cm (N. Peyghambarian et al., J. Mater. Chem., 1999, 9, 2251), in a PVK-type material.

Yet, for materials of the invention the inventors have measured photoconductivity of 3,000 pS/cm or above, specifically 3,500 pS/cm.

Furthermore, the inventors are aware of no photorefractive composition that provide a photoconductivity of at least 10 pS/cm and, at the same time, offers any one of the other advantageous properties provided herein, such as a polydispersity of no more than about 2.5 or 2.0, a response time of no more than about 50 ms, a diffraction efficiency of at least about 5 %, the good mechanical properties and easy processability of an acrylate-based polymer, the presence of both charge transport and non-linear optical groups as side chains in the polymer, especially in the form of block copolymers, or the efficiency and flexibility of preparation of the living radical polymerization technique.

Another particularly advantageous feature is the fast response time. Response time is the time for building up of the diffraction grating in the photorefractive material when exposed to a laser writing beam. The response time of a sample of material may be measured by transient four-wave mixing (TFWM) experiments, as detailed in the Examples section below. The data may then be fitted with the following bi-exponential function:

$$\eta (t) = A \sin^2 [B(1 - a_1 e^{-t/J1} - a_2 e^{-t/J2})]$$

with $a_1 + a_2 = 1$

were $\eta$ (t) is the diffraction efficiency at time t, and A, B, $a_1$, and $a_2$ are fitting parameters, $J_1$ and $J_2$ are grating build-up times. Between $J_1$ and $J_2$, the smaller number is defined as the response time.

Response time is important because the faster response time means faster grating build-up, which enables the photorefractive composition to be used for wider applications, such as real-time hologram applications.

Typical response times for known photorefractive materials range from seconds to sub-seconds. Times longer than 100 ms are common. Faster response times have been reported, see W.F. Moemer, Appl. Phys. Lett., Vol. 73, p. 1490 (1998), but, in order to get these higher speeds, higher field strengths have been required. Such higher field strengths may be difficult in an industrial, rather than a laboratory, environment. Also, the polyvinyl carbazole polymers used to obtain higher speeds become sticky and difficult to handle during heat processing. In contrast, the methacrylate-based, or more specifically acrylate-based polymers, that are preferred herein provide excellent workability during heat processing and other polymer handling methods.

In comparison with typical prior art materials, the photorefractive compositions of the invention provide good response times, such as no more than about 50 ms, and preferably faster, such as no more than about 40 ms, no more than about 35 ms, or no more than about 30 ms.

Furthermore, these response times can be achieved without resorting to a very high electric field, expressed

as biased voltage. By a very high biased voltage, inventors mean a field in excess of about 100 V/$\mu$m. In inventors' materials, fast response times can generally be achieved at biased voltages no higher than about 100 V/$\mu$m, more preferably no higher than about 90 V/$\mu$m.

And, as discussed with respect to photoconductivity, these good response times can be provided in conjunction with one or more of the other advantageous properties as they are characterized above, such as high photoconductivity, low polydispersity, high diffraction efficiency, good processing capabilities, block copolymer capability, and efficient polymerization techniques.

Yet another advantageous feature is the diffraction efficiency. Diffraction efficiency is defined as the ratio of the intensity of the diffracted beam to the intensity of the incident probe beam, and is determined by measuring the intensities of the respective beams. Obviously, the closer to 100% is the ratio, the more efficient is the device.

In general, for a given photorefractive composition, a higher diffraction efficiency can be achieved by increasing the applied bias voltage.

In comparison with typical prior art materials, the photorefractive compositions of the invention provide good diffraction efficiencies. And, as discussed with respect to photoconductivity, these good diffraction efficiencies can be provided in conjunction with one or more of the other advantageous properties as they are characterized above, such as high photoconductivity, low polydispersity, or fast response time, and in conjunction with good processing capabilities, block copolymer capability, and efficient polymerization techniques.

Also within the scope of the current invention is an embodiment that is a photorefractive composition, which comprises a copolymer matrix that provides photoconductive (charge transport) ability and a non-linear optical ability. The copolymer may also comprise a part that provides a plasticizer ability. Optionally, the composition may also include other components as desired, such as sensitizer and plasticizer components.

Both of the photoconductive and non-linear optical components are incorporated as functional groups into the polymer structure, typically as side groups.

The group that provides the charge transport or photoconductive functionality may be any group known in the art to provide such capability. If this group is to be attached to the polymer matrix as a side chain, then the group should be capable of incorporation into a monomer that can be polymerized to form the polymer matrix of the composition.

Preferred photoconductive groups are phenyl amine derivatives, particularly carbazoles and di- and tri-phenyl diamine.

More preferably the moiety that provides the photoconductive functionality is chosen from the group of phenyl amine derivatives consisting of the following structures (i) to (iii):

Structure (i)

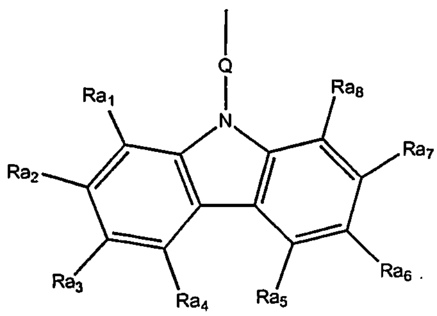

wherein Q represents an alkylene group, with or without a hetero atom, such as oxygen or sulfur, and preferably Q is an alkylene group represented by $(CH_2)p$; where p is between about 2 and 6; and wherein $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

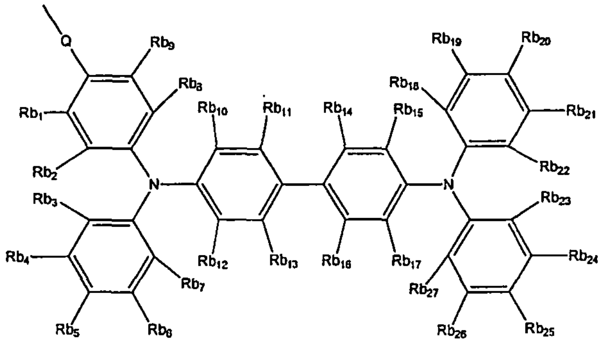

wherein Q represents an alkylene group, with or without a hetero atom, such as oxygen or sulfur, and preferably Q is an alkylene group represented by $(CH_2)p$; where p is between about 2 and 6; and wherein $Rb_1$-$Rb_{27}$ are independently selected from the group consisting of a hydrogen atom, a linear alkyl group with up to 10 carbons, a branched alkyl group with up to 10 carbons, and an aromatic group with up to 10 carbons; and

Structure (iii)

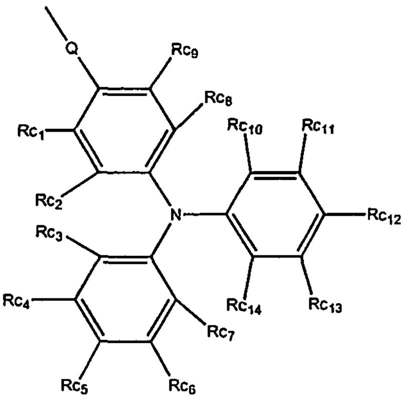

wherein Q represents an alkylene group, with or without a hetero atom, such as oxygen or sulfur, and preferably Q is an alkylene group represented by $(CH_2)p$; where p is between about 2 and 6, and wherein $Rc_1$-$Rc_{14}$ are independently selected from the group consisting of a hydrogen atom, a linear alkyl group with up to 10 carbons, a branched alkyl group with up to 10 carbons, and an aromatic group with up to 10 carbons.

Likewise, the chromophore or group that provides the non-linear optical functionality may be any group known in the art to provide such capability. If this group is to be attached to the polymer matrix as a side chain, then the group, or a precursor of the group, should be capable of incorporation into a monomer that can be polymerized to form the copolymer matrix of the composition.

Preferred chromophore groups are aniline-type groups or dehydronaphtyl amine groups.

The chromophore or group that provides the non-linear optical functionality used in the present embodiment is represented by formula (0):

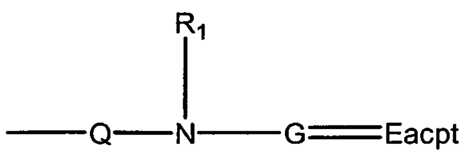
formula (0)

wherein Q represents an alkylene group, with or without a hetero atom; such as oxygen or sulfur, and preferably Q is an alkylene group represented by $(CH_2)p$; where p is an integer of about 2 to 6; $R_1$ is selected from the group consisting of a hydrogen atom, a linear alkyl group with up to 10 carbons, a branched alkyl group with up to 10 carbons, and an aromatic group with up to 10 carbons, and preferably $R_1$ is an alkyl group which is selected from methyl, ethyl, propyl,

butyl, pentyl and hexyl; G is a group having a bridge of π-conjugated bond; and Eacpt is an electron acceptor group.

In the above definition, by the term "a bridge of π-conjugated bond", it is meant a molecular fragment that connects two or more chemical groups by π-conjugated bond. A π-conjugated bond contains covalent bonds between atoms that have σ bonds and π bonds formed between two atoms by overlap of their atomic orbitals (s+p hybrid atomic orbitals for σ bonds; p atomic orbitals for π bonds).

By the term "electron acceptor", it is meant a group of atoms with a high electron affinity that can be bonded to a π-conjugated bridge. Exemplary acceptors, in order of increasing strength, are:

$$C(O)NR^2 < C(O)NHR < C(O)NH_2 < C(O)OR < C(O)OH < C(O)R < C(O)H < CN < S(O)_2R < NO_2$$

As typical exemplary electron acceptor groups, functional groups which is described in prior of art USP 6,267,913 and shown in the following structure figure can be used. U.S. Patent No. 6,267,913 is hereby incorporated by reference for the purpose of describing donors and acceptors useful in this invention. The symbol "‡" in a chemical structure herein specifies an atom of attachment to another chemical group and indicates that the structure is missing a hydrogen that would normally be implied by the structure in the absence of the "‡".

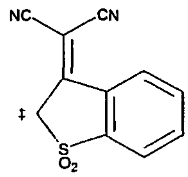
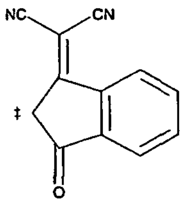
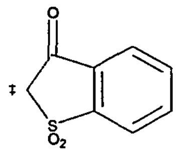
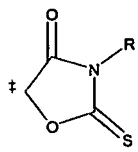

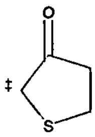
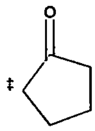
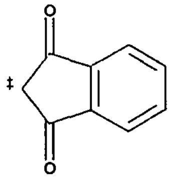
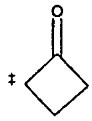
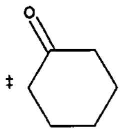
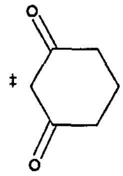

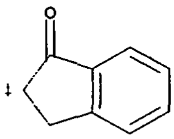
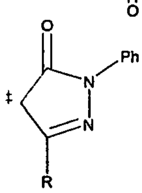
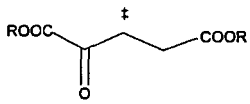
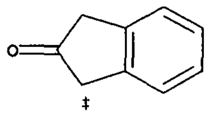

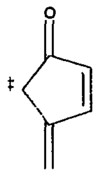
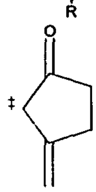
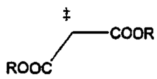
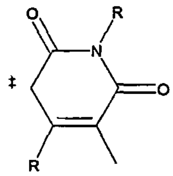
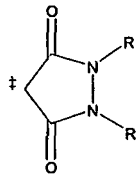

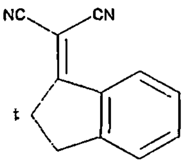
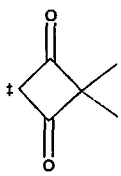
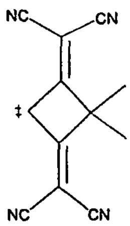
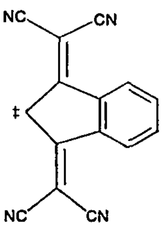
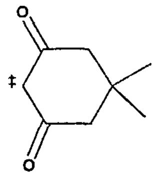

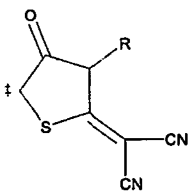
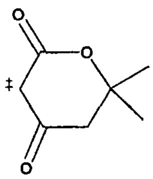
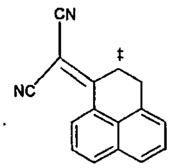
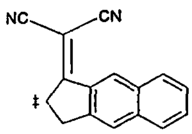

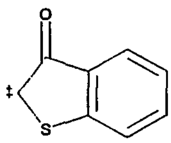 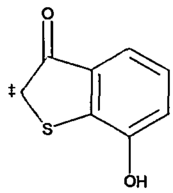 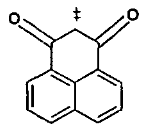 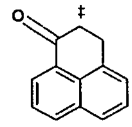

wherein R is selected from the group consisting of a hydrogen atom, a linear alkyl group with up to 10 atoms, a branched alkyl group with up to 10 atoms, and an aromatic group with up to 10 carbons.

Most preferably the moiety that provides the non-linear optical functionality is such a case that G in formula (0) is represented by a structure selected from the group consisting of the structures (iv), (v) and (vi);

Structure (iv)

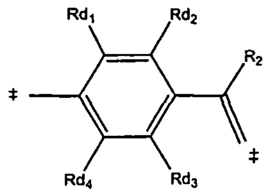

,

Structure (v)

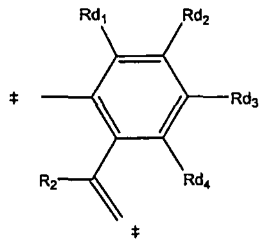

wherein, in both structures (iv) and (v), $Rd_1$-$Rd_4$ are each independently selected from the group consisting of a hydrogen atom, a linear alkyl group with up to 10 atoms, a branched alkyl group with up to 10 atoms, and an aromatic group with up to 10 carbons, and preferably $Rd_1$-$Rd_4$ are all hydrogen; $R_2$ is selected from the group consisting of a hydrogen atom, a linear alkyl group with up to 10 atoms, a branched alkyl group with up to 10 atoms, and an aromatic group with up to 10 carbons;

Structure (vi)

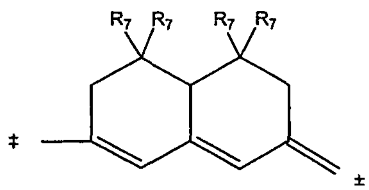

wherein $R_7$ represents a linear or branched alkyl group with up to 10 carbons; and
wherein Eacpt in formula (0) is an electron acceptor group and represented by a structure selected from the group consisting of the structures;

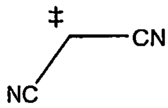, 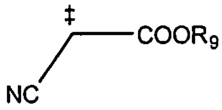, 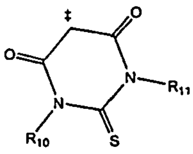, 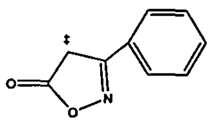, 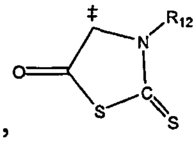

wherein $R_9$, $R_{10}$, $R_{11}$ and $R_{12}$ are each independently selected from the group consisting of a hydrogen atom, a linear alkyl group with up to 10 atoms, a branched alkyl group with up to 10 atoms, and an aromatic group with up to 10 carbons.

A preferred copolymer used for the photorefractive composition is a co-polymer which comprises a first repeating unit selected from the group consisting of the structures (i)", (ii)" and (iii)", and a second repeating unit represented by the formula (0)".

Structure (i)"

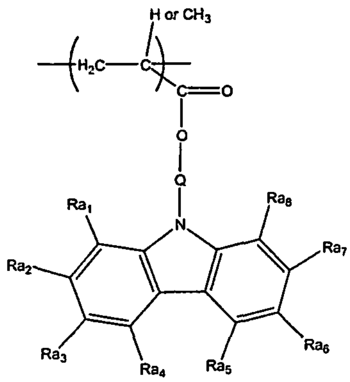

wherein Q and $Ra_1$-$Ra_8$ are the same meaning as in Structure (i);

Structure (ii)"

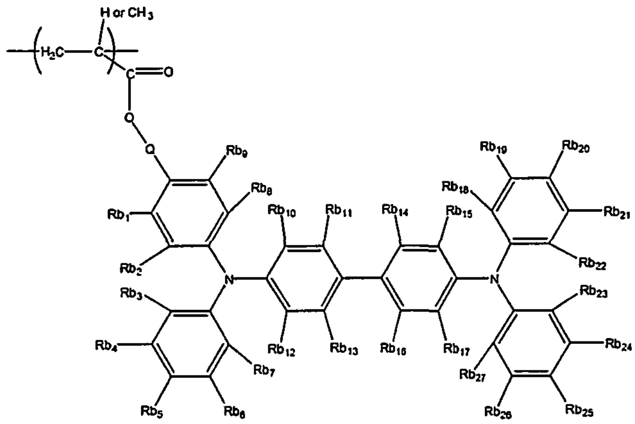

wherein Q and $Rb_1$-$Rb_{27}$ are the same meaning as in Structure (ii);

Structure (iii)"

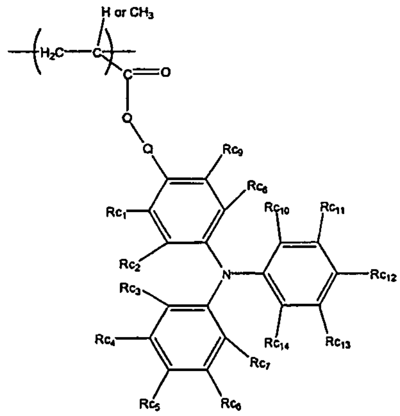

wherein Q and $Rc_1$-$Rc_{14}$ are the same meaning as in Structure (iii);

Formula (0)"

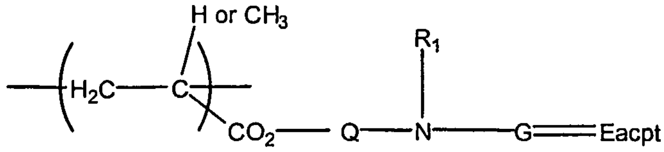

wherein Q, $R_1$, G and Eacpt are the same meaning as in formula (0).

The copolymer matrix is preferably synthesized from a monomer incorporating both one of the above photoconductive groups and one of the above chromophore groups. The inventors have recognized that a number of physical and chemical properties are desirable in the copolymer matrix. It is preferred if the copolymer itself incorporates both a charge transport group and a chromophore group, to form copolymers. Physical properties of the formed copolymer that are of importance are the molecular weight and the glass transition temperature, Tg. Also, it is valuable and desirable, although not essential, that the copolymer should be capable of being formed into films, coatings and shaped bodies of various kinds by standard polymer processing techniques, such as solvent coating, injection molding and extrusion.

In the present invention, the copolymer generally has a weight average molecular weight, Mw, of from about 3,000 to 500,000, preferably from about 5,000 to 100,000. The term "weight average molecular weight" as used herein means the value determined by the GPC (gel permeation chromatography) method in polystyrene standards, as is well known in the art.

For good photorefractive properties, the photorefractive composition should be substantially amorphous and non-crystalline or non-glassy under the conditions of use. Therefore, it is preferred that the finished photorefractive composition has a relatively low glass transition temperature, Tg, such as below about 50 °C, more preferably below about 40 °C. Preferred temperature ranges for the Tg are 10-50 °C, most preferably 20-40 °C. If the pure polymer itself has a glass transition temperature higher than these preferred values, which will generally be the case, components may be added to lower the Tg, as discussed in more detail below.

Nevertheless, it is preferred that the polymer itself has a relatively low glass transition temperature, by which inventors mean a Tg no higher than about 125 °C, more preferably no higher than about 120 °C, and most preferably no higher than about 110 °C or 100°C.

Particularly, in order to lower glass transition temperature of copolymer itself, the already described monomers that provides the plasticizing ability can be incorporated. Sometimes the incorporation of plasticizing monomers into the copolymer which has charge transport and non-linear-optics ability can reduce the glass transition temperature more than 50 °C or 20 °C, at least 5 °C, depending on incorporation ratio.

In more detail, the moiety that provides the plasticizing ability is chosen from the group consisting of a linear alkyl group with up to 10 carbons, a linear alkenyl group with up to 10 carbons, a branched alkyl group with up to 10 carbons, and a branched alkenyl group with up to 10 carbons. In more detail, the monomer is chosen from the group of $CH_2=CR_0-COOR$ wherein $R_0$ represents a hydrogen atom or methyl group, and R represents a $C_{2-10}$ alkyl group, such as butylacrylate, ethyl acrylate, propyl acrylate, 2-ethylhexyl (meth)acrylate and hexyl (meth)acrylate.

A relatively low glass transition temperature is preferred because a greater mobility of polymer chains that exhibit close to or above their glass transition temperature give higher orientation during voltage application, and lead

to better performance, such as high photoconductivity, fast response time and high diffraction efficiency, of the photorefractive device.

In principle, essentially any polymer backbone, including, but not limited to, polyurethane, epoxy polymers, polystyrene, polyether, polyester, polyamide, polyimide, polysiloxane, and polyacrylate could be used, with the appropriate side chains attached, to make the polymer matrices of the invention.

Preferred types of backbone units are those based on acrylates or styrene. Particularly preferred are acrylate-based monomers, and more preferred are methacrylate monomers. The first polymeric materials to include photoconductive functionality in the polymer itself were the polyvinyl carbazole materials developed at the University of Arizona. However, these polyvinyl carbazole polymers tend to become viscous and sticky when subjected to the heat-processing methods typically used to form the polymer into films or other shapes for use in photorefractive devices.

In contrast, inventors' preferred materials, and particularly the (meth)acrylate-based, and more specifically acrylate-based, polymers, have much better thermal and mechanical properties. That is, they provide better workability during processing by injection-molding or extrusion, for example. This is particularly true when the polymers are prepared by radical polymerization.

Particular examples of monomers including a phenyl amine derivative group as the charge transport component are carbazolylpropyl (meth)acrylate monomer; 4-(N,N-diphenylamino)-phenylpropyl (meth)acrylate; N-[(meth)acroyloxypropylphenyl]-N, N', N'-triphenyl-(1,1'-biphenyl)-4,4'-diamine; N-[(meth)acroyloxypropylphenyl]-N'-phenyl-N, N'-di(4-methylphenyl)- (1,1'-biphenyl)-4,4'-diamine; and N-[(meth)acroyloxypropylphenyl]- N'-phenyl- N, N'-di(4-buthoxyphenyl)- (1,1'-biphenyl)-4,4'-diamine. Such monomers can be used singly or in mixtures of two or more monomers.

Particular examples of monomers including a chromophore group as the non-linear optical component are N-ethyl, N-4-dicyanomethylidenyl acrylate and N-ethyl, N-4-dicyanomethylidenyl-3, 4, 5, 6, 1 0-pentahydronaphtylpentyl acrylate.

Diverse polymerization techniques are known in the art. One such conventional technique is radical polymerization, which is typically carried out by using an azo-type initiator, such as AIBN (azoisobutyl nitrile). In this radical polymerization method, the polymerization catalysis is generally used in an amount of from 0.01 to 5 mol%, preferably from 0.1 to 1 mol%, per mole of the sum of the polymerizable monomers.

In the present invention, conventional radical polymerization can be carried out under inactive gas and in the presence of a solvent, such as ethyl acetate, tetrahydrofuran, butyl acetate, toluene or xylene.

Usually, the generally used inactive gas is, preferably, nitrogen, argon, or helium. Polymerization pressure is from 1 to 50 atom, preferably from 1 to 5 atom.

The solvent is generally used in an amount of from 100 to 10000 wt%, preferably from 1000 to 5000 wt%, per weight of the sum of the polymerizable monomers.

The conventional radical polymerization is preferably carried out at a temperature of from about 50°C to 100°C, and is allowed to continue for about 1 to 100 hours, depending on the desired final molecular weight and polymerization temperature, and taking into account the polymerization rate.

Also, as another polymerization technique for radical polymerization, a recently developed polymerization technique known as living radical polymerization can be used for preparing polymers with unusually good photorefractive properties. In particular, living radical polymerization has the potential to form polymers with unusually low polydispersity, such as less than 2.5, such as less than 2.0. Also, particularly living radical polymerization has the capabilities to produce block copolymers, such as A-B type, A-B-A, or B-A-B type block copolymers, very efficiently.

Details of the living radical polymerization method are described in the literature. They may be found, for example, in the following papers:

T. Patten et al., "Radical polymerization yielding polymers with Mw/Mn ~1.05 by homogeneous atom transfer radical polymerization", Polymer Preprints, 1996, 37, 575.

K. Matyjasewski et al., "Controlled/living radical polymerization. Halogen atom transfer radical polymerization promoted by a Cu(I)/Cu(II) redox process", Macromolecules, 1995, 28, 7901.

M. Sawamoto et al., " Ruthenium-mediated living radical polymerization of methyl methacrylate", Macromolecules, 1996, 29, 1070.

Living radical polymerization is also described at length in U.S. Patent 5,763,548 to Carnegie-Mellon University, which is incorporated herein by reference in its entirety.

Briefly, inventors' living radical polymerization technique involves the use of a polymerization initiator, a catalyst and an activating agent.

The initiator is typically a halogen-containing organic compounds. After polymerization, this initiator or components of the initiator are attached to the polymer at both polymer terminals. The polymerization initiator preferably used is an ester-based or styrene-based derivative containing a halogen in the $\alpha$-position. Particularly preferred are 2-bromo (or chloro) methylpropionic acid, or bromo(or chloro)-1-phenyl derivatives. Specific examples of these derivatives include

ethyl 2-bromo(or chloro)-2-methylpropionate, ethyl 2-bromo(or chloro)propionate, 2-hydroxyethyl 2-bromo(or chloro)-2-methylpropionate, 2-hydroxyethyl 2-bromo(or chloro)propionate, and 1-phenyl ethyl bromide(chloride).

Instead of a mono bromo(chloro) type initiator, a di-bromo(chloro) type initiator, such as dibromo(chloro) ester derivative, can be used. Such initiators are represented by the formula:

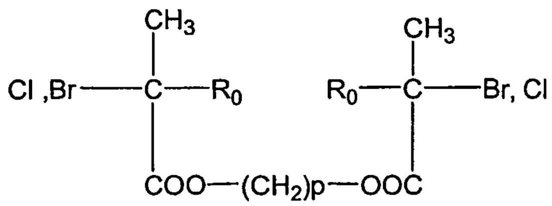

formula

wherein $R_0$ represents a hydrogen atom or methyl group; and p is 2-6.

Of these initiators, most preferred is ethylene bis(2-bromo (chloro)-2-methylpropionate). By using this initiator, inventors have discovered that block copolymers, and particularly A-B-A type or B-A-B type block copolymers, can be produced very efficiently.

In inventors' process, the polymerization initiator is generally used in an amount of from 0.01 to 20 mol%, preferably from 0.1 to 10 mol%, and more preferably from 0.2 to 5 mol%, per mole of the sum of the polymerizable monomers.

Various types of catalysts are known, including perfluoroalkyl iodide type, TEMPO (phenylethoxy-tetramethylpiperidine) type, and transition metal type. Inventors have discovered that high-quality polymers can be made by using transition-metal catalysts, which are safer, simpler, and more amenable to industrial-scale operation than TEMPO-type catalysts. Therefore, in the process of the invention a transition-metal catalyst is preferred.

Non-limiting examples of transition metals that may be used include Cu, Ru, Fe, Rh, V, and Ni. Particularly preferred is Cu. Typically, but not necessarily, the transition metal is used in the form of the metal halide (chloride, bromide, etc.).

The transition metal in the form of a halide or the like is generally used in the amount of from 0.01 to 3 moles, and preferably from 0.1 to 1 mole, per mole of polymerization initiator.

The activating agent is an organic ligand of the type known in the art that can be reversibly coordinated with the transition metal as a center to form a complex. The ligand preferably used is a bipyridine derivative, mercaptans derivative, trifluorate derivative, or the like. When complexed with the activating ligand, the transition metal catalyst is rendered soluble in the polymerization solvent. In other words, the activating agent serves as a co-catalyst to activate the catalyst, and start the polymerization.

The ligand is used in an amount of normally from 1 to 5 moles, and preferably from 2 to 3 moles, per mole of transition metal halide.

The use of the polymerization initiator and the activating agent in the above recommended proportions makes it possible to provide good results in terms of the reactivity of the living radical polymerization and the molecular weight and weight distribution of the resulting polymer.

In the present invention, living radical polymerization can be carried out without a solvent or in the presence of a solvent, such as butyl acetate, toluene or xylene.

To initiate the polymerization process, the monomer(s), polymerization initiator, catalyst, activating agent and solvent are introduced into the reaction vessel. As the process starts, the catalyst and polymerization initiator form a radical, which attacks the monomer and starts the polymerization growth.

The living radical polymerization is preferably carried out at a temperature of from about 70°C to 130°C, and is allowed to continue for about 1 to 100 hours, depending on the desired final molecular weight and polymerization temperature, and taking into account the polymerization rate and deactivation of catalyst.

In the block copolymer preparation by living radical polymerization, the monomer addition sequence is important for achieving the desired copolymer structure. For example, to make random copolymers, both the non-linear optics-group containing and the charge transport-group-containing monomers can be added at the same time.

However, by adding the monomers sequentially, block type copolymers can be prepared. For example, to prepare an A-B type block copolymer, wherein polymer block A has charge transport ability and polymer block B has non-linear-optical ability, firstly the monomer having charge transport ability is polymerized, preferably by using a mono bromo(chloro) type initiator. Subsequently, the second monomer having non-linear-optical ability is added to continue the polymerization. In this way, an A-B type block copolymer can be produced. During this polymerization procedure, the second monomer is added at the time when the first monomer is polymerized more than 50% by weight, normally 70% by weight or more, preferably 80% by weight or more, and more preferably 90% by weight or more.

On the other hand, if the monomer having non-linear-optical ability is polymerized first, a B-A type block copolymer can be produced. Similarly to the above polymerization procedure, the second monomer is added at the time when the first monomer is polymerized more than 50% by weight, normally 70% by weight or more, preferably 80% by weight or more, and more preferably 90% by weight or more.

Further, if living radical polymerization is carried out in a manner such that, first, the monomer having charge transport ability is polymerized, then the second monomer having non-linear-optical ability is added to continue polymerization, and thirdly an additional amount of the monomer having charge transport ability is added to continue polymerization, an A-B-A type block copolymer can be produced. During the successive polymerization procedure, the monomer to be subsequently added is added at the time when the conversion of the monomer which has been previously added exceeds at least 50% by weight, normally 60% by weight or more, preferably 80% by weight or more, and more preferably 90% by weight or more.

Moreover, if living radical polymerization is carried out in a manner such that, first, the monomer having charge transport ability is polymerized (block A), then the second monomer having non-linear-optical ability is added to continue polymerization (block B), and thirdly the monomer having plasticizer ability is added to continue polymerization (block C), an A-B-C type block copolymer can be produced. During the successive polymerization procedure, the monomer to be subsequently added is added at the time when the conversion of the monomer which has been previously added exceeds at least 50% by weight, normally 60% by weight or more, preferably 80% by weight or more, and more preferably 90% by weight or more.

If the copolymer constitutes two or more of polymer blocks A, the A-type constituting blocks need not necessarily be prepared from the same monomer. Likewise, if the copolymer constitutes two or more of polymer blocks B, the B-type blocks need not necessarily be prepared from the same monomer. Likewise, if the copolymer constitutes two or more of polymer blocks C, the C-type blocks need not necessarily be prepared from the same monomer. Thus, the individual blocks may be of different forms represented by A1, A2, A3, etc., B1, B2, B3, and C1, C2, C3 etc. In this way, a large diversity of polymers, such as A1-B-A2, B1-B2-A, A1-B-C, B1-B2-C, or A1-B1-A2-C can be produced.

By carrying out the radical polymerization technique based on the teachings and preferences given above, it is possible to prepare random or block copolymers carrying both charge transport and non-linear optical groups. Further, by following the techniques described herein, it is possible to prepare such materials with exceptionally good properties, such as photoconductivity, response time and diffraction efficiency.

Sometimes, for better photorefractivity, the copolymer can be dispersed with a component that possesses non-linear optical properties through the polymer matrix, as is described in U.S. Patent 5,064,264 to IBM, which is incorporated herein by reference. Suitable materials are known in the art and are well described in the literature, such as in D.S. Chemla & J. Zyss, "Nonlinear Optical Properties of Organic Molecules and Crystals" (Academic Press, 1987). Also, as described in U.S. Patent 6,090,332 to Seth R. Marder et. al., fused ring bridge, ring locked chromophores that form thermally stable photorefractive compositions can be used. For typical, non-limiting examples of chromophore additives, the following chemical structure compounds can be used:

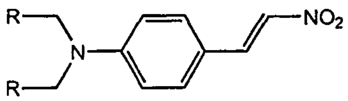
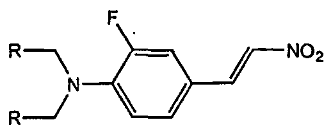
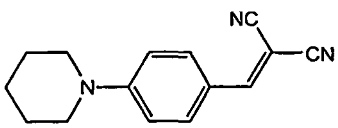

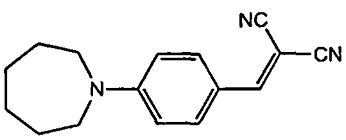
(7-DCST)
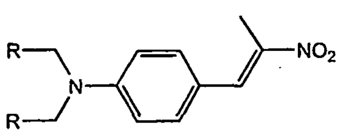
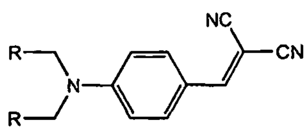

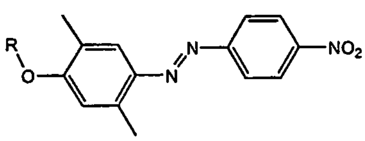
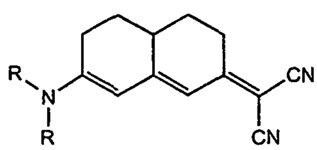

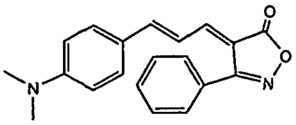
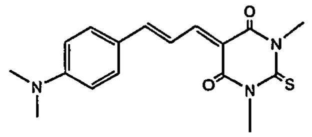
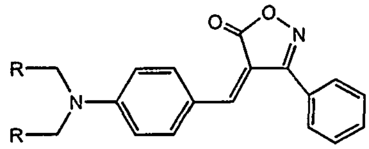
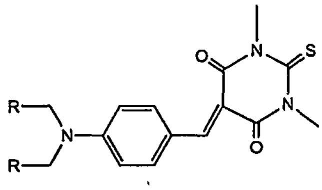
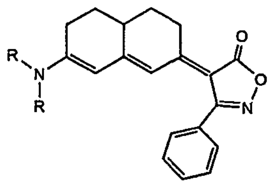
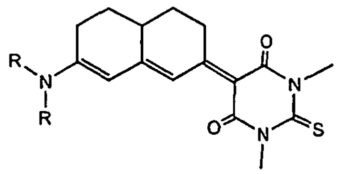

Additionally, novel chromophores described below may be used.

The chosen compound(s) is sometimes mixed in the matrix copolymer in a concentration of about up to 80 wt%, more preferably 40 wt%.

On the other hand, if necessary, the copolymer can be mixed with a component that possesses charge transport properties into the polymer matrix, again as is described in U.S. Patent 5,064,264 to IBM. Preferred charge transport compounds are good hole transfer compounds, for example N-alkyl carbazole or triphenylamine derivatives.

Furthermore, if necessary, the copolymer can be mixed with a component that possesses plasticizer properties into the polymer matrix. As preferred plasticizer compounds, any commercial plasticizer compound can be used, such as phthalate derivatives or low molecular weight hole transfer compounds, for example N-alkyl carbazole or triphenylamine derivatives.

As detail examples, ethyl catbazole, 4-(N,N-diphenylamino)-phenylpropyl acatate; N-(acetoxypropylphenyl)-N, N', N'-triphenyl-(1,1'-biphenyl)-4,4'-diamine; N-(acetoxypropylphenyl)-N'-phenyl-N, N'-di(4-methylphenyl)- (1,1'-biphenyl)-4,4'-diamine; and N-(acetoxypropylphenyl)- N'-phenyl- N, N'-di(4-buthoxyphenyl)- (1,1'-biphenyl)-4,4'-diamine are contemplated. Such compounds can be used singly or in mixtures of two or more monomers. Also, un-polymerized monomers can be low molecular weight hole transfer compounds, for example 4-(N,N-diphenylamino)-phenylpropyl (meth)acrylate; N-[(meth)acroyloxypropylphenyl]-N, N', N'-triphenyl-(1,1'-biphenyl)-4,4'-diamine; N-[(meth)acroyloxypropylphenyl]-N'-phenyl-N, N'-di(4-methylphenyl)- (1,1'-biphenyl)-4,4'-diamine; and N-[(meth)acroyloxypropylphenyl]-N'-phenyl- N, N'-di(4-buthoxyphenyl)-(1,1'-biphenyl)-4,4'-diamine. Such monomers can be used singly or in mixtures of two or more monomers.

Preferably, as another type of plasticizer, N-alkyl carbazole or triphenylamine derivatives, which contains electron acceptor group, as depicted in the following structure 4, 5, and 6, can be used.

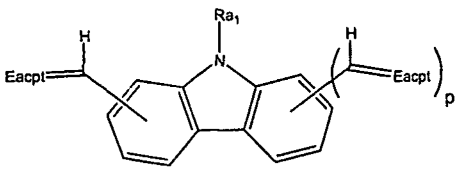

structure 4

wherein $Ra_1$ is independently selected from the group consisting of a hydrogen atom, a linear alkyl group with up to 10 carbons, a branched alkyl group with up to 10 carbons, and an aromatic group with up to 10 carbons; p is 0 or 1.

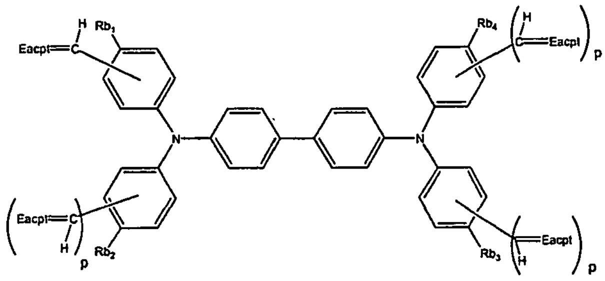

structure 5

wherein $Rb_1$-$Rb_4$ are each independently selected from the group consisting of a hydrogen atom, a linear alkyl group

with up to 10 carbons, a branched alkyl group with up to 10 carbons, and an aromatic group with up to 10 carbons; p is 0 or 1

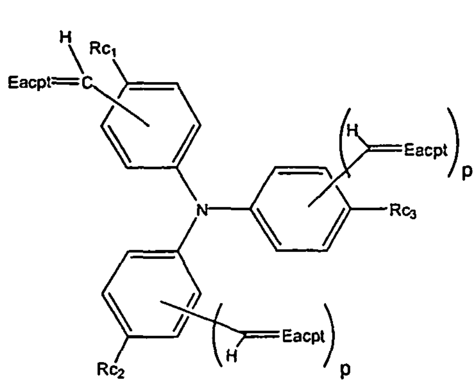

structure 6

wherein $Rc_1$-$Rc_3$ are each independently selected from the group consisting of a hydrogen atom, a linear alkyl group with up to 10 carbons, a branched alkyl group with up to 10 carbons, and an aromatic group with up to 10 carbons; P is 0 or 1; wherein Eacpt is an electron acceptor group and represented by a structure selected from the group consisting of the structures;

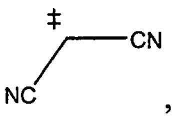 , 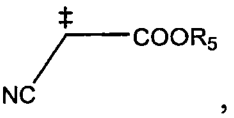 , 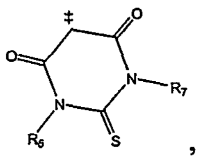 , 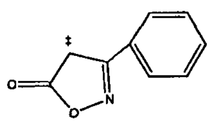 , 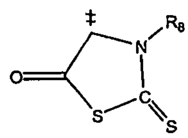

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

The plascticizer, which is N-alkyl carbazole or triphenylamine derivatives containing electron acceptor group and depicted in the following structure 4, 5, and 6, can help the photorefarctive composition more stable, since the plascticizer contains both N-alkyl carbazole or triphenylamine moiety and non-liner optics moiety at same time in one compound.

As detail examples of above described plasticizers, the following compound can be used. Such monomers can be used singly or in mixtures of two or more monomers.

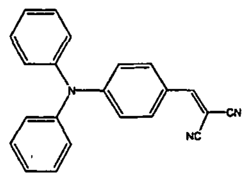 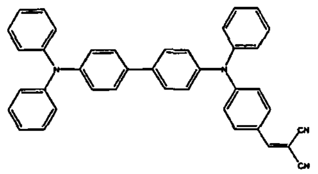 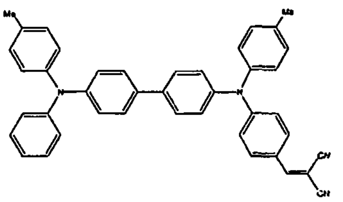

In general, the smallest amount of plasticizer required to provide a suitable overall Tg for the composition should be used. Compositions with large amounts of plasticizer tend to have lower stability, as the polymer matrix and the plasticizer may phase separate over time. Also, the photorefractive properties of the material are diminished by dilution of the active components by the plasticizer.

To prepare the non-linear optical containing copolymer, monomers that have side-chain groups possessing non-linear-optical ability should be used. Non-limiting examples of monomers that may be used are those containing the following chemical structures:

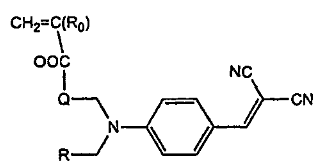 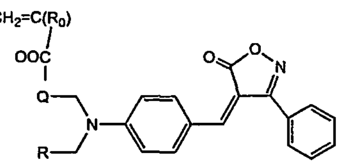 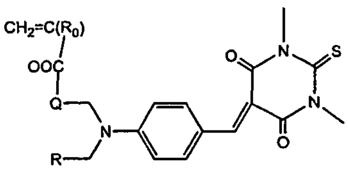

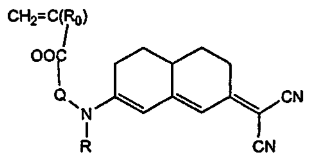 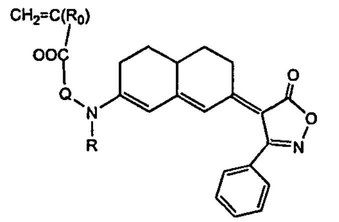 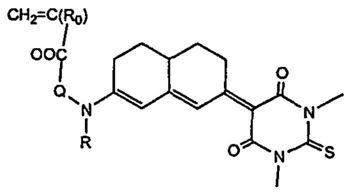

wherein Q represents an alkylene group with or without a hetero atom, such as oxygen or sulfur, and preferably Q is an alkylene group represented by $(CH_2)p$; where p is between about 2 and 6; $R_0$ is a hydrogen atom or methyl group, and R is a linear or branched alkyl group with up to 10 carbons; and preferably R is a alkyl group which is selected from methyl, ethyl, and propyl.

Inventors have discovered a new technique for preparing this invention copolymers. Inventors' technique involves the use of a precursor monomer containing a precursor functional group for non-linear optical ability. Typically, this precursor is represented by the following general formula:

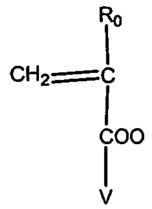

wherein $R_0$ is a hydrogen atom or methyl group, and V is selected from the group consisting of the following structures 1 to 3 :

Structure 1

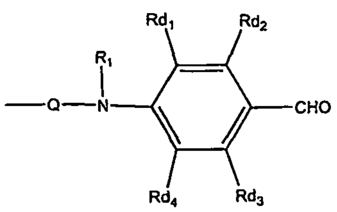

,

Structure 2

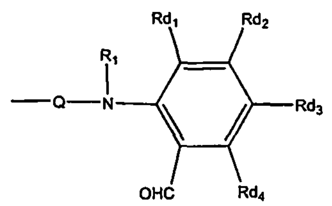

wherein, in both structures 1 and 2, Q represents an alkylene group, with or without a hetero atom, such as oxygen or sulfur, and preferably Q is an alkylene group represented by $(CH_2)p$; where p is between about 2 and 6; and wherein $Rd_1$-$Rd_4$ are independently selected from the group consisting of a hydrogen atom, a linear alkyl group with up to 10 carbons, a branched alkyl group with up to 10 atoms, and an aromatic group with up to 10 carbons, and preferably $Rd_1$-$Rd_4$ are hydrogen; and wherein $R_1$ represents a linear or branched alkyl group with up to 10 carbons, and preferably $R_1$ is an alkyl group selected from methyl, ethyl, propyl, butyl, pentyl and hexyls; and

Structure 3

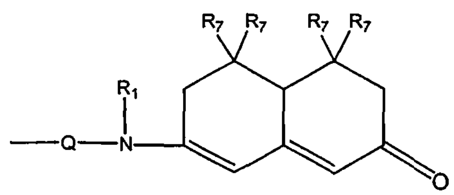

wherein Q represents an alkylene group, with or without a hetero atom, such as oxygen or sulfur, and preferably Q is an alkylene group represented by $(CH_2)p$; where p is of about 2 to 6; and wherein $R_1$ represents a linear or branched alkyl group with up to 10 carbons, and preferably $R_1$ is an alkyl group selected from methyl, ethyl, propyl, butyl, pentyl and hexyls; and wherein $R_7$ represents a linear or branched alkyl group with up to 10 carbons.

The procedure for performing the radical polymerization in this case involves the use of the same polymerization methods and operating conditions with same preferences, as have already been described above.

After the precursor copolymer has been formed, it can be converted into the corresponding copolymer having non-linear optical groups and capabilities by a condensation reaction. Typically, the condensation reagent may be selected from the group consisting of

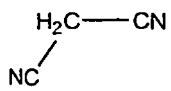 , 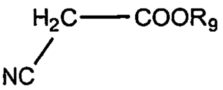 , 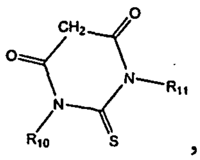 , 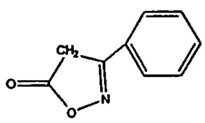 , 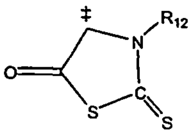

wherein $R_9$, $R_{10}$, $R_{11}$ and $R_{12}$ are independently selected from the group consisting of a hydrogen atom, a linear alkyl group with up to 10 carbons, a branched alkyl group with up to 10 carbons, and an aromatic group with up to 10 carbons.

The condensation reaction can be done at room temperature for 1-100 hrs, in the presence of a pyridine derivative catalyst. A solvent, such as butyl acetate, chloroform, dichloromethylene, toluene or xylene can be used. Optionally, the reaction may be carried out without the catalyst at a solvent reflux temperature of 30°C or above for about 1 to 100 hours.

Inventors have discovered that use of a monomer containing a precursor group for non-linear-optical ability, and conversion of that group after polymerization tends to result in a polymer product of lower polydispersity than the case if a monomer containing the non-linear-optical group is used. This is, therefore, inventors' preferred technique.

Also, there are no restrictions on the ratio of monomer units for the copolymers comprises a repeating unit including the first moiety having charge transport ability, a repeating unit including the second moiety having non-linear-optical ability, and a repeating unit including the third moiety having plasticizing ability. However, as a typical representative example, per 100 weight parts of [a (meth)acrylic monomer having charge transport ability], [a (meth)acrylate monomer having non-linear optical ability] is a range between 1 and 200 weight parts, preferably a range between 10 and 100 weight parts. If this ratio is less than about 1 weight part, the charge transport ability of copolymer itself is weak, and the response time tends to be too slow to give good photorefractivity. However, even in this case, by addition of already described low molecular weight components having non-linear-optical ability can enhance photorefractivity. On the other hand, if this ratio is more than about 200 weight parts, the non-linear-optical ability of copolymer itself is weak, and the diffraction efficiency tends to be too low to give good photorefractivity. However, even in this case, by addition of already described low molecular weight components having charge transport ability can enhance photorefractivity.

Also, a (meth)acrylic monomer having plasticizerability is, per 100 weight parts of a (meth)acrylic monomer having charge transport ability, is a range between 1 and 100 weight parts, preferably a range between 2 and 20 weight parts. If this ratio is more than 100 weight parts, the non-linear-optical ability and the charge transport ability of copolymer itself are weak. The response time tends to be too slow and the diffraction efficiency tends to be too low to give good photorefractivity. However, even in this case, by addition of already described low molecular weight components having non-linear-optical ability and the charge transport ability can enhance photorefractivity.

Optionally, other components may be added to the polymer matrix to provide or improve the desired physical properties mentioned earlier in this section. Usually, for good photorefractive capability, it is preferred to add a photosensitizer to serve as a charge generator. A wide choice of such photosensitizers is known in the art. Typical, but non-limiting examples of photosensitizers that may be used are 2, 4,7-trinitro-9-fluorenone (TNF) and C60. The amount of photosensitizer required is usually less than 3 wt%.

As mentioned above, it is preferred that the copolymer matrix have a relatively low glass-transition temperature, and be workable by conventional processing techniques. Optionally, a plasticizer may be added to the composition to reduce the glass transition temperature and/or facilitate workability. The type of plasticizer suitable for use in the invention is not restricted; many such materials will be familiar to those of skill in the art. Representative typical examples include N-alkylcarbazole and dioctylphthalate. Oligomer-type compounds of the charge transport or non-linear-optical monomers may also be used to control the Tg of the composition.

In general, the smallest amount of plasticizer required to provide a suitable overall Tg for the composition should be used. Compositions with large amounts of plasticizer tend to have lower stability, as the polymer matrix and the plasticizer may phase separate over time. Also, the photorefractive properties of the material are diminished by dilution of the active components by the plasticizer.

As discussed above, the invention provides polymers of comparatively low Tg when compared with similar polymers prepared in accordance with prior art methods. Inventors have recognized that this provides a benefit in terms of lower dependence on plasticizers. By selecting copolymers of intrinsically moderate Tg and by using methods that tend to depress the average Tg, it is possible to limit the amount of plasticizer required for the composition to preferably

no more than about 30% or 25%, and more preferably lower, such as no more than about 20%.

In the art, many of the compositions of the photorefractive polymers showed poor phase stabilities and gave haziness after days. Once the composition films showed the haziness, they don't show good photorefractive properties. This film composition haziness is usually coming from incompatibilities between several photorefractive components. Generally, photorefractive compositions comprise from components having charge transport ability and components having non-linear optics ability. The components having charge transport ability are usually hydro-phobic and nonpolar material. On the other hand, components having non-linear optics ability are usually hydro-philic and polar material. Therefore, as a nature of these components, there were tendencies to be phase separated and give hazy compositions.

In the previously described paper (Macromolecules, 2000, 33, 4074), acrylate-based polymers that include carbazole-based side chains and several stilibene-type side chains comprise of components having charge transport ability and the components having non-linear optics ability. In this paper, it is said these polymers can be expected to have good phase stability, although there is no actual detail data.

However, on the other hand, in the present invention, the photorefractive polymers composition showed very good phase stabilities and gave no haziness even after several months. They don't change good photorefractive properties, as the composition are very stable and no phase separations are observed. These film composition stabilities are probably due to copolymer structures. That is, the components having charge transport ability and the components having non-linear optics ability are existing in one polymer chain and phase separation are irrelevant and unlikely to happen.

The good phase stabilities of this invention can be obtained even by addition of charge transport, non-linear optical, or plasticizer low molecular weight compounds. Seemingly, this invention copolymer gave more tolerance for phase stability, since the copolymer can work as a kind of phase compatibilizer.

The good phase stabilities of this invention last more than a day or a week, or sometimes more than six months. Also, even by heating up the testing samples, which usually enhance phase separation speed, the samples showed very good phase stability for more than a day or a week, or sometimes more than six months. These good phase stability can facilitate the invention copolymer into optical device applications for more commercial products. For acceleration tests, heating test temperature have no restriction, but usually, the temperature is between 40 and 120 °C, preferably between 60 and 80 °C.

The photorefractive materials of the invention provide combinations of desirable properties not previously available to the art.

One particularly advantageous feature is the high photoconductivity. In the context of the invention, by photoconductivity inventors mean the increase in conductivity of the photorefractive material under laser irradiation. The photoconductivity of a sample of material may be measured by the following method. First, the steady-state conductivity properties are measured in the dark, by applying an electric field across the sample, allowing the system to come to steady state, and measuring the resulting current. Then the measurements are repeated while illuminating the sample with a pulse from a single laser beam. The photoconductivity, $\Phi_{photo}$, can then be calculated using the following relation:

$$\Phi_{photo} = (i_{photo} - i_{dark}) / A_{beam} E_a$$

where:

- $\mathbf{E_a}$ is the applied electric field,
- $\mathbf{A_{beam}}$ is the illuminated area,
- $i_{photo}$ is electric current with laser irradiation, and
- $i_{dark}$ is electric current without irradiation

Photoconductivity is important because it is a measure of how efficiently charge transport can take place in the material. If all other parameters are fixed, the higher the photoconductivity, the faster is the device response time.

Typical photoconductivities for organic materials and polymers are in the range from about 0.01 pS/cm to a maximum of no higher than 1,000 pS/cm. In fact, the value for conventional photorefractive polymers is usually less than 10 pS/cm, as described in several papers, for example in M.A. Diaz-Garcia et al. (*Chem. Mater.*, **1999**, *11*, 1784). However, surprisingly, the polymers of the invention generally have photoconductivity of more than 100 pS/cm, which is at least an order of magnitude better than currently used materials, and preferably exhibit a photoconductivity of about 200 pS/cm or more, and more preferably about 500 pS/cm or more.

Very few materials have been reported with photoconductivity higher than 10 pS/cm, and even fewer with photoconductivity higher than 100 pS/cm. To inventors' knowledge, the highest photoconductivity ever reported is 2,800 pS/cm (N. Peyghambarian et al., *J. Mater. Chem.*, **1999**, *9*, 2251), in a PVK-type material.

Yet, for inventors' materials inventors have measured photoconductivity of 3,000 pS/cm or more, specifically 3,500 pS/cm.

Furthermore, inventors are aware of no photorefractive composition that provides a photoconductivity of at least 100 pS/cm and, at the same time, offers any one of the other advantageous properties provided herein, such as a polydispersity of no more than about 2.5 or 2.0, a response time of no more than about 50 ms, a diffraction efficiency of at least about 5 %, the good mechanical properties and easy processability of an acrylate-based polymer, the presence of both charge transport and non-linear optical groups as side chains in the polymer, especially in the form of block copolymers, or the efficiency and flexibility of preparation of the living radical polymerization technique.

Another particularly advantageous feature is the fast response time. Response time is the time needed to build up the diffraction grating in the photorefractive material when exposed to a laser writing beam. The response time of a sample of material may be measured by transient four-wave mixing (TFWM) experiments, as detailed in the Examples section below. The data may then be fitted with the following bi-exponential function:

$$\eta (t) = A \sin^2 [B(1 - a_1 e^{-t/J1} - a_2 e^{-t/J2})]$$

with $a_1 + a_2 = 1$
where $\eta$ (t) is the diffraction efficiency at time t, and A, B, $a_1$, and $a_2$ are fitting parameters, $J_1$ and $J_2$ are grating build-up times. Between $J_1$ and $J_2$, the smaller number is defined as the response time.

Response time is important because a faster response time means faster grating build-up, which enables the photorefractive composition to be used for wider applications, such as real-time hologram applications.

Typical response times for known photorefractive materials range from seconds to sub-seconds. Times longer than 100 ms are common. Faster response times have been reported, see W.F. Moerner, Appl. Phys. Lett., Vol. 73, p. 1490 (1998) but, in order to get these higher speeds, higher field strengths have been required. Such higher field strengthsmay be difficult in an industrial, rather than a laboratory, environment. Also, the polyvinyl carbazole polymersused to obtain higher speeds become sticky and difficult to handle during heat processing. In contrast, the acrylate-based, or more specifically methacrylate-based polymers, that are preferred herein provide excellent workability during heat processing and other polymer handling methods.

In comparison with typical prior art materials, the photorefractive compositions of the invention provide good response times, such as no more than about 50 ms, and preferably faster, such as no more than about 40 ms, no more than about 30 ms, or no more than about 20 ms.

Furthermore, these response times can be achieved without resorting to a very high electric field, expressed as biased voltage. By a very high biased voltage, inventors mean a field in excess of about 100 V/$\mu$m. In inventors' materials, fast response times can generally be achieved at biased voltages no higher than about 100 V/$\mu$m, more preferably no higher than about 90 V/$\mu$m.

And, as discussed with respect to photoconductivity, these good response times can be provided in conjunction with one or more of the other advantageous properties as they are characterized above, such as high photoconductivity, low polydispersity, high diffraction efficiency, good processing capabilities, block copolymer capability, and efficient polymerization techniques.

Yet another advantageous feature is the diffraction efficiency, $\eta$. Diffraction efficiency is defined as the ratio of the intensity of the diffracted beam to the intensity of the incident probe beam, and is determined by measuring the intensities of the respective beams. Obviously, the closer to 100% is the ratio, the more efficient is the device.

In general, for a given photorefractive composition, a higher diffraction efficiency can be achieved by increasing the applied biased voltage.

In comparison with typical prior art materials, the photorefractive compositions of the invention provide good diffraction efficiencies, such as at least about 5 %, and preferably higher, such as at least about 10 %. And, as discussed with respect to photoconductivity, these good diffraction efficiencies can be provided in conjunction with one or more of the other advantageous properties as they are characterized above, such as high photoconductivity, or fast response time, and in conjunction with good processing capabilities, block copolymer capability, and efficient polymerization techniques.

The invention also relates to photorefractive compositions composing novel fused ring structure chromophore and/or mixture of more than two ring different structure chromophore, wherein a non-linear optical ability and photorefractive capabilities are provided by cooperation of other component. Also, the composition may be comprised of a component that provides a photoconductive (charge transport) ability. Optionally, the composition may also include other components as desired, such as sensitizer and plasticizer components.

The novel chromophore that provides the non-linear optical functionality used in the present invention is represented by formulae (i), (ii), (iii), or (iv):

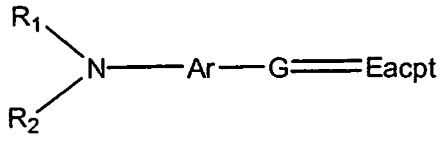

formula (i)

wherein Ar represents an aromatic group, with or without a hetero atom; $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different; G is a group having a bridge of π-conjugated bond; and Eacpt is an electron acceptor group;

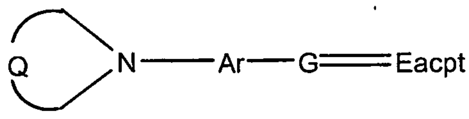

formula (ii)

wherein Ar represents an aromatic group, with or without a hetero atom; G is a group having a bridge of π-conjugated bond; and Eacpt is an electron acceptor group; Q represents an alkylene group, with or without a hetero atom.

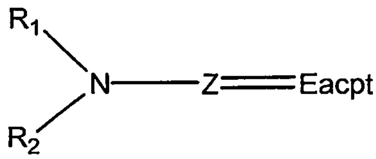

formula (iii)

wherein $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different; wherein Z is a group having a bridge of π-conjugated bond; and Eacpt is an electron acceptor group wherein the composition exhibits photorefractive ability.

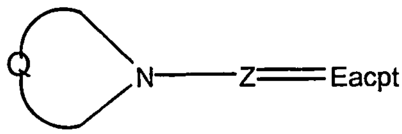

formula (iv)

wherein Q represents an alkylene group, with or without a hetero atom; wherein Z is a group having a bridge of π-conjugated bond; and Eacpt is an electron acceptor group.wherein the composition exhibits photorefractive ability.

In the above definition, by the term "a bridge of π-conjugated bond", it is meant a molecular fragment that connects two or more chemical groups by π-conjugated bond. A π-conjugated bond contains covalent bonds between atoms that have σ bonds and π bonds formed between two atoms by overlap of their atomic orbitals (s+p hybrid atomic orbitals for σ bonds; p atomic orbitals for π bonds).

By the term "electron acceptor", it is meant a group of atoms with a high electron affinity that can be bonded to a π-conjugated bridge. Exemplary acceptors, in order of increasing strength, are:

$$C(O)N^2 < C(O)NHR < C(O)NH_2 < C(O)OR < C(O)OH < C(O)R < C(O)H < CN < S(O)_2R < NO_2$$

As typical exemplary electron acceptor groups in the above formulae of (i) or (ii), Eacpt is an electron acceptor group and represented by a structure selected from the group consisting of the structures;

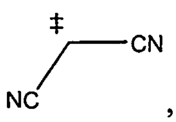 , 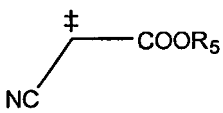 , 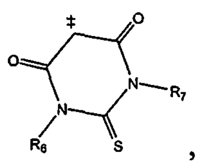 , 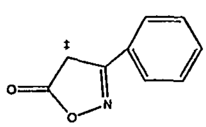 , 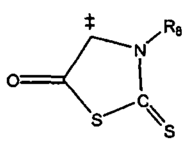

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

Furthermore, as other exemplary electron acceptor groups, functional groups which is described in prior of art USP 6,267,913 and shown in the following structure figure can be used. The symbol "‡" in a chemical structure herein specifies an atom of attachment to another chemical group and indicates that the structure is missing a hydrogen that would normally be implied by the structure in the absence of the "‡".

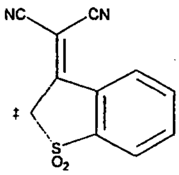 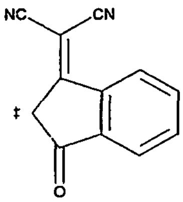 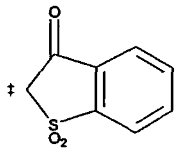 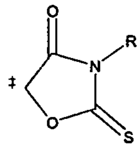

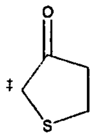 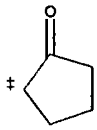 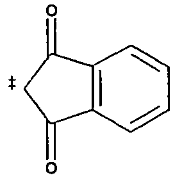 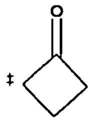 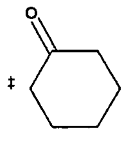 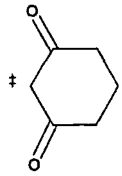

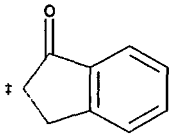 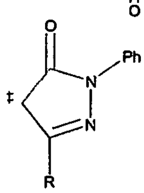 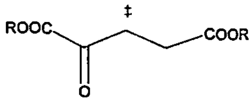 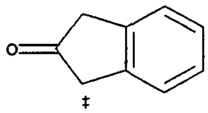

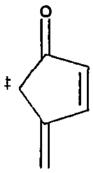 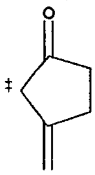 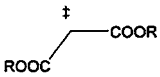 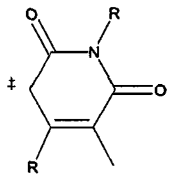 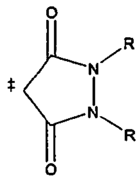

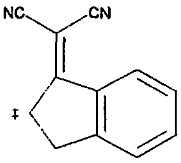 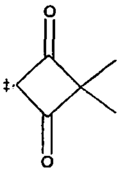 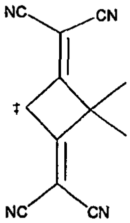 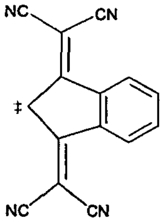 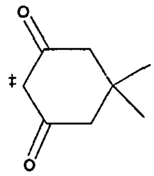

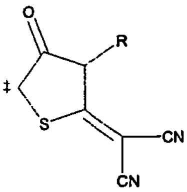 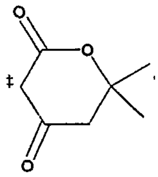 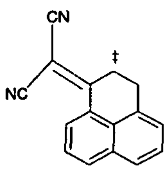 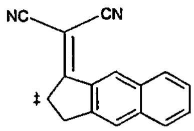

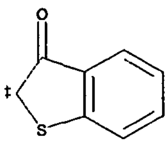 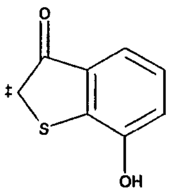 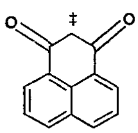 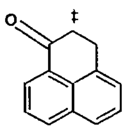

wherein R is selected from the group consisting of a hydrogen atom, a linear alkyl group with up to 10 atoms, a branched alkyl group with up to 10 atoms, and an aromatic group with up to 10 carbons.

In the above formulae of (i) or (ii), Ar is an aromatic group and selected from phenylene, naphthylene, and thiophenylene.

Also, in the above formulae of (i) or (ii), G is represented by a structure selected from the group consisting of the structures (v) and (vi);
wherein structures (v) and (vi) are:

Structure (v)

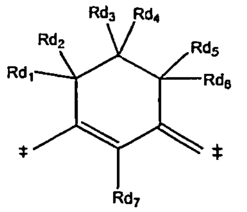

,

wherein, $Rd_1$-$Rd_7$ are each independently selected from the group consisting of a hydrogen atom, a linear alkyl group with up to 10 atoms, a branched alkyl group with up to 10 atoms, and an aromatic group with up to 10 carbons;

Structure (vi)

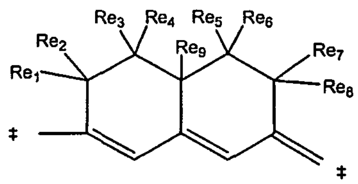

wherein $Re_1$-$Re_9$ represent hydrogen or a linear or branched alkyl group with up to 10 carbons.

Also, in the above formulae of (i), $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different.

Preferably the structure of $R_1$ and $R_2$ is selected from the group of methyl, ethyl, propyl, isopropyl, butyl, isobutyl, pentyl, hexyl, and octyl.

Also, in the above formulae of (ii), Q represents an alkylene group, with or without a hetero atom.

Preferably the structure of Q is selected from the group of ethylene, propylene, butylene, pentylene, hexylene, and heptylene.

Most preferably the structure that provides the non linear optical functionality in the above formulae (i) and (ii) is chosen from the derivatives of the following structures:

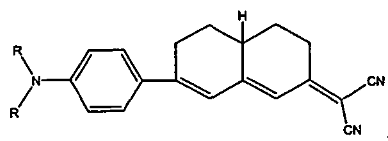

,

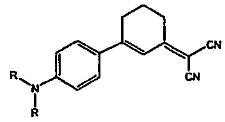

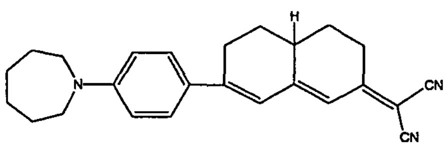

,

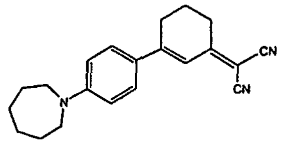

wherein R is a group selected from the group consisting of a hydrogen atom, a linear alkyl group with up to 10 atoms, a branched alkyl group with up to 10 atoms, and an aromatic group with up to 10 carbons.

Also, in the above formulae of (iii) and (iv), Z represents an alkylene group, with or without a hetero atom.

formula (iii)

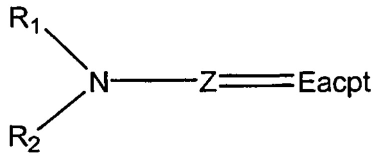

formula (iii)

and

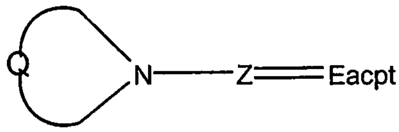

formula (iv)

wherein $R_1$ and $R_2$ is selected from the group consisting of a linear alkyl group with up to 10 carbons, a branched alkyl group with up to 10 carbons, and an aromatic group with up to 10 carbons. $R_1$ and $R_2$ can be either same or different;

Preferably, Z is a group selected from the group consisting of the structures (vii), (viii) and (ix); wherein structures (vii), (viii) and (ix) are:

Structure (vii)

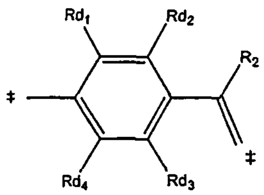

,

Structure (viii)

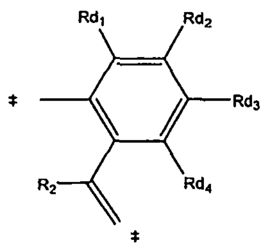

wherein, in both structures (vii) and (viii), $Rd_1$-$Rd_4$ are each independently selected from the group consisting of a hydrogen atom, a linear alkyl group with up to 10 atoms, a branched alkyl group with up to 10 atoms, and an aromatic group with up to 10 carbons; $R_2$ is selected from the group consisting of a hydrogen atom, a linear alkyl group with up to 10 atoms, a branched alkyl group with up to 10 atoms, and an aromatic group with up to 10 carbons;

Structure (ix)

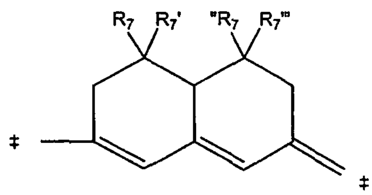

wherein $R_7$, $R_7'$, $R_7''$, and $R_7'''$ represent hydrogen or a linear or branched alkyl group with up to 10 carbons; and

wherein Eacpt in formula (iii) is an electron acceptor group and represented by a structure selected from the group consisting of the structures;

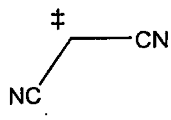 , 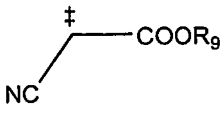 , 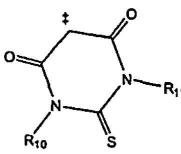 , 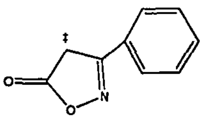 , 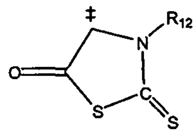

wherein $R_9$, $R_{10}$, $R_{11}$ and $R_{12}$ are each independently selected from the group consisting of a hydrogen atom, a linear alkyl group with up to 10 atoms, a branched alkyl group with up to 10 atoms, and an aromatic group with up to 10 carbons.

Preferably the structure that provides the non linear optical functionality in the above formulae (iii) and (iv) is chosen from the derivatives of the following structures:

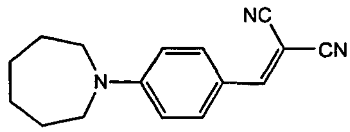 , 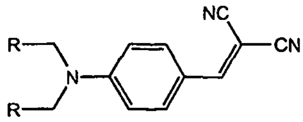 , 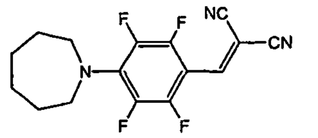

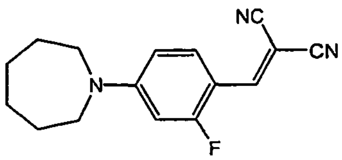 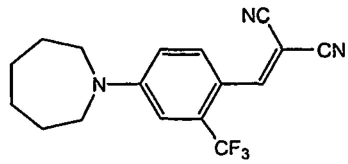 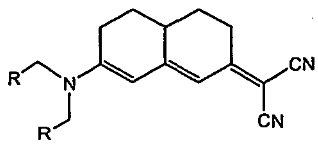

wherein R is a group selected from the group consisting of a hydrogen atom, a linear alkyl group with up to 10 atoms, a branched alkyl group with up to 10 atoms, and an aromatic group with up to 10 carbons.

Furthermore, as another mixable chromophore, a component that possesses non-linear optical properties through the polymer matrix, as is described in U.S. Patent 5,064,264 to IBM, which is incorporated herein by reference, can be used. Suitable materials are known in the art and are well described in the literature, such as in D.S. Chemla & J. Zyss, "Nonlinear Optical Properties of Organic Molecules and Crystals" (Academic Press, 1987). Also, as described in U.S. Patent 6,090,332 to Seth R. Marder et. al., fused ring bridge, ring locked chromophores that form thermally stable photorefractive compositions can be used. For typical, non-limiting examples of chromophore additives, the following chemical structure compounds can be used:

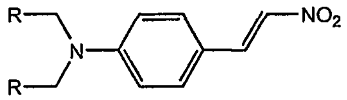 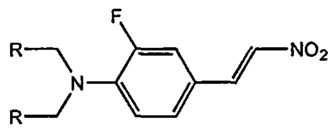 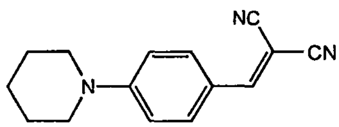

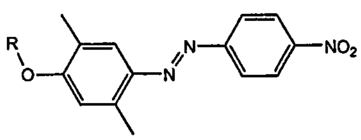 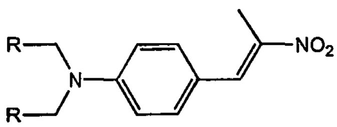

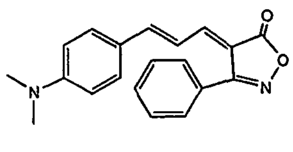 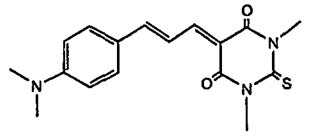 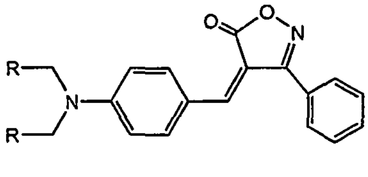

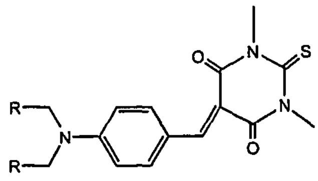

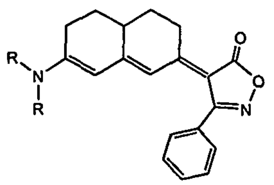

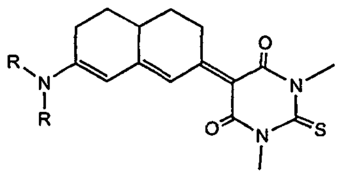

The chosen compound(s) is sometimes mixed in the matrix copolymer in a concentration of about up to 80 wt%, more preferably 40 wt%.

In this invention, another component for the photoreactive composition is a polymer as described above.

In particular, another component for the photorefarctive composition is a polymer which comprises a repeating unit including moiety selected from the group consisiting of the structures (x), (xi), and (xii): wherein

Structure (x)

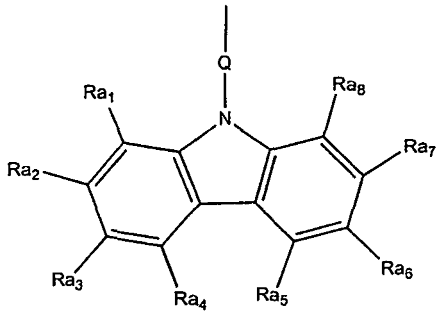

wherein Q represents an alkylene group, with or without a hetero atom, such as oxygen or sulfur, and preferably Q is an alkylene group represented by $(CH_2)p$; where p is between about 2 and 6; and wherein $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (xi)

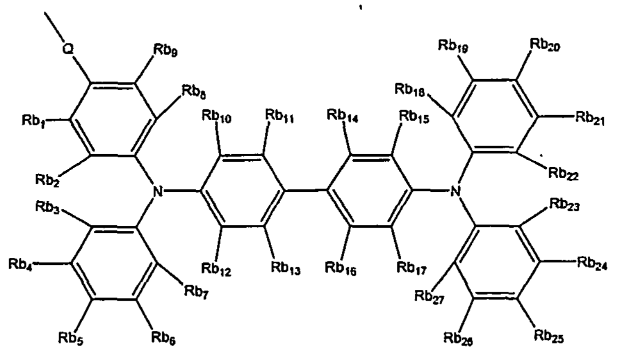

wherein Q represents an alkylene group, with or without a hetero atom, such as oxygen or sulfur, and preferably Q is an alkylene group represented by $(CH_2)p$; where p is between about 2 and 6; and wherein $Rb_1$-$Rb_{27}$ are independently selected from the group consisting of a hydrogen atom, a linear alkyl group with up to 10 carbons, a branched alkyl group with up to 10 carbons, and an aromatic group with up to 10 carbons; and

Structure (xii)

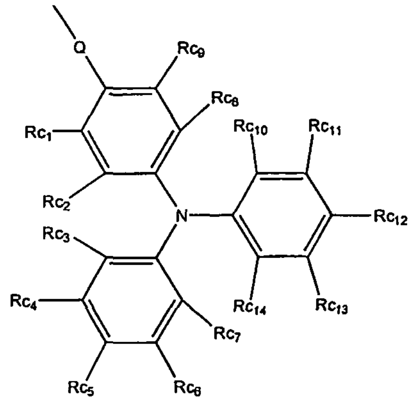

wherein Q represents an alkylene group, with or without a hetero atom, such as oxygen or sulfur, and preferably Q is an alkylene group represented by $(CH_2)p$; where p is between about 2 and 6, and wherein $Rc_1$-$Rc_{14}$ are independently selected from the group consisting of a hydrogen atom, a linear alkyl group with up to 10 carbons, a branched alkyl group with up to 10 carbons, and an aromatic group with up to 10 carbons.

In principle, essentially any polymer backbone, including, but not limited to, polyurethane, epoxy polymers, polystyrene, polyether, polyester, polyamide, polyimide, polysiloxane, and polyacrylate could be used, with the appropriate side chains attached, to make the polymer matrices of the invention.

Preferred types of backbone units are those based on acrylates or styrene. Particularly preferred are acrylate-based monomers, and more preferred are methacrylate monomers. The first polymeric materials to include photoconductive functionality in the polymer itself were the polyvinyl carbazole materials developed at the University of Arizona. However, these polyvinyl carbazole polymers tend to become viscous and sticky when subjected to the heat-processing methods typically used to form the polymer into films or other shapes for use in photorefractive devices.

In contrast, inventors' preferred materials, and particularly the (meth)acrylate-based, and more specifically acrylate-based, polymers, have much better thermal and mechanical properties. That is, they provide better workability during processing by injection-molding or extrusion, for example. This is particularly true when the polymers are prepared by radical polymerization.

Preferably, the polymer is comprised of a polymer selected from the polymer consisiting of the structures (xiii), (xiv), and (xv); wherein

Structure (xiii)

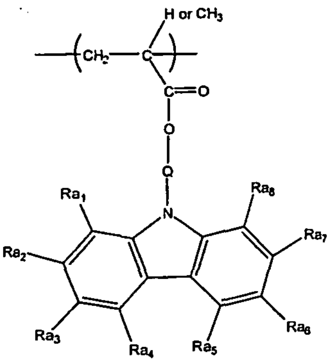

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (xiv)

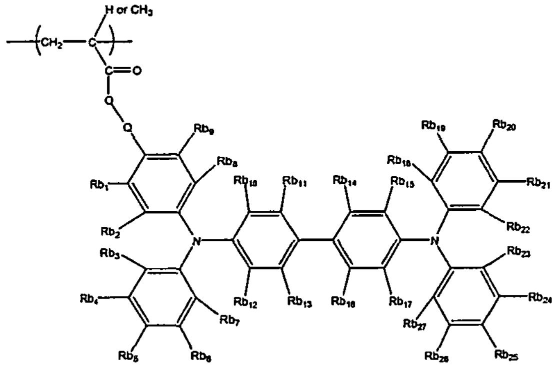

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (xv)

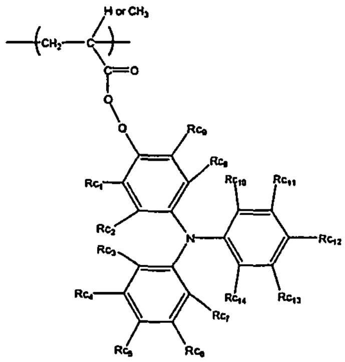

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons.

This polymer component may be created using the methods described for polymers above and may incorparotate components and properties of the polymers described above.

The polymer of the current invention can be also comprised of a copolymer which consists of both repeating unit selected from the structures (xiii), (xiv), and (xv) and the repeating unit of the structures (xvi); wherein

Formula (xvi)

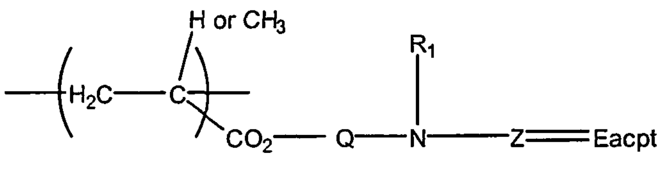

wherein Q, $R_1$, Z and Eacpt are the same meaning as in formula (iii) or (iv).

Particular examples of monomers including a chromophore group as the non-linear optical component are N-ethyl, N-4-dicyanomethylidenyl acrylate and N-ethyl, N-4-dicyanomethylidenyl-3, 4, 5, 6, 10-pentahydronaphtylpentyl acrylate.

The copolymer matrix is preferably synthesized from a monomer incorporating both one of the monomer which has the above group consisiting of the structures (xiii), (xiv), and (xv): and one of the above group consisiting of the structures (xvi): .

To prepare the non-linear optical containing copolymer, monomers that have side-chain groups possessing

non-linear-optical ability should be used. Non-limiting examples of monomers that may be used are those containing the following chemical structures:

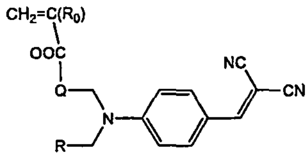
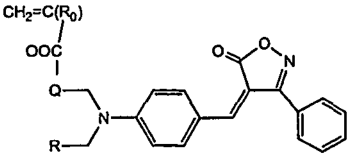
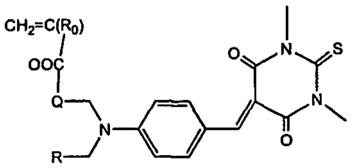

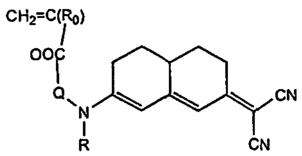
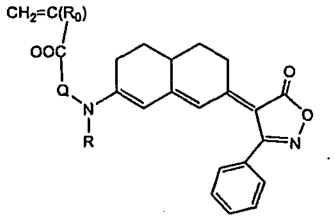
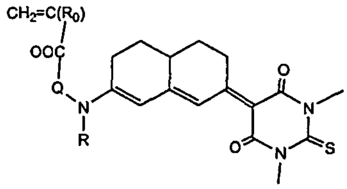

wherein Q represents an alkylene group with or without a hetero atom, such as oxygen or sulfur, and preferably Q is an alkylene group represented by $(CH_2)p$; where p is between about 2 and 6; $R_0$ is a hydrogen atom or methyl group, and R is a linear or branched alkyl group with up to 10 carbons; and preferably R is a alkyl group which is selected from methyl, ethyl, and propyl.

Again, interestingly, inventors found this invention chromophore which has formulae (i) or (ii) in the above description gave good phase stabilities and gave no haziness even after several months, although no clear reasons. On the other hand, this invention chromophores which are mixtures of formulae (i), (ii), (iii), or (iv) in the above description gave good phase stabilities and gave no haziness even after several months. It is generally known that an existence of several different crystal compositions is likely to be prevent from each composition crystallization. Maybe, this kind of general tendency makes the composition better phase stability and less hazy and unstable.

This good phase stabilities of this invention last more than a day or a week, or sometimes more than six months. Also, even by heating up the testing samples, which usually enhance phase separation speed, the samples showed very good phase stability for more than a day or a week, or sometimes more than six months. This good phase stability can facilitate the invention copolymer into optical device applications for more commercial products. For acceleration tests, heating test temperature have no restriction, but usually, the temperature is between 40 and 120 °C, preferably between 60 and 80 °C.

The invention is now further described by the following examples, which are intended to be illustrative of the invention, but are not intended to limit the scope or underlying principles in any way.

EXAMPLES

*Production Example 1*

<u>(a) Monomers containing charge transport groups</u>

Two types of charge transport monomers were purchased from Fuji Chemical, Japan:

(i) a carbazole-type monomer (3-carbazolylpropyl acrylate), and
(ii) a triphenyl diamine type (N-[acroyloxypropylphenyl]-N, N', N'-triphenyl-(1,1'-biphenyl)-4,4'-diamine) (TPD acrylate). The TPD acrylate type monomer had the structure:

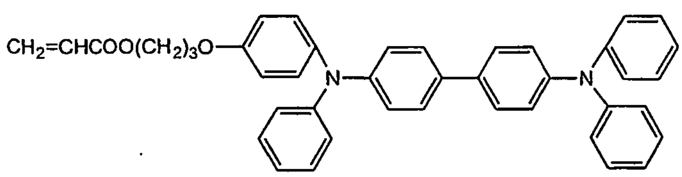

These monomers were custom-prepared for us by using the scheme below in which standard abbreviations for reagents and catalysts are used.

(i) Carbazole-type monomer:

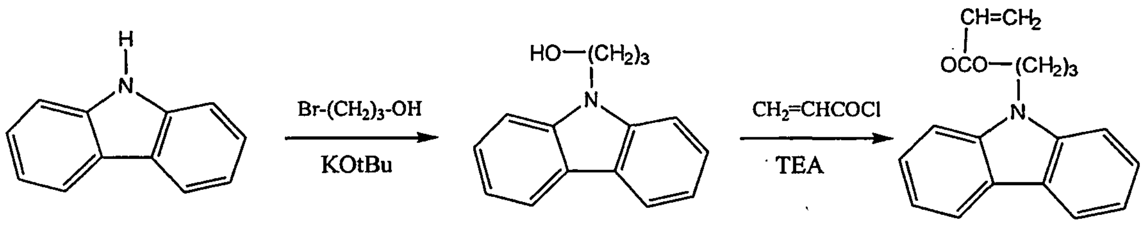


(ii) TPD-type monomer:

TPD acrylate monomer was prepared by the following procedure.

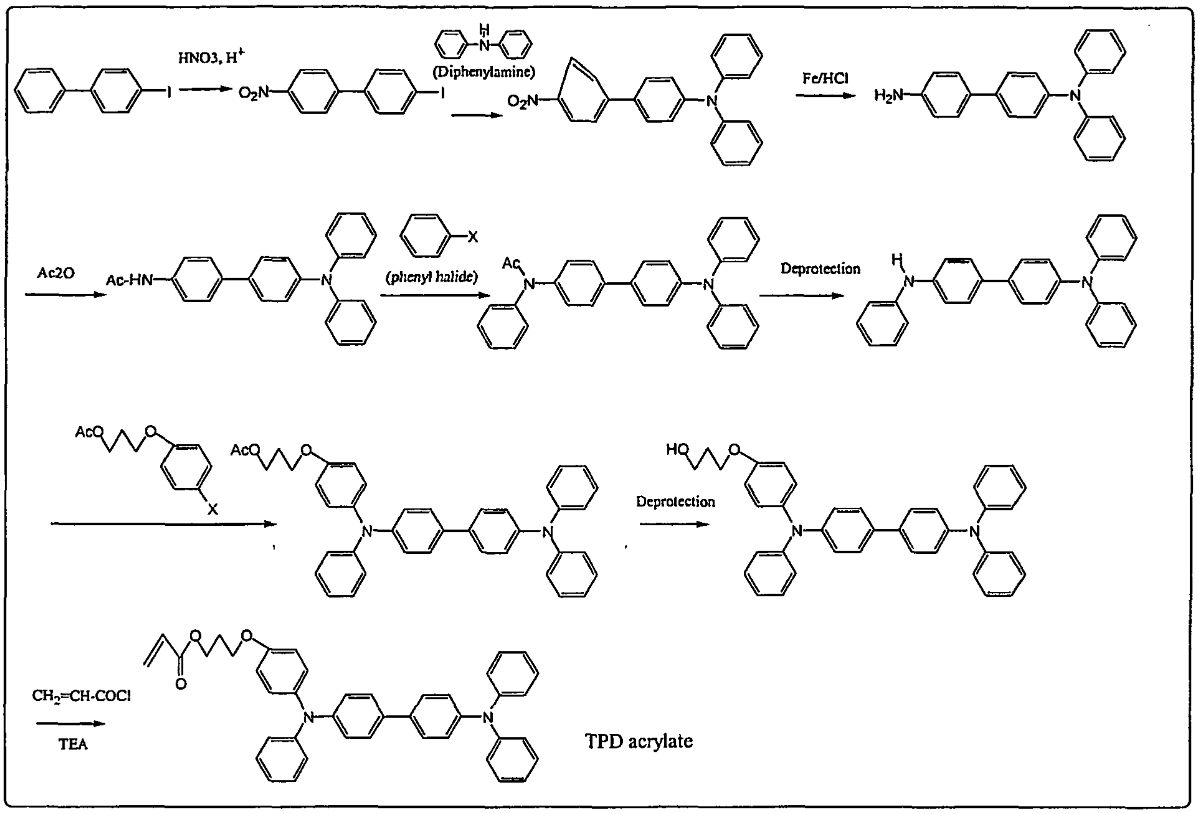


In the above procedure, usage of 3-methyl diphenylamine instead of diphenylamine and 3-methylphenyl halide instead of phenyl halide can result in the formation of N(acroyloxypropylphenyl)-N'-phenyl-N,N'-di(3-methylphenyl)-(1,1'-biphenyl)-4,4'-diamine.

<u>(b) Monomers containing non-linear-optical groups</u>

The non-linear-optical precursor monomer 5-[N-ethyl-N-4-formylphenyl]aminopentyl acrylate was synthesized according to the following synthesis scheme:

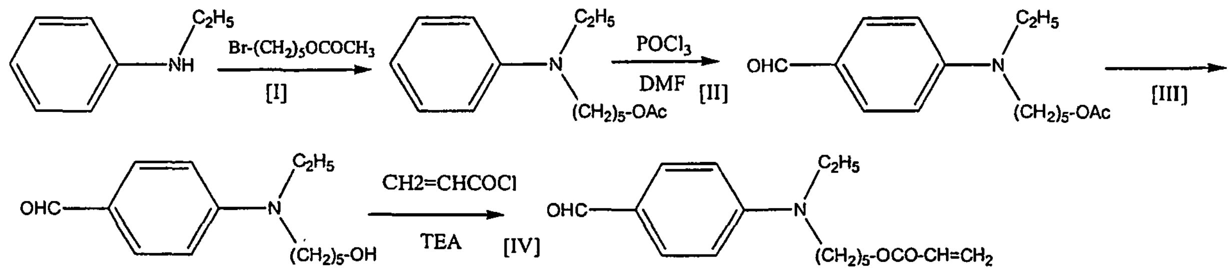


STEP I :

Into bromopentyl acetate (5mL, 30mmol) and toluene (25mL), triethylamine (4.2mL, 30mmol) and N-ethylaniline (4mL, 30 mmol) were added at room temperature. This solution was heated at 120°C overnight. After cooling down, the reaction mixture was rotary-evaporated. The residue was purified by silica gel chromatography (developing solvent: hexane/acetone=9/1). An oily amine compound was obtained. (Yield: 6.0g (80%))

STEP II:

Anhydrous DMF (6mL, 77.5mmol) was cooled in an ice-bath. Then, $POCl_3$ (2.3mL, 24.5mmol) was added dropwise into the 25 mL flask, and the mixture was allowed to come to room temperature. The amine compound (5.8g, 23.3mmol) was added through a rubber septum by syringe with dichloroethane. After stirring for 30 min., this reaction mixture was heated to 90°C and the reaction was allowed to proceed for overnight under an argon atmosphere.
On the next day, the reaction mixture was cooled, and poured into and extracted by ether. The ether layer was washed with potassium carbonate solution and dried over anhydrous magnesium sulfate. After removing the magnesium sulfate, the solvent was removed and the residue was purified by silica gel chromatography (developing solvent: hexane/ethyl acetate=3/1). An aldehyde compound was obtained. (Yield: 4.2g (65%))

STEP III:

The aldehyde compound (3.92g, 14.1mmol) was dissolved with methanol (20mL). Into this, potassium carbonate (400mg) and water (1mL) were added at room temperature and the solution was stirred overnight. On the next day, the solution was poured into brine water and extracted by ether. The ether layer was dried over anhydrous magnesium sulfate. After removing the magnesium sulfate, the solvent was removed and the residue was purified by silica gel chromatography (developing solvent: hexane/acetone=1/1). An aldehyde alcohol compound was obtained. (Yield: 3.2g (96%))

STEP IV:

The aldehyde alcohol (5.8g, 24.7mmol) was dissolved with anhydrous THF (60mL). Into this, triethylamine (3.8mL, 27.1mmol) was added and the solution was cooled by ice-bath. Acrolyl chloride (2.1mL, 26.5mmol) was added and the solution was maintained at 0°C for 20 minutes. Thereafter, the solution was allowed to warm up to room temperature and stirred at room temperature for 1 hour, at which point TLC indicated that all of the alcohol compound had disappeared. The solution was poured into brine water and extracted by ether. The ether layer was dried over anhydrous magnesium sulfate. After removing the magnesium sulfate, the solvent was removed and the residue acrylate compound was purified by silica gel chromatography (developing solvent: hexane/acetone=1/1). The compound yield was 5.38g (76%), and the compound purity was 99% (by GC).

<u>(c) Polymerization initiator ethylene bis(2-bromo (chloro)-2-methylpropionate) (Br-BMP)</u>

The polymerization initiator ethylene bis(2-bromo (chloro)-2-methylpropionate) (Br-BMP) was synthesized in the following manner. First, anhydrous ethylene glycol (5g, 81mmol), triethylamine (17.2 g, 170 mmol), pyridine (1mL, 12mmol), and THF (50 mL) were charged into a reaction vessel. To the mixture, 2-bromopropionic acid bromide (42.0g, 171 mmol) was added, and the reaction vessel was cooled over an ice bath to suppress an exothermic reaction.
The reaction was allowed to run to completion overnight, and the resulting precipitate was removed by filtration. To the filtrate, ethyl acetate (200 mL) and saturated brine (150 mL) were added. The mixture was then allowed to stand for a few minutes. The resulting upper ethyl acetate layer was washed twice with diluted hydrochloric acid and then three times with saturated brine (150 mL), and then dried with anhydrous magnesium sulfate. Magnesium sulfate was removed,

and the ethyl acetate was then distilled off under reduced pressure to obtain a crude product.

The crude product thus obtained was purified by silica gel chromatography (developing solvent: 1/1 mixture of ethyl acetate and hexane) to obtain Br-BMP as the desired product. The yield of Br-BMP was 24.2 g (83% by weight).

(d) Synthesis of non-linear-optical chromophore 7-DCST

The non-linear-optical precursor 7-DCST (7 member ring dicyanostyrene, 4-homopiperidinobenzylidene malononitrile) was synthesized according to the following two-step synthesis scheme:

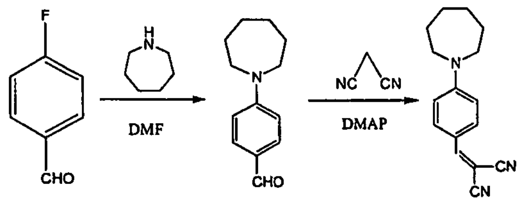


A mixture of 4-fluorobenzaldehyde (17.8 g, 143 mmol), homopiperidine (15.0g, 151mmol), lithium carbonate (55g, 744 mmol), and DMF (100mL) was stirred at 50°C for 16 hr. Water (500mL) was added to the reaction mixture. The products were extracted with ether (1L). After removal of ether, the crude products were purified by silica gel column chromatography using hexanes-ethyl acetate (9:1) as eluent. 4-(Dimethylamino)pyridine (100mg, 0.82mmol) was added to a solution of the 4-homopiperidinobenzaldehyde (18.2g, 89.5mmol) and malononitrile (9.1g, 137.8mmol) in methanol (60mL). The reaction mixture was kept at room temperarture and the product was collected by filtration and purified by recrystallization from dichloromethane. Yield (17.1g, 48%)

(e) Other materials

Beside the above monomers and initiator, other chemicals, such as copper bromide, bipyridine and ethyl 2-bromo-2-methylpropionate, were purchased from Aldrich Chemicals, Milwaukee, WI.

*Production Example 2*

Preparation of Charge Transport Homopolymer (TPD acrylate type)

N-[(meth)acroyloxypropylphenyl]-N, N', N'-triphenyl-(1,1'-biphenyl)-4,4'-diamine (TPD acrylate) (6.2 g, 10mmol), bipyridine (156mg, 1.0mmol; as a ligand), and butyl acetate (6mL) were put into a three-necked flask. After purging by argon gas for 1 hour, ethyl 2-bromo-2-methylpropionate (78mg, 0.40mmol); as a polymerization initiator) dissolved with butyl acetate (1mL) and CuBr (57mg, 0.40mmol; as transition metal catalyst) were added into this solution. Then, the solution was heated to 110°C, while continuing to purge with argon gas.

After 18 hrs polymerization, the polymer solution was diluted with toluene, and then filtered to remove non-dissolved impurities. The polymer was precipitated from the solution by adding methanol, the resulting polymer precipitate was collected and washed in diethyl ether and methanol. The white polymer powder was collected and dried. The yield of polymer was essentially 100%.

The weight average and number average molecular weights were measured by gel permeation chromatography, using a polystyrene standard. The results were Mn=7,580, Mw=8,940. Therefore, the polydispersity of the polymer, Mw/Mn, was 1.16, a very low value.

*Production Example 3*

Preparation of Charge Transport Homopolymer (TPD acrylate type)

The polymerization process of Production Example 2 was repeated with the same reagents and conditions, except that in this case (i) the amount of TPD acrylate used was 6.0 g, 9.73mmol, (ii) the amount of bipyridine ligand used was 60mg, 0.384mmol, and (iii) the amount of ethyl 2-bromo-2-methyl propionate initiator used was 30mg, 0.154mmol.

The process yield was again essentially 100%. As before, the weight average and number average molecular weights were measured by gel permeation chromatography, using a polystyrene standard. The results were Mn=13,780, Mw=16,430. The polydispersity Mw/Mn was again below 2, at 1.35.

*Production Example 4*

Preparation of Non-Linear Optical Homopolymer by Polymerization of Non-Linear-Optical Precursor Monomer

Into a four-necked flask equipped with a mechanical stirrer, a nitrogen inlet, a condenser, and a rubber septum were put the non-linear-optical precursor monomer 5-[N-ethyl-N-4-formylphenyl]amino-pentyl acrylate (1.2g, 4.15mmol), prepared as described in Example 1, bipyridine (75mg, 0.48mmol), and toluene(6mL). After purging by argon gas for 1 hr, Br-BMP (36mg, 0.10mmol) dissolved with toluene (1mL) and CuBr (29mg, 0.20mmol) were added into this solution. The solution was then heated to 110°C, while continuing to purge with argon gas.

The polymerization reaction was allowed to proceed with stirring for another 18 hrs. The resulting polymer solution was diluted with toluene, followed by filtration to remove catalyst-related impurities and polymer precipitation into methanol. The precipitated polymer was collected and washed in methanol. The polymer yield was essentially 100%. As before, the weight average and number average molecular weights were measured by gel permeation chromatography, using a polystyrene standard. The results were Mn=3,510, Mw=8,380, giving a polydispersity of 2.39.

To form the polymer with non-linear-optical capability, the precipitated precursor polymer (400mg) was dissolved with chloroform (2mL). Into this solution, dicyanomalonate (110 mg, 1.66mmol) and dimethylaminopyridine (4 mg, 0.033mmol) were added, and the reaction was allowed to proceed overnight at 40°C. As before, the polymer was recovered from the solution by filtration of impurities, followed by precipitation into methanol, washing and drying.

*Production Example 5*

Preparation of B-A-B Type Block Copolymer

A block copolymer of the type B-A-B, where B represents a block having non-linear-optical ability and A represents a block having charge transport ability, was prepared. The A polymer blocks comprised TPD acrylate of the same structure as described in Production Example 2 and Production Example 3 above and the B polymer blocks comprised polyacrylate of the same structure described in Production Example 4 above.

Into a four-necked flask equipped with a mechanical stirrer, a nitrogen inlet, a condenser, and rubber septum were put TPD acrylate (2.07g, 3.36mmol), bipyridine (80mg, 0.512mmol), and butyl acetate (6mL). After purging by argon gas for hr, Br-BMP (44mg, 0.112mmol) dissolved with butyl acetate (1mL) and CuBr (35mg, 0.244mmol) were added into this solution. The solution was then heated to 110°C, while continuing to purge with argon gas.

Conversion rate (monomer consumption) was checked by H-NMR, in which signal integration ratio of monomer and polymer related signals were used for estimating conversion. After 18 hrs, the conversion rate (monomer consumption) was over 90%.

At this point, the second monomer, 5-[N-ethyl-N-4-formylphenyl]amino-pentyl acrylate (the precursor monomer for the non-linear-optical component) (1.6g, 5.53mmol) was added. The solution was stirred for another 18 hrs, then diluted with toluene, followed by filtration to remove catalyst-related impurities, and polymer precipitation into methanol. The precipitated polymer was collected and washed in diethyl ether and methanol.

To convert the precursor groups in the B blocks to groups with non-linear-optical ability, the precipitate (1.0g) was dissolved with $CDCl_3$ (5mL). Into this solution, dicyanomalonate (200 mg, 3.0mmol) and dimethylaminopyridine (10 mg, 0.082mmol) were added, and the resulting solution was stirred overnight at 40°C. The polymerization reaction was allowed to proceed, and the resulting polymer solution was diluted with toluene, followed by filtration to remove catalyst-related impurities and polymer precipitation into methanol. The precipitated polymer was collected an d washed in methanol. The polymer yield was essentially 100%.

As before, the weight average and number average molecular weights were measured by gel permeation chromatography, using a polystyrene standard. The results were Mn= 9,041, Mw= 12,434, giving a polydispersity of 1.38.

*Example 1*

Preparation of Photorefractive Composition

A photorefractive composition testing sample was prepared. The components of the composition were as follows:

| | |
|---|---|
| (i) Charge Transport Homopolymer (TPD acrylate type) prepared in Production Example 2 | 54.5 wt% |
| (ii) Purchased chromophore powder of 7-DCST | 30 wt% |
| (iii) Purchased ethylcarbazole plasticizer | 15 wt% |

(continued)

| | |
|---|---|
| (iv) Purchased C60 sensitizer (MER, Tucson, AZ) | 0.5 wt% |

To prepare the composition, the components listed above were dissolved with toluene and stirred overnight at room temperature. After removing the solvent by rotary evaporator and vacuum pump, the residue was scratched and gathered.

To make testing samples, this powdery residue mixture was put on a slide glass and melted at 150 °C to make a 200-300 μm thickness film, or pre-cake. Small portions of this pre-cake were taken off and sandwiched between indium tin oxide (ITO) coated glass plates separated by a 105 μm spacer to form the individual samples.

*Measurement 1*

Diffraction Efficiency

The diffraction efficiency was measured at 633 nm by four-wave mixing experiments. Steady-state and transient four-wave mixing experiments were done using two writing beams making an angle of 20.5 degree in air; with the bisector of the writing beams making an angle of 60 degree relative to the sample normal. The resulting grating period for this geometry was 3.1 μm; the grating vector was directed at 60 degree relative to the sample normal.

For the four-wave mixing experiments, two s-polarized writing beams with equal intensity of 0.2 $W/cm^2$ in the sample were used; the spot diameter was 600 μm. A p-polarized beam of 1.7 $mW/cm^2$ counter propagating with respect to the writing beam nearest to the surface normal was used to probe the diffraction gratings; the spot diameter of the probe beam in the sample was 500 μm. The diffracted and the transmitted probe beam intensities were monitored to determine the diffraction efficiency. The results are given in Table 1.

*Measurement 2*

Response Time

The diffraction efficiency were measured as a function of the applied field, using a procedure similar to that described in Measurement 1, by four-wave mixing experiments at 633 nm with s-polarized writing beams and a p-polarized probe beam. The angle between the bisector of the two writing beams and the sample normal was 60 degree and the angle between the writing beams was adjusted to provide a 3.1 μm grating spacing in the material (~20 degree). The writing beams had equal optical powers of 0.45$mW/cm^2$, leading to a total optical power of 0.5 mW on the polymer, after correction for reflection losses. The beams were collimated to a spot size of approximately 500 μm. The optical power of the probe was 4 mW. The measurement of the grating buildup time were done as follows: an electric field of 40 V/μm was applied to the sample, and the sample was illuminated with one of the two writing beams and the probe beam for 100 ms. Then, the evolution of the diffracted beam was recorded. The response time was estimated as the time based on the equation as described in this specification, in which the smaller number is defined as the response time between $J_1$ and $J_2$.

*Measurement 3*

Photoconductivity

The photoconductivity of a testing sample was determined. For these measurements, an electric field ($E_a$) was applied by means of a variable high voltage supply, and the resulting current ($i_{dark}$) was measured. To assure steady-state conditions, a dwell time of 15 s between each data reading was used. The applied electric field was swept from 0 to 76 V/μm over a period of 8 min. The current was measured using a Keithley 6517A electrometer. A computer-controlled set-up allowed a typical noise floor of 1 pA.

To determine the steady state photoconductivity, a single horizontally polarized beam at 633-nm was focused onto the sample. The focused beam had a spot size of 260 μm. The sample was illuminated at an intensity of 1$W/cm^2$ over a period of 8 min, while the applied voltage remains fixed. As in the dark conductivity experiments, 16 s dwell time was used between readings. The photoconductivity, $\Phi_{photo}$, was calculated using the following relation:

$$\Phi_{photo} = (i_{photo} - i_{dark}) / A_{beam} E_a$$

(where $\mathbf{E_a}$ is the applied electric field, $\mathbf{A_{beam}}$ is the illuminated area, $i_{photo}$ is electric current with laser irradiation, and $i_{dark}$ is electric current without irradiation)
Representative results are given in Table 1.

*Example 2*

A photorefractive composition was obtained in the same manner as in the Example 1 except that TPD-type homopolymer prepared in Production Example 3 was used and composition ratio was changed to the ratio as described in Table 1. The results of the above measurements 1 to 3 are given in Table 1.

*Example 3*

A photorefractive composition was obtained in the same manner as in the Example 1 except that B-A-B-type copolymer prepared in Production Example 5 was used, composition ratio was changed to the ratio as described in Table 1, and TPD acrylate monomer as a plascticizer was used instead of ethylcarbazole plasticizer. The results of the above measurements 1 to 3 are given in Table 1.

*Example 4*

Preparation of Charge Transport Homopolymer (TPD acrylate type)

N-[(meth)acroyloxypropylphenyl]-N, N', N'-triphenyl-(1,1'-biphenyl)-4,4'-diamine (TPD acrylate) (6.0 g, 9.7 mmol), bipyridine (60 mg, 0.38 mmol), and butyl acetate (3 mL) were put into a three-necked flask. After purging by argon gas for 1 hour, ethyl 2-bromo-2-methylpropionate (30 mg, 0.154mmol) dissolved with butyl acetate (1mL) and CuBr (22mg, 0.154 mmol) were added into this solution. Then, the solution was heated to 110°C, while continuing to purge with argon gas.

After 18 hrs polymerization, the polymer solution was diluted with toluene, and then filtered to remove non-dissolved impurities. The polymer was precipitated from the solution by adding methanol, the resulting polymer precipitate was collected and washed in diethyl ether and methanol. The white polymer powder was collected and dried. the yield of polymer was essentially 100%.

The weight average and number average molecular weights were measured by gel permeation chromatography, using a polystyrene standard. The results were Mn=12,170, Mw=16,430. Therefore, the polydispersity of the polymer, Mw/Mn, was 1.35, a very low value.

A photorefractive composition testing sample was prepared. The components of the composition were as follows:

| | |
|---|---|
| (i) The above charge transport homopolymer | 49.5 wt% |
| (ii) Chromophore powder of 7-DCST | 35 wt% |
| (iii) Purchased ethylcarbazole plasticizer | 15 wt% |
| (iv) Purchased C60 sensitizer (MER, Tucson, AZ) | 0.5 wt% |

The results of the above measurements 1 to 3 are given in Table 1.

*Example 5*

Preparation of Random Copolymer

A random copolymer of charge transport ability and non-linear-optical ability monomers, was prepared. The charge transport ability monomer comprised TPD acrylate of the same structure as described in Production Examples 2 above and the non-linear-optical ability monomer comprised monomer of the same structure described in Production Example 4 above.

Into a four-necked flask equipped with a mechanical stirrer, a nitrogen inlet, a condenser, and rubber septum were put 5-[N-ethyl-N-4-formylphenyl]amino-pentyl acrylate (the precursor monomer for the non-linear-optical component) (0.55 g, 1.90 mmol), TPD acrylate (2.75 g, 4.46 mmol), , bipyridine (110mg, 0.70 mmol), and toluene (8 mL). After purging by argon gas for hr, Br-BMP (54mg, 0.149 mmol) dissolved with butyl acetate (1mL) and CuBr (43 mg, 0.297 mmol) were added into this solution. The solution was then heated to 90°C, while continuing to purge with argon gas.

Conversion rate (monomer consumption) was checked by H-NMR, in which signal integration ratio of monomer

and polymer related signals were used for estimating conversion. After 18 hrs, the conversion rate (monomer consumption) was over 95%.

To convert the precursor groups, the precipitate (3.0g) was dissolved with $CDCl_3$ (12 mL). Into this solution, dicyanomalonate (570 mg, 8.6 mmol) and dimethylaminopyridine (30 mg, 0.246 mmol) were added, and the resulting solution was stirred overnight at 40°C. The polymerization reaction was allowed to proceed, and the resulting polymer solution was diluted with toluene, followed by filtration to remove catalyst-related impurities and polymer precipitation into methanol. The precipitated polymer was collected and washed in methanol. The polymer yield was essentially 100%.

As before, the weight average and number average molecular weights were measured by gel permeation chromatography, using a polystyrene standard. The results were Mn= 9,973, Mw=14,577, giving a polydispersity of 1.46.

A photorefractive composition testing sample was prepared. The components of the composition were as follows:

| | |
|---|---|
| (i) The above copolymer | 59.5 wt% |
| (ii) Chromophore powder of 7-DCST | 29 wt% |
| (iii) Synthesized TPD-Ac | 11 wt% |
| (iv) Purchased C60 sensitizer (MER, Tucson, AZ) | 0.5 wt% |

The results of the above measurements 1 to 3 are given in Table 1.

<u>Synthesis of the above plascticizer TPD-Ac</u>

The plascticizer TPD-Ac was synthesized from the same intermediate which was used for TPD acrylate synthesis according to the following one-step synthesis scheme:

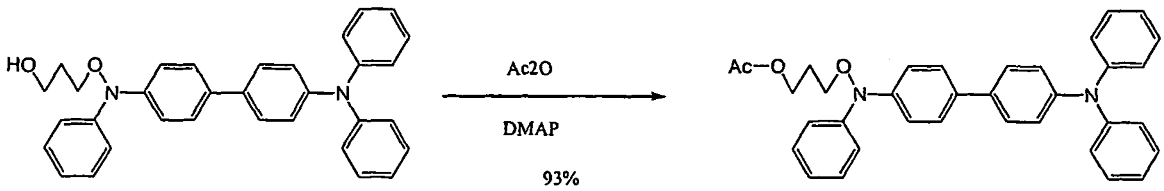


TPD alochol (2.8 g, 5.0 mmol), which was one intermediate for TPD Acrykate monomer, was dissolved with dichloromethane (10 mL). Into this solution, acetic anhydride (0.8 mL, 10.6mmol) and 4-(Dimethylamino)pyridine (100mg, 0.82mmol) were added and stirred at 50°C for 16 hr. Water (5mL) was added to the reaction mixture. The products were extracted with dichloromethane (10 mL). After removal of dichloromethane, the crude products were purified by silica gel column chromatography using hexanes-ethyl acetate (1:1) as eluent. The product was collected. Yield (2.97 g, 93%)

*Comparative Example 1*

A poly(n-vinylcarbazole) (Aldrich Chemicals, Milwaukee, WI) was purchased. A photorefractive composition was obtained in the same manner as in the Example 1 except that poly(n-vinylcarbazole) was used and composition ratio was changed to the ratio as described in Table 1. The results of the measurements 1 to 3 are given in Table 1.

TABLE 1

| Sample Number | Example 1 | Example 2 | Example 3 | Example 4 | Example 5 | Comparative Example 1 (Purchased PVK) |
|---|---|---|---|---|---|---|
| Sample composition (wt%): | | | | | | |
| Polymer | 54.5 | 49.5 | 59.5 | 49.5 | 59.5 | 49.5 |
| Chromophore 7-DCST | 30 | 35 | 29 | 35 | 29 | 35 |
| Plasticizer | 15 | 15 | 11 | 15 | 11 | 15 |

(continued)

| Sample Number | Example 1 | Example 2 | Example 3 | Example 4 | Example 5 | Comparative Example 1 (Purchased PVK) |
|---|---|---|---|---|---|---|
| Sample composition (wt%): | | | | | | |
| Photoconductivity (pS/cm) at 40 V/μm and $1W/cm^2$ | 1,250 | 303 | NA | 1,200 | NA | 11 |
| Diffraction efficiency | 5(%) at 40V/μm | 24(%) at 40V/μm | 16.5(%) at 40V/μm | 50(%) at 75V/μm | 43(%) at 60V/μm | 22(%) at 40V/μm |
| Peak diffraction efficiency | 70(%) at 50V/μm | 60(%) at 60V/μm | NA | NA | NA | NA |
| Response time | 31(ms) at 71V/μm | 8.4(ms) at 71V/μm | 15.7(ms) at 60V/μm | 18(ms) at 75V/μm | 22(ms) at 60V/μm | 50(ms) at 60V/μm |

*Production Example 6*

(a) Monomers containing charge transport groups

This process is the same as (a) of *Production Example 1.*

(b) Monomers containing non-linear-optical groups

This process is the same as (b) of *Production Example 1.*

(c) Polymerization initiator ethylene bis(2-bromo (chloro)-2-methylpropionate) (Br-BMP)

This process is the same as (c) of *Production Example 1.*

(d) Synthesis of non-linear-optical chromophore 7-DCST

This process is the same as (d) of *Production Example 1.*

(e) Synthesis of plasticizer TPD-Ac

The plascticizer TPD-Ac was synthesized from the same intermediate which was used for TPD acrylate synthesis according to the following one-step synthesis scheme:

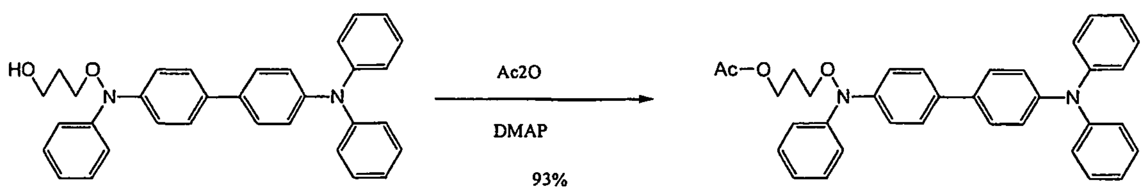


TPD alochol (2.8 g, 5.0 mmol), which was one intermediate for TPD Acrylate monomer, was dissolved with dichloromethane (10 mL). Into this solution, acetic anhydride (0.8 mL, 10.6mmol)) and 4-(Dimethylamino)pyridine (100mg, 0.82mmol) were added and stirred at 50°C for 16 hr. Water (5mL) was added to the reaction mixture. The products were extracted with dichloromethane (10 mL). After removal of dichloromethane, the crude products were purified by silica gel column chromatography using hexanes-ethyl acetate (1:1) as eluent. The product was collected. Yield (2.97 g, 93%)

(f) Other materials

Besides the above monomers and initiator, other chemicals, such as copper bromide, bipyridine and ethyl 2-bromo-2-methylpropionate, were purchased from Aldrich Chemicals, Milwaukee, WI.

*Production Example 7*

Preparation of Copolymer by Azo Initiator Polymerization of Charge Transport Monomer and Non-Linear-Optical Precursor Monomer (TPD Acrylate / Chromophore Type)

The charge transport monomer N-[(meth)acroyloxypropylphenyl]-N, N', N'-triphenyl-(1,1'-biphenyl)-4,4'-diamine (TPD acrylate) (2.5 g, 4.1mmol) and the non-linear-optical precursor monomer 5-[N-ethyl-N-4-formylphenyl]aminopentyl acrylate (0.75 g, 2.6 mmol), prepared as described in Production Example 1 were put into a three-necked flask. After toluene (9.8 g) was added and purged by argon gas for 1 hour, azoisobutylnitrile (9.4 mg) was added into this solution. Then, the solution was heated to 65 °C, while continuing to purge with argon gas.

After 18 hrs polymerization, the polymer solution was diluted with toluene. The polymer was precipitated from the solution and added to methanol, then the resulting polymer precipitate was collected and washed in diethyl ether and methanol. The white polymer powder was collected and dried. The yield of polymer was essentially 100%.

As before, the weight average and number average molecular weights were measured by gel permeation chromatography, using a polystyrene standard. The results were Mn= 17,462, Mw= 34,044, giving a polydispersity of 1.95.

To form the polymer with non-linear-optical capability, the precipitated precursor polymer (2.5 g) was dissolved with chloroform (12mL). Into this solution, dicyanomalonate (1.0 g, 15.1 mmol) and dimethylaminopyridine (40 mg, 0. 33mmol) were added, and the reaction was allowed to proceed overnight at 40°C. As before, the polymer was recovered from the solution by filtration of impurities, followed by precipitation into methanol, washing and drying.

*Production Example 8*

Preparation of Copolymer by AIBN Radical Polymerization of Charge Transport Monomer and Non-Linear-Optical Precursor Monomer (TPD Acrylate / Chromophore Type)

The charge transport monomer N-[(meth)acroyloxypropylphenyl]-N, N', N'-triphenyl-(1,1'-biphenyl)-4,4'-diamine (TPD acrylate) (5.5 g, 8.9mmol) and the non-linear-optical precursor monomer 5-[N-ethyl-N-4-formylphenyl]aminopentyl acrylate (1.10 g, 3.8 mmol), prepared as described in Production Example 1 were put into a three-necked flask. After toluene (15.4 g) was added and purged by argon gas for 1 hour, azoisobutylnitrile (30 mg) was added to this solution. The solution was then heated to 65 °C, while continuing to purge with argon gas.

After 18 hrs polymerization, the polymer solution was diluted with toluene. The polymer was precipitated from the solution and added to methanol, the resulting polymer precipitate was collected and washed in diethyl ether and methanol. The white polymer powder was collected and dried. The yield of polymer was essentially 100%.

As before, the weight average and number average molecular weights were measured by gel permeation chromatography, using a polystyrene standard. The results were Mn= 18,255, Mw= 34,617, giving a polydispersity of 1.90.

To form the polymer with non-linear-optical capability, the precipitated precursor polymer (5.5 g) was dissolved with chloroform (22mL). Into this solution, dicyanomalonate (1.06 g, 16.1 mmol) and dimethylaminopyridine (56 mg, 0. 46mmol) were added, and the reaction was allowed to proceed overnight at 40°C. As before, the polymer was recovered from the solution by filtration of impurities, followed by precipitation into methanol, washing and drying.

*Production Example 9*

Preparation of Copolymer by AIBN Radical Polymerization of Charge Transport Monomer, Non-Linear-Optical Precursor Monomer, and Plasticizer Monomer (TPD Acrylate / Chromophore / Plasticizer Type)

The charge transport monomer N-[(meth)acroyloxypropylphenyl]-N, N', N'-triphenyl-(1,1'-biphenyl)-4,4'-diamine (TPD acrylate) (2.1 g, 3.4 mmol), the non-linear-optical precursor monomer 5-[N-ethyl-N-4-formylphenyl]aminopentyl acrylate (0.63 g, 2.2 mmol), prepared as described in Production Example 1, and 2-ethylhexyl acrylate (0.14 g, 0.78 mmol) were put into a three-necked flask. After toluene (6.7 g) was added and purged with argon gas for 1 hour, azoisobutylnitrile (9.2 mg) was added into this solution. The solution was then heated to 65 °C, while continuing to purge with argon gas.

After 18 hrs polymerization, the polymer solution was diluted with toluene. The polymer was precipitated from the solution by adding to methanol, the resulting polymer precipitate was collected and washed in diethyl ether and

methanol. The white polymer powder was collected and dried. The yield of polymer was essentially 100%.

As before, the weight average and number average molecular weights were measured by gel permeation chromatography, using a polystyrene standard. The results were Mn= 27,796, Mw= 61,171, giving a polydispersity of 2.20.

To form the polymer with non-linear-optical capability, the precipitated precursor polymer (2.5 g) was dissolved with chloroform (12mL). Into this solution, dicyanomalonate (0.8 g, 12.1 mmol) and dimethylaminopyridine (40 mg, 0. 33mmol) were added, and the reaction was allowed to proceed overnight at 40°C. As before, the polymer was recovered from the solution by filtration of impurities, followed by precipitation into methanol, washing and drying.

*Production Example 10*

Preparation of Copolymer by Radical Polymerization of Charge Transport Monomer and Non-Linear-Optical Precursor Monomer (TPD Acrylate / Chromophore Type)

The charge transport monomer N-[(meth)acroyloxypropylphenyl]-N, N', N'-triphenyl-(1,1'-biphenyl)-4,4'-diamine (TPD acrylate) (2.75 g, 4.46 mmol) and the non-linear-optical precursor monomer 5-[N-ethyl-N-4-formylphenyl] amino-pentyl acrylate (0.55 g, 1.90 mmol), prepared as described in Production Example 1, bipyridine (110 mg, 0.70mmol), and toluene (6mL) were put into a four-necked flask equipped with a mechanical stirrer, a nitrogen inlet, a condenser, and a rubber septum. After purged with argon gas for 1 hr, Br-BMP (54mg, 0.15mmol) dissolved with toluene (1mL) and CuBr (43 mg, 0.30mmol) were added into this solution. The solution was then heated to 90°C, while continuing to be purged with argon gas.

The polymerization reaction was allowed to proceed with stirring for another 18 hrs. The resulting polymer solution was diluted with toluene, followed by filtration to remove catalyst-related impurities and polymer precipitation into methanol. The precipitated polymer was collected and washed in methanol. The polymer yield was essentially 100%. As before, the weight average and number average molecular weights were measured by gel permeation chromatography, using a polystyrene standard. The results were Mn= 9,973, Mw= 14,577, giving a polydispersity of 1.46.

To form the polymer with non-linear-optical capability, the precipitated precursor polymer (3.0 g) was dissolved with chloroform (12mL). Into this solution, dicyanomalonate (570 mg, 8.64 mmol) and dimethylaminopyridine (30 mg) were added, and the reaction was allowed to proceed overnight at 40°C. As before, the polymer was recovered from the solution by filtration of impurities, followed by precipitation into methanol, washing and drying.

*Production Example 11*

Preparation of B-A-B Type Block Copolymer of Charge Transport Monomer and Non-Linear-Optical Precursor Monomer (TPD Acrylate / Chromophore Type)

A block copolymer of the type B-A-B, where B represents a block having non-linear-optical ability and A represents a block having charge transport ability, was prepared. The A polymer blocks comprised TPD acrylate and the B polymer blocks comprised polyacrylate which is 5-[N-ethyl-N-4-formylphenyl]amino-pentyl acrylate.

Into a four-necked flask equipped with a mechanical stirrer, a nitrogen inlet, a condenser, and rubber septum were put TPD acrylate (2.75 g, 4.46 mmol), bipyridine (110mg, 0.704 mmol), and toluene (5mL). After purged with argon gas for 1hr, Br-BMP (54mg, 0.15mmol) dissolved with butyl acetate (1mL) and CuBr (43mg, 0.30 mmol) were added into this solution. The solution was then heated to 90°C, while continuing to be purged with argon gas.

At this point, the second monomer, 5-[N-ethyl-N-4-formylphenyl]amino-pentyl acrylate (the precursor monomer for the non-linear-optical component) (0.55 g, 1.90 mmol) was added. The solution was stirred for another 18 hrs, then diluted with toluene, followed by filtration to remove catalyst-related impurities, and polymer precipitation into methanol. The precipitated polymer was collected and washed in diethyl ether and methanol.

To convert the precursor groups in the B blocks to groups with non-linear-optical ability, the precipitate (2.95 g) was dissolved with $CDCl_3$ (12 mL). Into this solution, dicyanomalonate (570 mg, 8.6 mmol) and dimethylaminopyridine (30 mg) were added, and the resulting solution was stirred overnight at 40°C. The polymerization reaction was allowed to proceed, and the resulting polymer solution was diluted with toluene, followed by filtration to remove catalyst-related impurities and polymer precipitation into methanol. The precipitated polymer was collected and washed in methanol. The polymer yield was essentially 100%.

As before, the weight average and number average molecular weights were measured by gel permeation chromatography, using a polystyrene standard. The results were Mn=9,041, Mw=12,434, giving a polydispersity of 1.38.

*Production Example 12*

Synthesis of non-linear-optical chromophore 7-FDCST

The non-linear-optical precursor 7-FDCST (7 member ring dicyanostyrene, 4-homopiperidino-2-fluorobenzylidene malononitrile) was synthesized according to the following two-step synthesis scheme:

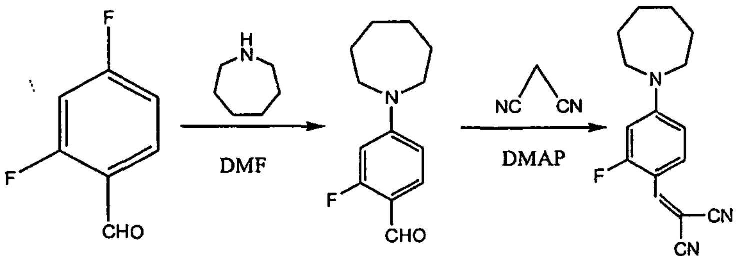


A mixture of 2,4-difluorobenzaldehyde (25 g, 176 mmol), homopiperidine (17.4 g, 176mmol), lithium carbonate (65g, 880 mmol), and DMSO (625mL) was stirred at 50°C for 16 hr. Water (50mL) was added to the reaction mixture. The products were extracted with ether (100mL). After removal of ether, the crude products were purified by silica gel column chromatography using hexanes-ethyl acetate (9:1) as eluent and crude intermediate was obtained (22.6 g,). 4-(Dimethylamino)pyridine (230mg) was added to a solution of the 4-homopiperidino-2-fluorobenzaldehyde (22.6g, 102 mmol) and malononitrile (10.1g, 153mmol) in methanol (323mL). The reaction mixture was kept at room temperature and the product was collected by filtration and purified by recrystallization from ethanol. Yield (18.1g, 38%)

Synthesis of plasticizer TPA-Ac

The plascticizer TPA-Ac was synthesized according to the following synthesis scheme:

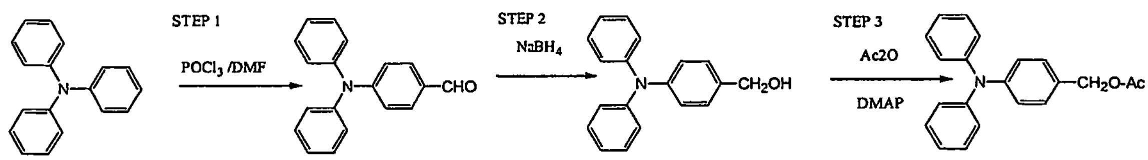


STEP 1:

To a cooled solution of DMF anhydride (17 mL) at 0 °C under Argon atomosphere, phosphorousoxychloride anhydride dropwisely (10 mL, 107.3 mmol) was added. After addition completion combined with triphenylamine (30 g, 122.3 mmol) and DMF anhydride (75 mL). Solution was heated to 80 °C overnight. Extracted the reaction mixture with water (500 mL) and $CH_2Cl_2$ (500 mL). The $CH_2Cl_2$ layer was rotary-evaporated and purified by column chromatography (7 $CH_2Cl_2$: 3 hexane). Yield was about 21.9g (66%).

STEP 2:

A mixture of above aldehyde (11.71g, 42.8 mmol), 1:1 solution of toluene and ethanol (150 mL), $NaBH_4$ (2.43g, 64.2 mmol) was stirred at room temperature under argon atmosphere. After three hours, the filtered solution was rotary-evaporated and extracted with $CH_2Cl_2$ (400 mL) and water (400 mL). The collected $CH_2Cl_2$ layer was rotary-evaporated. Yield was about 12.2g (quantitively).

STEP 3:

To a stirred solution of alcohol (12.17 g, 44.2 mmol), and pyridine (1.8 mL, 22.2 mmol), and tetrahydrafuran anhydride (100 mL) at 0 °C under argon atmosphere was added dropwisely acetic anhydride (6.2 mL, 65.7 mmol). After 45 min, let warm to ambient temperature. The reaction mixture was extracted with water (500 mL) and $CH_2Cl_2$ (500 mL). The rotary-evaporated $CH_2Cl_2$ layer was purified by column chromatography (3 ethyl Acetate: 1 hexanes). Yield was about 10.5g (75%).

*Example 6*

Preparation of Photorefractive Composition

A photorefractive composition testing sample was prepared. The components of the composition were as follows:

(i) TPD charge transport / chromophore type co-polymer (described in Production Example 2): 60 wt%

| | |
|---|---|
| (ii) Prepared chromophore powder of 7-DCST | 25 wt% |
| (iii) Prepared TPD Acetate plasticizer | 14.5 wt% |
| (iv) Purchased C60 sensitizer (MER, Tucson, AZ) | 0.5 wt% |

To prepare the composition, the components listed above were dissolved with toluene and stirred overnight at room temperature. After removing the solvent by rotary evaporator and vacuum pump, the residue was scratched and gathered.

To make testing samples, this powdery residue mixture was put on a slide glass and melted at 125 °C to make a 200-300 μm thickness film, or pre-cake. Small portions of this pre-cake were taken off and sandwiched between indium tin oxide (ITO) coated glass plates separated by a 105 μm spacer to form the individual samples.

*Measurement 1*

Diffraction Efficiency

This measurement is the same as *Measurement 1* of Example 1. The results are given in Table 2.

*Measurement 2*

Response Time

This measurement is the same as *Measurement* 2 of Example 1. The results are given in Table 2.

*Measurement 3*

Phase Stability

The tested samples were put into an oven at 60 °C. At certain intervals, the opaqueness of samples was checked by microscope. If there is no opaqueness and crystal inside the composition, the samples could be said to have good phase stability. The results are given in Table 2.

*Example 7*

A photorefractive composition was obtained in the same manner as in the Example 6 except that TPD / chromophore-type copolymer prepared in Production Example 8 was used and composition ratio was changed to the ratio as described in Table 2. The results of the above measurements 1 to 3 are given in Table 2.

*Example 8*

A photorefractive composition was obtained in the same manner as in the Example 6 except that TPD / chromophore-type copolymer prepared in Production Example 9 was used. The results of the above measurements 1 to 3 are given in Table 2.

*Example 9*

A photorefractive composition was obtained in the same manner as in the Example 6 except that TPD / chromophore-type copolymer prepared in Production Example 10 was used and composition ratio was changed to the ratio as described in Table 2. The results of the above measurements 1 to 3 are given in Table 2.

*Example 10*

A photorefractive composition was obtained in the same manner as in the Example 6 except that B-A-B-type block copolymer prepared in Production Example 11 was used and composition ratio was changed to the ratio as described in Table 2. The results of the above measurements 1 to 3 are given in Table 2.

*Example 11*

Preparation of Photorefractive Composition

A photorefractive composition testing sample was prepared. The components of the composition were as follows:

| | |
|---|---|
| (i) TPD charge transport / chromophore type co-polymer (described in Production Example 7): | 60 wt% |
| (ii) Prepared chromophore powder of 7-DCST | 14.3 wt% |
| (iii) Prepared chromophore powder of 7-FDCST | 14.3 wt% |
| (iv) Prepared TPA Acetate plasticizer | 10.9 wt% |
| (v) Purchased C60 sensitizer (MER, Tucson, AZ) | 0.5 wt% |

To prepare the composition, the components listed above were dissolved with toluene and stirred overnight at room temperature. After removing the solvent by rotary evaporator and vacuum pump, the residue was scratched and gathered.

To make testing samples, this powdery residue mixture was put on a slide glass and melted at 125 °C to make a 200-300 μm thickness film, or pre-cake. Small portions of this pre-cake were taken off and sandwiched between indium tin oxide (ITO) coated glass plates separated by a 105 μm spacer to form the individual samples.

*Comparative Example 2*

A poly(n-vinylcarbazole) (Aldrich Chemicals, Milwaukee, WI) was purchased. A photorefractive composition was obtained in the same manner as in the Example 6 except that poly(n-vinylcarbazole) was used, ethyl carbazole was used instead of TPD acetate plasticizer and composition ratio was changed to the ratio as described in Table 2. The results of the measurements 1 to 3 are given in Table 2.

TABLE 2

| Sample Number | Example 6 | Example 7 | Example 8 | Example 9 | Example 10 | Example 11 | Comparative Example 2 (Purchased PVK) |
|---|---|---|---|---|---|---|---|
| Sample composition (wt%): | | | | | | | |
| Polymer | 60 | 51.5 | 60 | 60 | 60 | 60 | 49.5 |
| Chromophore 7-DCST | 25 | 30 | 25 | 30 | 28.6 | 14.3 | 35 |
| Plasticizer | 14.5 | 17.8 | 14.5 | 17.8 | 10.9 | 10.9 | 15 |
| Diffraction efficiency (%) at 60V/μm | 11 | 11 | 50 | 25 | 17 | 65 | 30 |
| Response time | 11 (ms) at 71V/(μm | 19 (ms) at 29V/μm | 57 (ms) at 60V/μm | 17 (ms) at 60V/μm | 16 (ms) at 60V/μm | 31 (ms) at 60V/μm | 48 (ms) at 60V/μm |
| Phase stability at 60°C | Good | Good | Good | Good | Good | Good | Phase Separation |

*Production Example 13*

(a) Monomers containing charge transport groups

(i) TPD acrylate monomer:

TPD acrylate type charge transport monomers (N-[acroyloxypropylphenyl]-N, N', N'-triphenyl-(1,1'-biphenyl)-4,4'-diamine) (TPD acrylate) was purchased from Fuji Chemical, Japan:

The TPD acrylate type monomer had the structure:

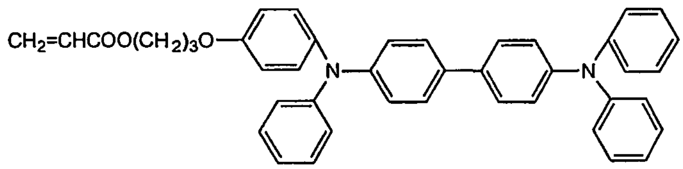

TPD acrylate monomer was prepared by the following procedure.

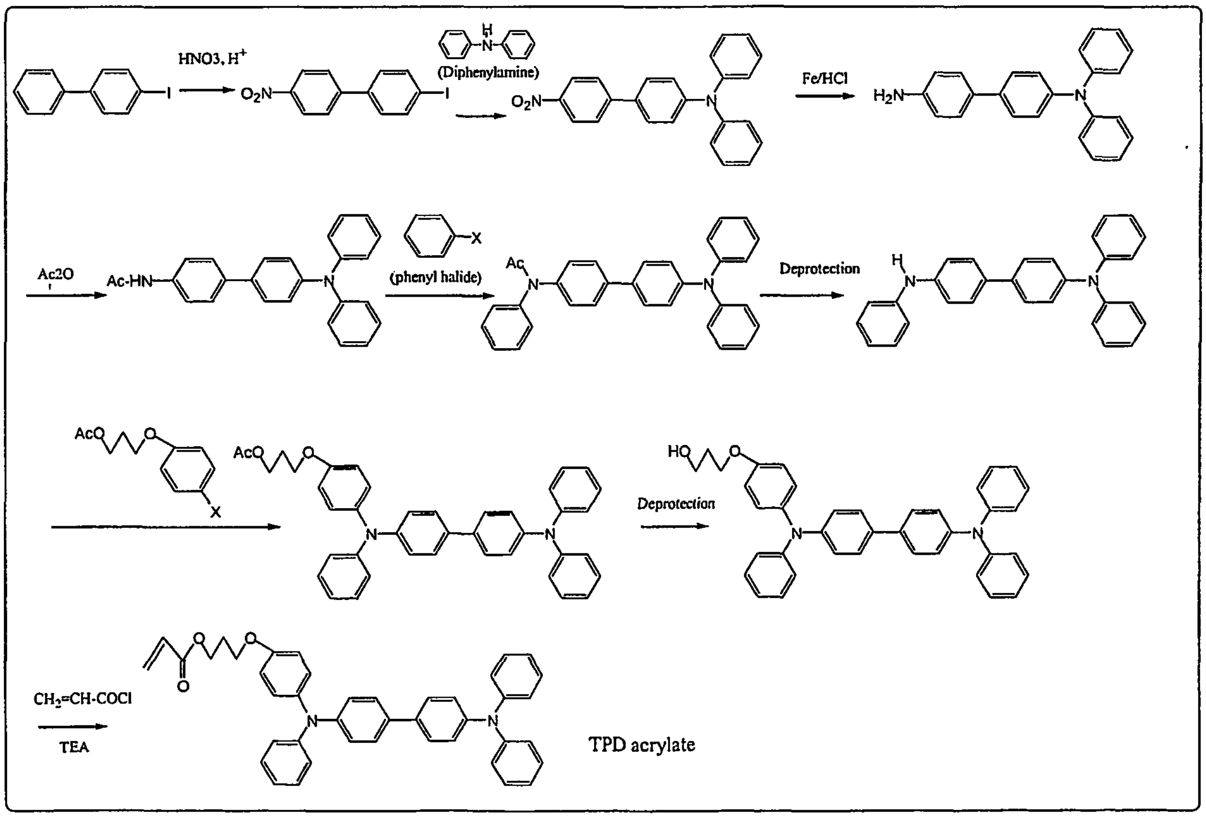


In the above procedure, usage of 3-methyl diphenylamine instead of diphenylamine and 3-methylphenyl halide instead of phenyl halide can result in the formation of N(acroyloxypropylphenyl)-N'-phenyl-N,N'-di(3-methylphenyl)-(1,1'-biphenyl)-4,4'-diamine.

(ii) TPA-type monomer:

The TPA-type acrylate monomer was synthesized according to the following synthesis scheme:

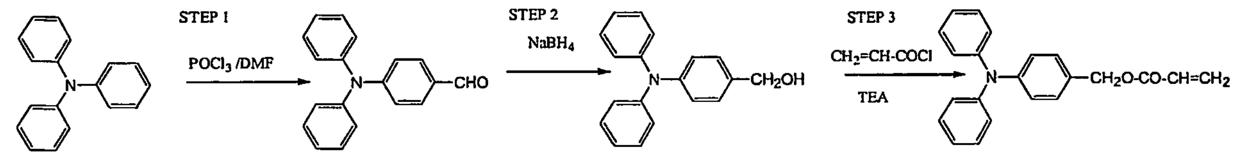


STEP 1:

To a cooled solution of DMF anhydride (17 mL) at 0 °C under Argon atomosphere, phosphorousoxychloride anhydride dropwisely (10 mL, 107.3 mmol) was added. After addition completion combined with triphenylamine (30 g, 122.3 mmol) and DMF anhydride (75 mL). Solution was heated to 80 °C overnight. Extracted the reaction mixture with water (500 mL) and $CH_2Cl_2$ (500 mL). The $CH_2Cl_2$ layer was rotary-evaporated and purified by column chromatography (7 $CH_2Cl_2$: 3 hexane). Yield was about 21.9g (66%).

STEP 2:

A mixture of above aldehyde (11.71g, 42.8 mmol), 1:1 solution of toluene and ethanol (150 mL), $NaBH_4$ (2.43g, 64.2 mmol) was stirred at room temperature under argon atmosphere. After three hours, the filtered solution was rotary-evaporated and extracted with $CH_2Cl_2$ (400 mL) and water (400 mL). The collected $CH_2Cl_2$ layer was rotary-evaporated. Yield was about 12.2g (quantitively).

STEP 3:

To a stirred solution of alcohol (2.0 g, 7.3 mmol), and triethylamine (1.3 mL, 10 mmol), and tetrahydrafuran anhydride (40 mL) at 0 °C under argon atmosphere was added dropwisely acryloyl chloride (0.74 mL, 9.1 mmol). After 45 min, let warm to ambient temperature. The reaction mixture was extracted with water (200 mL) and $CH_2Cl_2$ (200 mL). The rotary-evaporated $CH_2Cl_2$ layer was purified by column chromatography (3 ethyl Acetate: 1 hexanes). Yield was about 0.55 g (23%).

<u>(b) Monomers containing non-linear-optical groups</u>

This process is the same as (b) of *Production Example 1.*

<u>(c) Synthesis of non-linear-optical chromophore</u>

i) 7-DCST

The non-linear-optical precursor 7-DCST (7 member ring dicyanostyrene, 4-homopiperidinobenzylidene malononitrile) was synthesized according to the following two-step synthesis scheme:

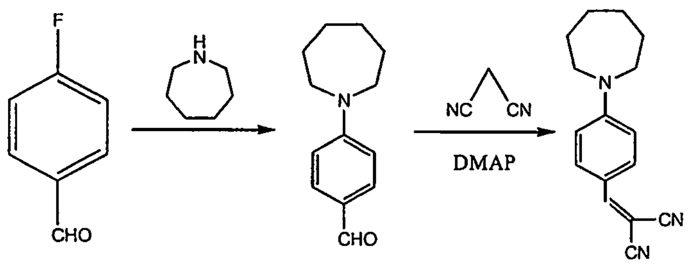


A mixture of 4-fluorobenzaldehyde (17.8 g, 143 mmol), homopiperidine (15.0g, 151mmol), lithium carbonate (55g, 744 mmol), and DMF (100mL) was stirred at 50°C for 16 hr. Water (500mL) was added to the reaction mixture. The products were extracted with ether (1L). After removal of ether, the crude products were purified by silica gel column chromatography using hexanes-ethyl acetate (9:1) as eluent. 4-(Dimethylamino)pyridine (100mg, 0.82mmol) was added to a solution of the 4-homopiperidinobenzaldehyde (18.2g, 89.5mmol) and malononitrile (9.1g, 137.8mmol) in methanol (60mL). The reaction mixture was kept at room temperature and the product was collected by filtration and purified by recrystallization from dichloromethane. Yield (17.1g, 48%)

ii) 7-FDCST

The non-linear-optical precursor 7-FDCST (7 member ring dicyanostyrene, 4-homopiperidino-2-fluorobenzylidene malononitrile) was synthesized according to the following two-step synthesis scheme:

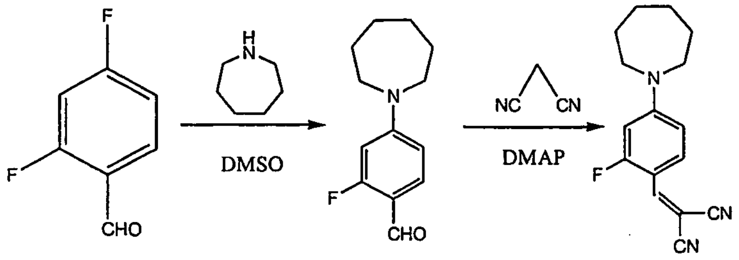


A mixture of 2,4-dilluorobenzaldehyde (25 g, 176 mmol), homopiperidine (17.4 g, 176mmol), lithium carbonate (65g, 880 mmol), and DMSO (625mL) was stirred at 50°C for 16 hr. Water (50mL) was added to the reaction mixture. The products were extracted with ether (100mL). After removal of ether, the crude products were purified by silica gel column chromatography using hexanes-ethyl acetate (9: 1) as eluent and crude intermediate was obtained (22.6 g,). 4-(Dimethylamino)pyridine (230mg) was added to a solution of the 4-homopiperidino-2-fluorobenzaldehyde (22.6g, 102 mmol) and malononitrile (10.1g, 153mmol) in methanol (323mL). The reaction mixture was kept at room temperature and the product was collected by filtration and purified by recrystallization from ethanol. Yield

(18.1g, 38%)

iii) Synthesis of fused ring chromophore RLC (3a) and APDC (3b)

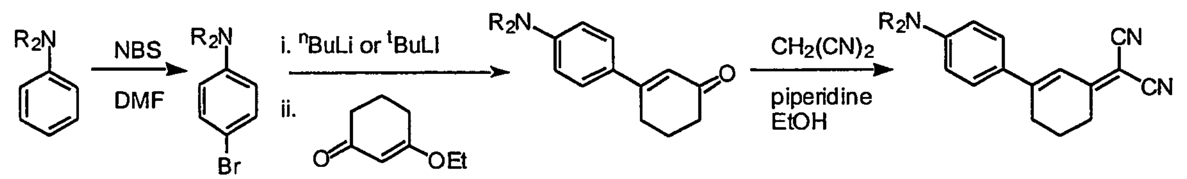


**1** **2** **3**

for **1a, 2a, 3a**; $R_2 = {}^nBu_2$
for **1b, 2b, 3b**; $R_2 = (CH_2)_6$

iii-a) RLC (**3a**)

**4-Bromo-*N,N*-di-*n*-butylaniline (1a).** A solution of *N*-bromosuccinimide (9.61 g, 0.054 mol) in 25 mL DMF (25 mL) was added to a stirred solution of *N,N*-di-*n*-butylaniline (11.0 g, 0.054 mol) in 25 mL *N,N*-dimethylformamide at 0°C. The resulting green solution was stirred for 12h at ambient temperature and then poured into 1L water. The mixture was extracted three times with dichloromethane. The combined organic layers were washed subsequently with water and 200 mL of saturated sodium thiosulfate solution, dried over sodium sulfate, filtered and evaporated to yield **1a** as a yellowish oil (14.2 g, 0.050 mol, 93%). $^1$H NMR (300 MHz, $CDCl_3$) 7.23 (d, *J*= 9.1 Hz, 2H, CH); 6.48 (d, *J*= 9.0 Hz, 2H, CH); 3.21 (t, *J* = 8.5 Hz, 4H, $CH_2N$); 1.52 (q, *J* = 7.6 Hz, 4H, $CH_2$); 1.34 (q, *J* = 7.3 Hz, 4H, $CH_2$); 0.93 (t, *J*= 7.3 Hz, 6H, $CH_3$).

**2a.** *n*-Butyllithium (18.9 mL of a 2.5 M solution in hexanes, 0.047 mol) were added to a solution of **1a** (12.3 g, 0.043 mol in dry diethyl ether at -10°C. After stirring for 2h at - 10°C, the reaction mixture was allowed to warm up to 0°C. A solution of 1-ethoxy-2-cyclohexen-3-one (6.02 g, 0.043 mol) in diethyl ether was added. The reaction mixture was warmed to ambient temperature and stirred for 2.5 h. After addition of a saturated aqueous solution of sodium chloride, the organic layer was separated. The aqueous layer was extracted with two portions of diethyl ether. The combined organic layers were dried over sodium sulfate, filtered and evaporated to give a residue, which was purified by column chromatography on silica gel with a mixture of hexanes and ethyl acetate as eluent to give 2a as a yellow solid (10.2, 0.034 mol, 79%). $^1$H NMR (300 MHz, $CDCl_3$) 7.46 (d, *J* = 9.0 Hz, 2H, CH); 6.60 (d, *J* = 8.9 Hz, 2H, CH); 6.38 (s, 1H, CH); 3.29 (t, *J* = 7.6 Hz, 4H, $CH_2N$); 2.72 (t, *J* = 6.0 Hz, 2H, $CH_2$); 2.42 (t, *J* = 6.6 Hz, 2H, $CH_2$); 2.08 (q, *J* = 6.3

Hz, 2H, $CH_2$); 1.56 (q, *J*= 7.5 Hz, 4H, $CH_2$); 1.34 (sext, *J*= 7.4 Hz, 4H, $CH_2$); 0.94 (t, *J* = 7.3 Hz, 6H, CH3).

**3a (RLC).** The ketone **2a** (2.60 g, 8.7 mmol) was dissolved in the minimum amount of refluxing ethanol and malonodinitrile (3.44 g, 52 mmol) were added, along with a catalytic amount of piperidine. The reaction mixture was stirred at 70°C for 2h. The conversion of the starting material was monitored by TLC. The reaction was stopped when a side product was observed. The solvent was evaporated and the dark residue was purified by column chromatography on silica gel with a mixture of hexane and ethyl acetate as eluent, followed by recrystallization from ethanol to yield **3a** red needles ( 1.66 g, 4.8 mmol, 55%) with mp. 101-102 C.$^1$H NMR (300 MHz, $CDCl_3$) 7.56 (d, *J*= 9.1 Hz, 2H, CH): 7.12 (s, 1H, CH); 6.61 (d, *J* = 9.1 Hz, 2H, CH); 3.32 (t, *J* = 7.6 Hz, 4H, $NCH_2$); 2.75 (t, *J* = 6.4 Hz, 4H, $CH_2$); 1.95 (quint., *J*= 6.3 Hz, 2H, $CH_2$); 1.52-1.63 (m, 4H, $CH_2$); 1.29-1.41 (td, $J_d$ = $J_t$ = 7.5 Hz, 4H, $CH_2$); 0.95 (t, *J*= 7.3 Hz, 6H, $CH_3$).

iii-b) APDC (**3b**)

1-Phenyl-azepane was synthesized from the reaction of azepane (also known as hexamethyleneimine and hexahydroazepine), sodium amide, and bromobenzene according to a literature procedure (R. E. Walkup and S. Searles, *Tetrahedron,* 1985, **41**, 101-106). Other starting materials were obtained commercially.

**1-(4-Bromophenyl)azepane (1b)**. A solution of *N*-bromosuccinimide (1.789 g, 10.1 mmol) in DMF (15 mL) was added dropwise to a solution of 1-phenyl-azepane (1.768 g, 10.1 mmol) in DMF (25 mL) at 0 °C. The mixture was allowed to stir and was quenched with 40 mL water after 48 hours. The product was extracted with three 40 mL portions of diethyl ether. The diethyl ether layer was washed with three 40 mL portions of water, then with two 40 mL portions of aqueous 0.01 M sodium thiosulfate, and dried on magnesium sulfate. The diethyl ether was evaporated to afford **1b** as a yellowish oil. (1.9721 g, 77.25 mmol, 77 % yield). $^1$H NMR ($CDCl_3$, 250 MHz) 7.23 (d, 2H, *J*= 9.2 Hz), 6.53 (d, 2H, *J*= 9.2 Hz), 3.40 (t, 4H, *J*= 5.9 Hz), 1.74 (m, 4H), 1.51 (m, 4H).

**2b.** 1-(4-Bromophenyl)-azepane (20 g, 78.7 mmol) was dissolved in dry THF (400 mL) under nitrogen gas and cooled to -78°C. *tert*-Butyl Lithium (92.6 mL of a 1.7 M solution in pentane, 1.45 mol) was added dropwise to the mixture. A solution of 1-ethoxy-2-cyclohexen-3-one (11.45 mL, 78.7 mmol) in dry THF (80 mL) was added dropwise to the mixture. After 36 hours, the reaction was quenched with water (~250 mL). Reaction was separated with diethyl ether, washed with a saturated sodium chloride solution and dried on magnesium sulfate. The diethyl ether was evaporated and chromatographed on a 8 cm diameter column eluting with 1:1 hexanes/ethyl acetate solution (yellow solid, 16.13 g, 59.8 mmol, 76%). $^1$H NMR ($CDCl_3$, 250 MHz) 7.46 (d, 2H, *J*= 9.0 Hz), 6.66 (d, 2H, *J*= 9.0 Hz), 6.38 (s, 1H, *J* = 2.035 Hz), 3.48 (t, 4H, *J* = 5.88 Hz), 2.72 (t, 2H, *J* = 5.98 Hz), 2.42 (t, 2H, *J*= 6.23 Hz), 2.08 (m, 2H), 1.77 (m, 5H), 1.53 (m, 4H).

**3b (APDC)**. The ketone **2b** (7.50 g, 27.8 mmol) and malononitrile (9.5 g, 143.8 mmol) were dissolved in ethanol (300mL). Pipiridine (~5 mL) was added to the reaction mixture. Type 4A molecular sieves were added. The reaction mixture turned dark red after a couple of minutes. The reaction was stopped afer 4.5 hours. The ethanol was evaporated under reduced pressure. The residue was extracted into ethyl actetate, filtered, and recrystallized to yield a red solid. (7.11 g, 22.4 mol, 80%). $^1$H NMR ($CDCl_3$, 200 MHz) 7.55 (d, 2H, *J* = 8.94 Hz), 7.11 (s, 1H), 6.67 (d, 2H, *J* = 9.1 Hz), 3.51 (t, 4H, *J* = 5.86 Hz), 2.73 (m, 4H), 1.87 (m, 6H), 1.53 (m, 4H).

(d) Synthesis of plasticizer

d-i) Synthesis of plasticizer TPA-Ac

The plascticizer TPA-Ac was synthesized according to the following synthesis scheme:

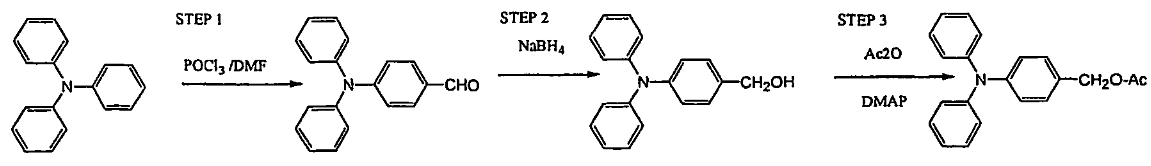


STEP 1:

To a cooled solution of DMF anhydride (17 mL) at 0 °C under Argon atomosphere, phosphorousoxychloride anhydride dropwisely (10 mL, 107.3 mmol) was added. After addition completion combined with triphenylamine (30 g, 122.3 mmol) and DMF anhydride (75 mL). Solution was heated to 80 °C overnight. Extracted the reaction mixture with water (500 mL) and $CH_2Cl_2$ (500 mL). The $CH_2Cl_2$ layer was rotary-evaporated and purified by column chromatography (7 $CH_2Cl_2$: 3 hexane). Yield was about 21.9g (66%).

STEP 2:

A mixture of above aldehyde (11.71g, 42.8 mmol), 1:1 solution of toluene and ethanol (150 mL), $NaBH_4$ (2.43g, 64.2 mmol) was stirred at room temperature under argon atmosphere. After three hours, the filtered solution was rotary-evaporated and extracted with $CH_2Cl_2$ (400 mL) and water (400 mL). The collected $CH_2Cl_2$ layer was rotary-evaporated. Yield was about 12.2g (quantitively).

STEP 3:

To a stirred solution of alcohol (12.17 g, 44.2 mmol), and pyridine (1.8 mL, 22.2 mmol), and tetrahydrafurananhydride (100 mL) at 0 °C under argon atmosphere was added dropwisely acetic anhydride (6.2 mL, 65.7 mmol). After 45 min, let warm to ambient temperature. The reaction mixture was extracted with water (500 mL) and $CH_2Cl_2$ (500 mL). The rotary-evaporated $CH_2Cl_2$ layer was purified by column chromatography (3 ethyl Acetate: 1 hexanes). Yield was about 10.5g (75%).

d-ii) Synthesis of plascticizer TPA-(CN)2

The plascticizer TPA-Ac was synthesized according to the following synthesis scheme:

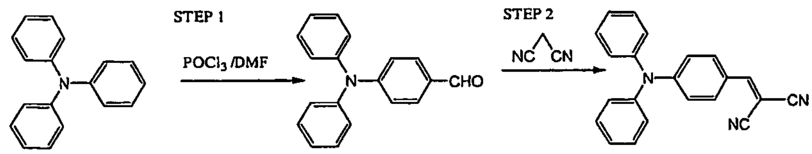


STEP 1:

Same procedure can be taken with the synthetic method for TPA-Ac, described in the above.

STEP 2:

Triphenylamine aldehyde (1.41 g, 5.16 mmol) and malonodinitrile (450 mg, 6.82 mmol) were dissolved in dry chloroform (20mL). Then, as a catalysis, dimethylaminopyridine (40 mg) was added into this solution. The reaction mixture turned dark red after a couple of minutes. The reaction was stopped after 18 hours at 40 °C. The mixture was evaporated under reduced pressure and chromatographed with 3:2 hexanes/ethyl acetate eluting solution. The product was obtained as red crystals after recrystallization from ethanol. (840 mg, 51 % yield).

(e) Other materials

Besides the above monomers and initiator, other chemicals, such as copper bromide, bipyridine and ethyl 2-bromo-2-methylpropionate, were purchased from Aldrich Chemicals, Milwaukee, WI.

*Production Example 14*

Preparation of Charge Transport Homopolymer (TPD acrylate type)

N-[(meth)acroyloxypropylphenyl]-N, N', N'-triphenyl-(1,1'-biphenyl)-4,4'-diamine (TPD acrylate, prepared in Production Example 1-(ii)) (6.2 g, 10mmol), bipyridine (156mg, 1.0mmol; as a ligand), and butyl acetate (6mL) were put into a three-necked flask. After purging by argon gas for 1 hour, ethyl 2-bromo-2-methylpropionate (78mg, 0.40mmol; as a polymerization initiator) dissolved with butyl acetate (1mL) and CuBr (57mg, 0.40mmol; as transition metal catalyst) were added into this solution. Then, the solution was heated to 110°C, while continuing to purge with argon gas.

After 18 hrs polymerization, the polymer solution was diluted with toluene, and then filtered to remove non-dissolved impurities. The polymer was precipitated from the solution by adding methanol, the resulting polymer precipitate was collected and washed in diethyl ether and methanol. The white polymer powder was collected and dried. The yield of polymer was essentially 100%.

The weight average and number average molecular weights were measured by gel permeation chromatography, using a polystyrene standard. The results were Mn=13,780, Mw=16,430. The polydispersity Mw/Mn was at 1.35.

*Production Example 15*

Preparation of homo-polymer by Azo Initiator Polymerization of Charge Transport Homopolymer (TPD acrylate type)

The charge transport monomer N-[(meth)acroyloxypropylphenyl]-N, N', N'-triphenyl-(1,1'-biphenyl)-4,4'-diamine (TPD acrylate, prepared in Production Example 1-(ii)) (2.5 g, 4.1mmol,) was put into a three-necked flask. After toluene (9.8 g) was added and purged by argon gas for 1 hour, azoisobutylnitrile (9.4 mg) was added into this solution. Then, the solution was heated to 65 °C, while continuing to purge with argon gas.

After 18 hrs polymerization, the polymer solution was diluted with toluene. The polymer was precipitated from the solution and added to methanol, then the resulting polymer precipitate was collected and washed in diethyl ether and methanol. The white polymer powder was collected and dried. The yield of polymer was essentially 100%.

As before, the weight average and number average molecular weights were measured by gel permeation chromatography, using a polystyrene standard. The results were Mn= 8,344, Mw=12,600, giving a polydispersity of 1.51.

*Production Example 16*

Preparation of Copolymer by Radical Polymerization of Charge Transport Monomer and Non-Linear-Optical Precursor Monomer (TPD Acrylate / Chromophore Type)

The charge transport monomer N-[(meth)acroyloxypropylphenyl]-N, N', N'-triphenyl-(1,1'-biphenyl)-4,4'-diamine (TPD acrylate, prepared in Production Example 1-(ii)) (2.75 g, 4.46 mmol) and the non-linear-optical precursor monomer 5-[N-ethyl-N-4-formylphenyl]amino-pentyl acrylate (0.55 g, 1.90 mmol), prepared as described in Production Example 1, bipyridine (110 mg, 0.70mmol), and toluene (6mL) were put into a four-necked flask equipped with a mechanical stirrer, a nitrogen inlet, a condenser, and a rubber septum. After purged with argon gas for 1 hr, Br-BMP (54mg, 0.15mmol) dissolved with toluene (1mL) and CuBr (43 mg, 0.30mmol) were added into this solution. The solution was then heated to 90°C, while continuing to be purged with argon gas.

The polymerization reaction was allowed to proceed with stirring for another 18 hrs. The resulting polymer solution was diluted with toluene, followed by filtration to remove catalyst-related impurities and polymer precipitation into methanol. The precipitated polymer was collected and washed in methanol. The polymer yield was essentially 100%. As before, the weight average and number average molecular weights were measured by gel permeation chromatography, using a polystyrene standard. The results were Mn= 9,973, Mw= 14,577, giving a polydispersity of 1.46.

To form the polymer with non-linear-optical capability, the precipitated precursor polymer (3.0 g) was dissolved with chloroform (12mL). Into this solution, dicyanomalonate (570 mg, 8.64 mmol) and dimethylaminopyridine (30 mg) were added, and the reaction was allowed to proceed overnight at 40°C. As before, the polymer was recovered from the solution by filtration of impurities, followed by precipitation into methanol, washing and drying.

*Production Example 17*

Preparation of homo-polymer by Azo Initiator Polymerization of Charge Transport Homopolymer (TPA acrylate type)

The charge transport monomer TPA acrylate (2.5 g, 4.1mmol, prepared in Production Example 1-(iii)) was put into a three-necked flask. After toluene (9.8 g) was added and purged by argon gas for 1 hour, azoisobutylnitrile (9.4 mg) was added into this solution. Then, the solution was heated to 65 °C, while continuing to purge with argon gas.

After 18 hrs polymerization, the polymer solution was diluted with toluene. The polymer was precipitated from the solution and added to methanol, then the resulting polymer precipitate was collected and washed in diethyl ether and methanol. The white polymer powder was collected and dried. The yield of polymer was essentially 100%.

As before, the weight average and number average molecular weights were measured by gel permeation chromatography, using a polystyrene standard. The results were Mn=17,462, Mw= 34,044, giving a polydispersity of 1.95.

*Example 12*

Preparation of Photorefractive Composition

A photorefractive composition testing sample was prepared. The components of the composition were as follows:

(i) TPD charge transport (described in Production Example 14): 60 wt%

(continued)

| | |
|---|---|
| (ii) Prepared chromophore of RLC | 14.3 wt% |
| (iii) Prepared chromophore of APDC | 14.3 wt% |
| (iv) Prepared TPA Acetate plasticizer | 10.9 wt% |
| (v) Purchased C60 sensitizer (MER, Tucson, AZ) | 0.5 wt% |

To prepare the composition, the components listed above were dissolved with toluene and stirred overnight at room temperature. After removing the solvent by rotary evaporator and vacuum pump, the residue was scratched and gathered.

To make testing samples, this powdery residue mixture was put on a slide glass and melted at 125 °C to make a 200-300 μm thickness film, or pre-cake. Small portions of this pre-cake were taken off and sandwiched between indium tin oxide (ITO) coated glass plates separated by a 105 m spacer to form the individual samples.

*Measurement 1*

Diffraction Efficiency

This measurement is the same as *Measurement 1* of Example 1. The results are given in Table 3.

*Measurement 2*

Response Time

This measurement is the same as *Measurement 2* of Example 1. The results are given in Table 3.

Measurement 3

Phase Stability

The tested samples were put into an oven at 60 °C. At certain intervals, the opaqueness of samples was checked by microscope. If there is no opaqueness and crystal inside the composition, the samples could be said to have good phase stability. The results are given in Table 3.

Obtained performance:

| | |
|---|---|
| Diffraction efficiency (%) : | 68% at 70V/μm |
| Response time | 9 (ms) at 70V/μm |
| Phase stability (at 60°C) : | good |

*Example 13*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 14): | 60 wt% |
| (ii) Prepared chromophore of APDC | 28.6 wt% |
| (iii) Purchased ethyl carbazole plasticizer | 10.9 wt% |
| (iv) Purchased C60 sensitizer (MER, Tucson, AZ) | 0.5 wt% |

Obtained performance:

| | |
|---|---|
| Diffraction efficiency (%) : | 59 % at 70V/μm |
| Response time | 13 (ms) at 70V/μm |
| Phase stability (at 60°C) : | good |

*Example 14*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 14): | 60 wt% |
| (ii) Prepared chromophore of APDC | 9.5 wt% |
| (iii) Prepared chromophore of RLC | 9.5 wt% |
| (iv) Prepared chromophore of 7-FDCST | 9.5 wt% |
| (v) Prepared TPA-(CN)2 plasticizer | 10.9 wt% |
| (vi) Purchased C60 sensitizer (MER, Tucson, AZ) | 0.5 wt% |

Obtained performance:

| | |
|---|---|
| Diffraction efficiency (%) : | 61% at 70V/μm |
| Response time | 12 (ms) at 70V/μm |
| Phase stability (at 60°C) : | good |

*Example 15*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 14): | 60 wt% |
| (ii) Prepared chromophore of APDC | 9.5 wt% |
| (iii) Prepared chromophore of 7-DCST | 9.5 wt% |
| (iv) Prepared chromophore of 7-FDCST | 9.5 wt% |
| (v) Prepared TPA-(CN)2 plasticizer | 10.9 wt% |
| (vi) Purchased C60 sensitizer (MER, Tucson, AZ) | 0.5 wt% |

Obtained performance:

| | |
|---|---|
| Diffraction efficiency (%) : | 55% at 70V/μm |
| Response time | 21 (ms) at 70V/μm |
| Phase stability (at 60°C) : | good |

*Example 16*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 14): | 60 wt% |
| (ii) Prepared chromophore of APDC | 9.5 wt% |
| (iii) Prepared chromophore of RLC | 9.5 wt% |
| (iv) Prepared chromophore of 7-DCST | 9.5 wt% |
| (v) Prepared TPA-(CN)2 plasticizer | 10.9 wt% |
| (vi) Purchased C60 sensitizer (MER, Tucson, AZ) | 0.5 wt% |

Obtained performance:

| | |
|---|---|
| Diffraction efficiency (%) : | 42% at 70V/μm |
| Response time | 12 (ms) at 70V/μm |
| Phase stability (at 60°C) : | good |

*Example 17*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 14): | 60 wt% |
| (ii) Prepared chromophore of APDC | 14.3 wt% |
| (iii) Prepared chromophore of 7-FDCST | 14.3 wt% |
| (iv) Prepared TPA-(CN)2 plasticizer | 10.9 wt% |
| (v) Purchased C60 sensitizer (MER, Tucson, AZ) | 0.5 wt% |

Obtained performance:

| | |
|---|---|
| Diffraction efficiency (%) : | 35% at 70V/μm |
| Response time | 10 (ms) at 70V/μm |
| Phase stability (at 60°C) : | good |

*Example 18*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 15): | 60 wt% |
| (ii) Prepared chromophore of APDC | 14.3 wt% |
| (iii) Prepared chromophore of RLC | 14.3 wt% |
| (iv) Prepared TPA-(CN)2 plasticizer | 10.9 wt% |
| (v) Purchased C60 sensitizer (MER, Tucson, AZ) | 0.5 wt% |

Obtained performance:

| | |
|---|---|
| Diffraction efficiency (%) : | 71% at 70V/μm |
| Response time | 16 (ms) at 70V/μm |
| Phase stability (at 60°C) : | good |

*Example 19*

A photorefractive composition was obtained in the same manner as in the Example 12 except composition rate and components. The results of the above measurements 1 to 3 are given in Table 3. The components of the composition were as follows:

| | |
|---|---|
| (i) TPD charge transport (described in Production Example 16): | 60 wt% |
| (ii) Prepared chromophore of 7-DCST | 14.3 wt% |
| (iii) Prepared chromophore of 7-FDCST | 14.3 wt% |
| (iv) Prepared TPA Acetate plasticizer | 10.9 wt% |
| (v) Purchased C60 sensitizer (MER, Tucson, AZ) | 0.5 wt% |

Obtained performance:

| | |
|---|---|
| Diffraction efficiency (%) : | 46% at 65V/μm |
| Response time | 42 (ms) at 70V/μm |
| Phase stability (at 60°C) : | good |

*Example 20*

A photorefractive composition was obtained in the same manner as in the Example 12 except composition rate and components. The results of the above measurements 1 to 3 are given in Table 3. The components of the composition were as follows:

| | |
|---|---|
| (i) TPA charge transport (described in Production Example 17): | 60 wt% |
| (ii) Prepared chromophore of APDC | 14.3 wt% |
| (iii) Prepared chromophore of RLC | 14.3 wt% |
| (iv) Prepared TPA-(CN)2 plasticizer | 10.9 wt% |
| (v) Purchased C60 sensitizer (MER, Tucson, AZ) | 0.5 wt% |

Obtained performance:

| | |
|---|---|
| Diffraction efficiency (%) : | 14 % at 65V/μm |
| Response time | 26 (ms) at 70V/μm |
| Phase stability (at 60°C) : | good |

*Comparative Example 3*

A poly(n-vinylcarbazole) (Aldrich Chemicals, Milwaukee, WI) was purchased. A photorefractive composition was obtained in the same manner as in the Example 12 except that poly(n-vinylcarbazole) was used, ethyl carbazole was used instead of TPD acetate plasticizer and composition ratio was changed to the ratio as described below. The results of the measurements 1 to 3 are given in Table 3. The components of the composition were as follows:

| | |
|---|---|
| (i) Purchased PVK polymer: | 49.5 wt% |
| (ii) Prepared chromophore of 7-DCST | 35.0 wt% |
| (iii) Purchased ethyl carbazole | 15.0 wt% |
| (iv) Purchased C60 sensitizer (MER, Tucson, AZ) | 0.5 wt% |

Obtained performance:

| | |
|---|---|
| Diffraction efficiency (%) : | 30% at 65V/μm |
| Response time | 48 (ms) at 60V/μm |
| Phase stability (at 60°C) : | phase separation |

TABLE 3

| Sample Number | Example 12 | Example 13 | Example 14 | Example 15 | Example 16 | Example 17 |
|---|---|---|---|---|---|---|
| Sample composition (wt%): | | | | | | |
| Polymer | 60 | 60 | 60 | 60 | 60 | 60 |
| Chromophore | 28.6 | 28.6 | 28.5 | 28.5 | 28.5 | 28.6 |
| Plasticizer | 10.9 | 10.9 | 10.9 | 10.9 | 10.9 | 10.9 |
| Diffraction efficiency (%) | 68 at 70V/μm | 59 at 70V/μm | 61 at 70V/μm | 55 at 70V/μm | 42 at 70V/μm | 35 at 70V/μm |

(continued)

| Sample Number | Example 12 | Example 13 | Example 14 | Example 15 | Example 16 | Example 17 |
|---|---|---|---|---|---|---|
| Sample composition (wt%): | | | | | | |
| Response time | 9 (ms) at 70V/μm | 13 (ms) at 70V/μm | 12 (ms) at 70V/μm | 21 (ms) at 70V/μm | 12 (ms) at 70V/μm | 10 (ms) at 70V/μm |
| Phase stability at 60°C | Good | Good | Good | Good | Good | Good |
| Sample Number | Example 18 | Example19 | Example20 | Comparative Example 3 (Purchased PVK) | | |
| Sample composition (wt%): | | | | | | |
| Polymer | 60 | 60 | 60 | 49.5 | | |
| Chromophore | 28.6 | 28.6 | 28.6 | 35.0 | | |
| Plasticizer | 10.9 | 10.9 | 10.9 | 15.0 | | |
| Diffraction efficiency (%) at 60V/μm | 71 at 70V/μm | 46 at 65V/μm | 14 at 65V/μm | 30 at 65V/μm | | |
| Response time | 16 (ms) at 70V/μm | 42 (ms) at 70V/μm | 26 (ms) at 70V/μm | 48 (ms) at 60V/μm | | |
| Phase stability at 60°C | Good | Good | Good | Phase Separation | | |

## Claims

**1.** A polymer which is represented by a formula selected from the group consisting of formulae (I), (II), (III) and (IV):

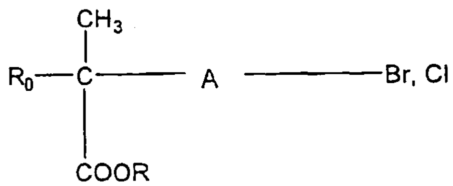

(I)

wherein $R_0$ represents a hydrogen atom or alkyl group with up to 10 carbons; R is selected from the group consisting of a hydrogen atom, a linear alkyl group with up to 10 carbons, a branched alkyl group with up to 10 carbons, and an aromatic group with up to 10 carbons; A represents a repeating structure comprising at least one of the below repeating unit 1 and repeating unit 2;

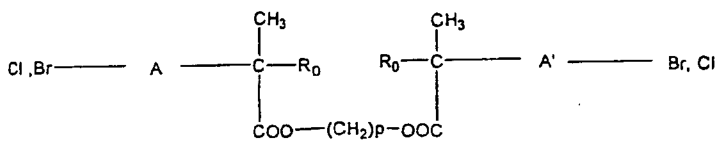

(II)

wherein $R_0$ represents each independently a hydrogen atom or alkyl group with up to 10 carbons; p is an integer of 2 to 6; A and A' represents each independently a repeating structure comprising at least one of the below repeating unit 1 and repeating unit 2;

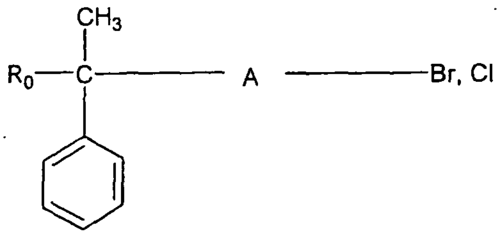

(III)

wherein $R_0$ represents a hydrogen atom or alkyl group with up to 10 carbons; A represents a repeating structure comprising at least one of the below repeating unit 1 and repeating unit 2;

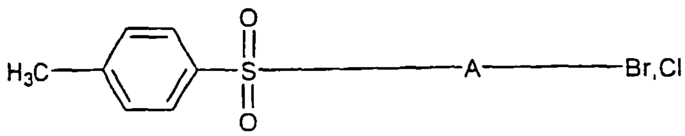

(IV)

wherein A represents a repeating structure comprising at least one of the below repeating unit 1 and repeating unit 2;

repeating unit 1

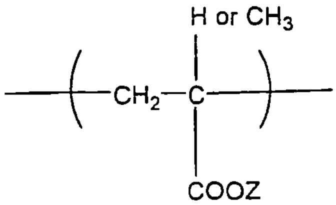

repeating unit 2

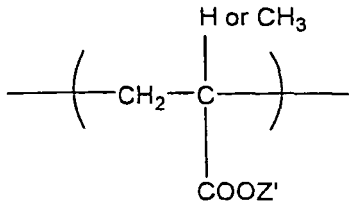

wherein Z is represented by a structure selected from the group consisting of structures (i), (ii) and (iii); and Z' is represented by formula (0);

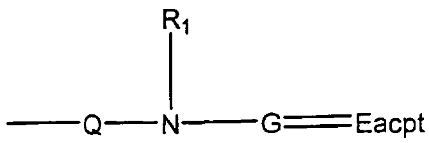 formula (0)

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group;
wherein the structures (i), (ii) and (iii) are:

Structure (i)

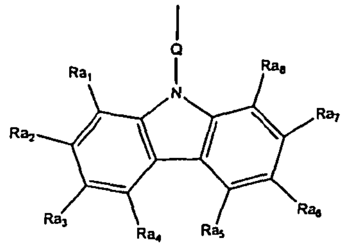

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

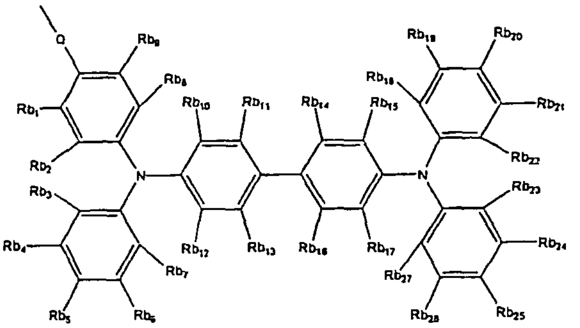

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)

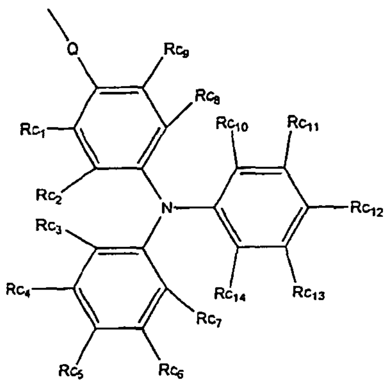

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons.

**2.** The polymer of Claim 1, wherein the formulae (I), (II), (III) and (IV) represent the following formulae (Ia), (IIa), (IIIa) and (IVa), respectively:

(Ia)

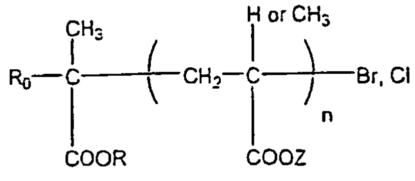

wherein $R_0$, R and Z are the same meaning as in formula (I); and n is an integer of 10 to 10,000;

(IIa)

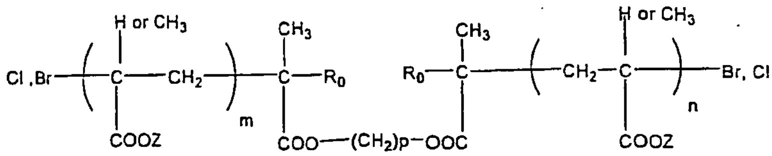

wherein $R_0$, R and Z are the same meaning as in formula (H); and m and n are an integer of 5 to 10,000, respectively;

(IIIa)

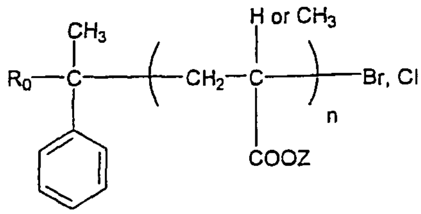

wherein $R_0$ and Z are the same meaning as in formula (TII); and n is an integer of 10 to 10,000;

(IVa)

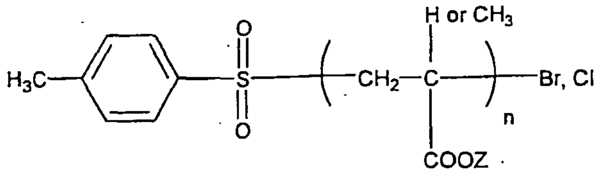

wherein Z is the same meaning as in formula (IV); and n is an integer of 10 to 10,000.

3. The polymer of claim 1 having formula (I).

4. The polymer of Claim 1, wherein the formulae (I), (II), (III) and (IV) represent the following formulae (Ib), (IIb), (IIIb) and (IVb), respectively:

(Ib)

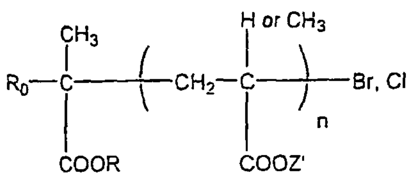

wherein $R_0$, R and Z' are the same meaning as in formula (I); and n is an integer of 10 to 10,000;

(IIb)

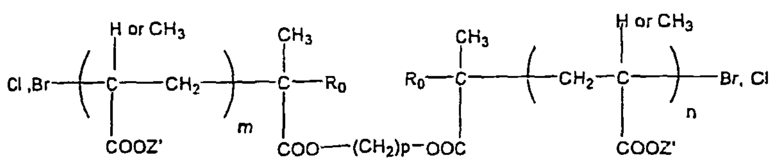

wherein $R_0$, R and Z' are the same meaning as in formula (II); and m and n are an integer of 5 to 10,000, respectively;

(IIIb)

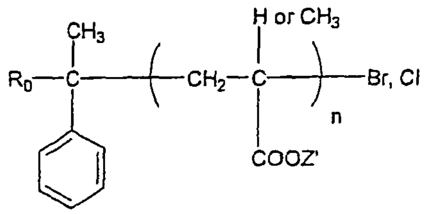

wherein $R_0$ and Z' are the same meaning as in formula (III); and n is an integer of 10 to 10,000;

(IVb)

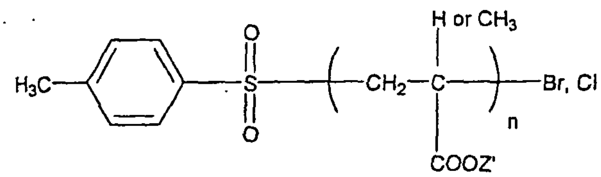

wherein Z' is the same meaning as in formula (IV); and n is an integer of 10 to 10,000.

**5.** The polymer of Claim 1, wherein the formulae (I), (II), (III) and (IV) represent the following formulae (Ic), (IIc), (IIIc) and (IVc), respectively:

(Ic)

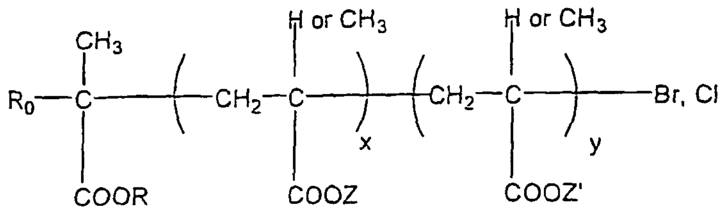

wherein $R_0$, R, Z and Z' are the same meaning as in formula (I); x is an integer of 5 to 10,000; and y is an integer of 5 to 10,000;

(IIc)

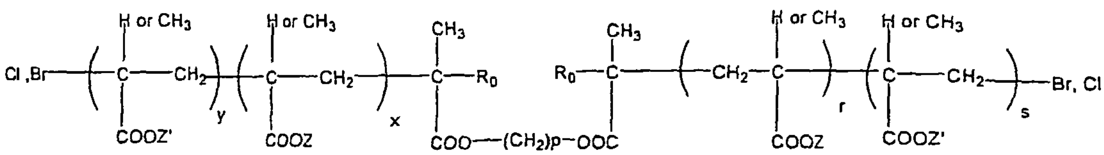

wherein $R_0$, R, Z and Z' are the same meaning as in formula (II); x is an integer of 5 to 10,000; y is an integer of 5 to 10,000; r is an integer of 5 to 10,000; and s is an integer of 5 to 10,000;

(IIIc)

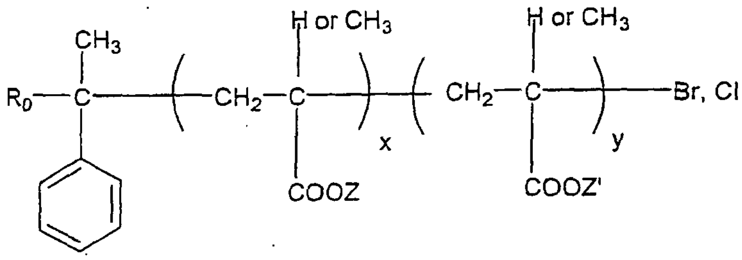

wherein $R_0$, Z and Z' are the same meaning as in formula (III); and x is an integer of 5 to 10,000; and y is an integer of 5 to 10,000;

(IVc)

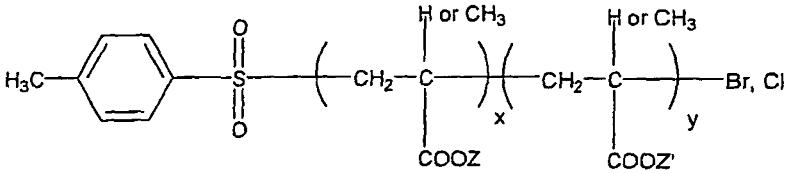

wherein Z and Z' are the same meaning as in formula (IV); and x is an integer of 5 to 10,000; and y is an integer of 5 to 10,000.

**6.** A method for producing a polymer according to claim 1 comprising
polymerizing a monomer by a living radical polymerization technique, wherein the monomer comprises a structure selected from the group consisting of structures (i), (ii) and (iii):

Structure (i)

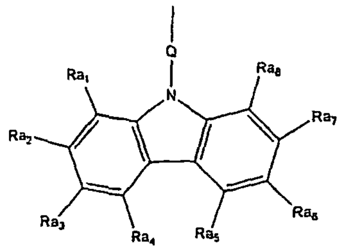

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

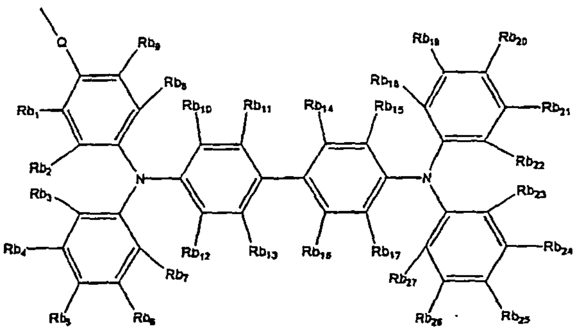

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)

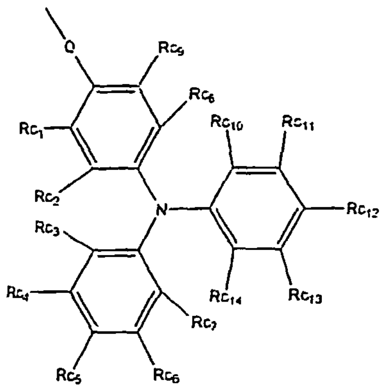

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons; or
wherein the monomer comprises a structure represented by the formula (0);

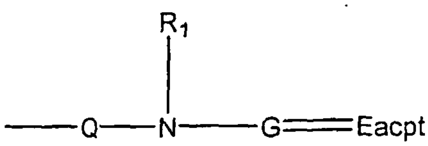 formula (0)

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group.

**7.** The method of Claim 6, wherein the polymer is represented by a formula selected from the group consisting of the formulae (Ia), (IIa), (IIIa) and (IVa) set forth in Claim 3.

**8.** The method of Claim 6, wherein the living radical polymerization technique comprises contacting the monomer with a transition metal catalyst selected from the group consisting of copper bromide and copper chloride.

9. The method of Claim 6, wherein the polymer is represented by a formula selected from the group consisting of the formulae (Ib), (IIb), (IIIb) and (IVb) set forth in Claim 4.

10. A method for producing a co-polymer according to claim 1 comprising copolymerizing at least a first monomer and a second monomer by a living radical polymerization technique, wherein the first monomer comprises a structure selected from the group consisting of structures (i), (ii) and (iii):

Structure (i)

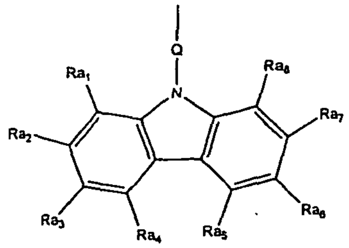

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

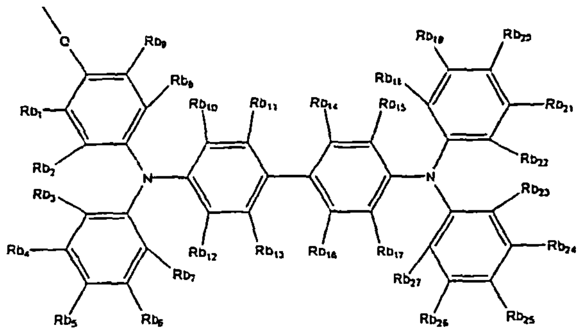

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)

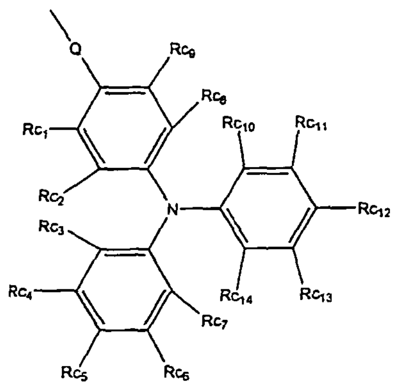

wherein Q represents an alkylene group, with or without a hetero atom; $Rc_1$-$Rc_{14}$ are each independently selected

from the group consisting of a hydrogen atom, a linear alkyl group with up to 10 carbons, a branched alkyl group with up to 10 carbons, and an aromatic group with up to 10 carbons; and
wherein the second monomer comprises a structure represented by the formula (0):

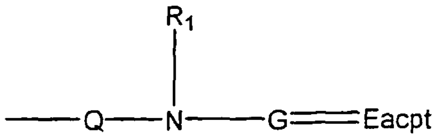 formula (0)

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group.

**11.** The method of Claim 10, wherein the polymer is represented by a formula selected from the group consisting of the formulae (Ic), (IIc), (IIIc) and (IVc) set forth in Claim 5.

**12.** The method of Claim 10, wherein the living radical polymerization technique comprises contacting the monomer with a transition metal catalyst selected from the group consisting of copper bromide and copper chloride.

**13.** A composition comprising a polymer obtainable by living radical polymerization, wherein:

(a) the living radical polymerization is carried out using a monomer, a polymerization initiator, transition metal catalyst and a ligand capable of reversibly forming a complex with the transition metal catalyst,
(b) the polymer comprises at least one of a first repeat unit including a moiety having charge transport ability and a second repeat unit including a moiety having non-linear-optical ability, and
(c) the composition exhibits photorefractive ability,
wherein the moiety having charge transport ability is selected from the group consisting of the structures (i), (ii) and (iii) and the moiety having non-linear-optical ability is represented by the formula (0);

wherein the structures (i), (ii) and (iii) are:

Structure (i)

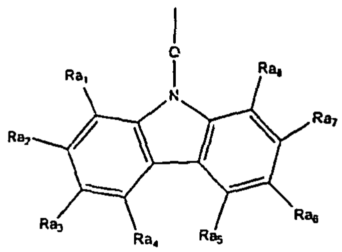

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are independently selected from the group consisting of a hydrogen atom, a linear alkyl group with up to 10 carbons, a branched alkyl group with up to 10 carbons, and an aromatic group with up to 10 carbons;

Structure (ii)

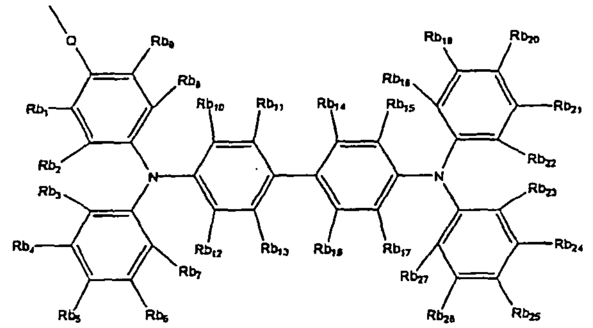

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)

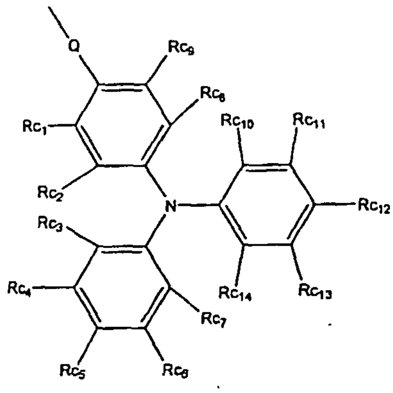

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group with up to 10 carbons, and an aromatic group with up to 10 carbons;
wherein the formula (0) is:

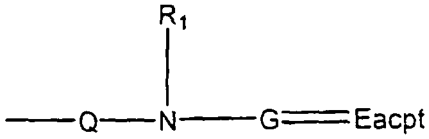

formula (0)

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group.

**14.** The composition of Claim 13, wherein the transition metal catalyst is selected from the group consisting of copper bromide and copper chloride.

**15.** A composition according to claim 13 comprising a co-polymer obtainable by radical polymerization, wherein (a) the co-polymer comprises a first repeating unit selected from the group consisting of the structures (i)", (ii)" and (iii)", and a second repeating unit represented by the formula (0)"; wherein (b) the composition exhibits photorefractive ability:

Structure (i)”

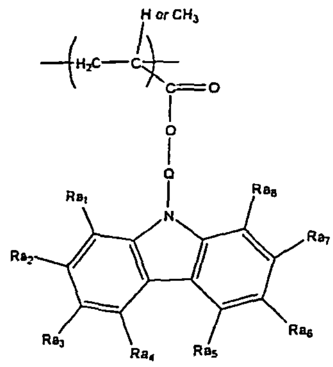

wherein Q represents an alkylene group, with or without a hetero atom; $Ra_1$, $Ra_2$, $Ra_3$, $Ra_4$, $Ra_5$, $Ra_6$, $Ra_7$, and $Ra_8$ are each independently selected from the group consisting of a hydrogen atom, a linear alkyl group with up to 10 carbons, a branched alkyl group with up to 10 carbons, and an aromatic group with up to 10 carbons;

Structure (ii)”

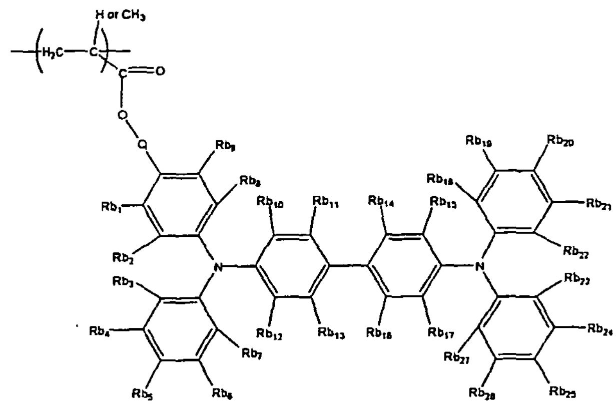

wherein Q represents an alkylene group, with or without a hetero atom; $Rb_1$-$Rb_{27}$ are each independently selected from the group consisting of a hydrogen atom, a linear alkyl group with up to 10 carbons, a branched alkyl group with up to 10 carbons, and an aromatic group with up to 10 carbons;

Structure (iii)”

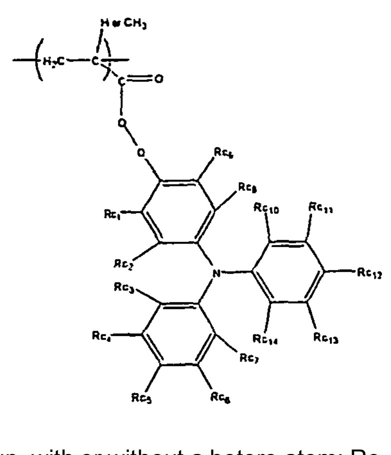

wherein Q represents an alkylene group, with or without a hetero atom; $Rc_1$-$Rc_{14}$ are each independently selected from the group consisting of a hydrogen atom, a linear alkyl group with up to 10 carbons, a branched alkyl group

with up to 10 carbons, and an aromatic group with up to 10 carbons;

Formula (0)"

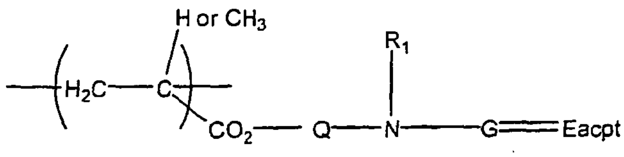

wherein Q represents an alkylene group, with or without a hetero atom; $R_1$ is selected from the group consisting of a hydrogen atom, a linear alkyl group with up to 10 carbons, a branched alkyl group with up to 10 carbons, and an aromatic group with up to 10 carbons; G is a group having a bridge of $\pi$-conjugated bond; and Eacpt is an electron acceptor group.

**16.** The polymer of claim 1, method of claims 6 or 10 or the compositions of Claims 13 or 15, wherein G in formula (0)" is represented by a structure selected from the group consisting of the structures (iv), (v) and (vi);
wherein structures (iv), (v) and (vi) are:

Structure (iv)

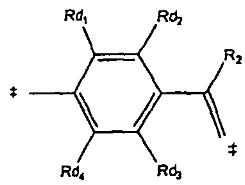

,

Structure (v)

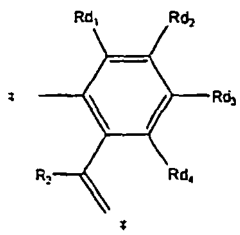

wherein, in both structures (iv) and (v), $Rd_1$-$Rd_4$ are each independently selected from the group consisting of a hydrogen atom, a linear alkyl group with up to 10 atoms, a branched alkyl group with up to 10 atoms, and an aromatic group with up to 10 carbons; $R_2$ is selected from the group consisting of a hydrogen atom, a linear alkyl group with up to 10 atoms, a branched alkyl group with up to 10 atoms, and an aromatic group with up to 10 carbons;

Structure (vi)

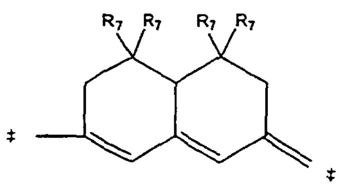

wherein $R_7$ represents a linear or branched alkyl group with up to 10 carbons; and wherein Eacpt in formula (0)" is an electron acceptor group and represented by a structure selected from the group consisting of the structures;

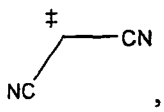 , 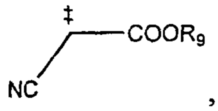 , 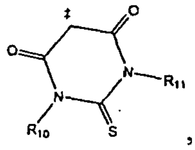 , 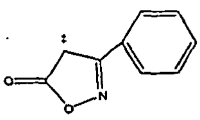 , 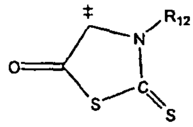

wherein $R_9$, $R_{10}$, $R_{11}$ and $R_{12}$ are each independently selected from the group consisting of a hydrogen atom, a linear alkyl group with up to 10 atoms, a branched alkyl group with up to 10 atoms, and an aromatic group with up to 10 carbons.

**17.** The composition of Claim 16, wherein the co-polymer comprises a third repeating unit including a third moiety having plasticizing ability.

**18.** The composition of Claim 17, wherein the third repeating unit including a third moiety having plasticizing ability is represented by the following structure:

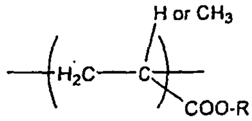

122

wherein R is selected from the group consisting of a linear alkyl group with up to 10 carbons, a linear alkenyl group with up to 10 carbons, a branched alkyl group with up to 10 carbons, and a branched alkenyl group with up to 10 carbons.

**19.** A composition according to claim 13 or claim 15 comprising a block co-polymer, wherein (a) the block co-polymer comprises a first block unit including a first moiety selected from the group consisting of the structures (i), (ii) and (iii), and a second block unit including a second moiety represented by the formula (0); wherein (b) the composition exhibits photorefractive ability.

**20.** The composition of Claim 19, wherein the block co-polymer comprises a third repeating block unit including a third moiety having plasticizing ability.

**21.** The composition of Claim 20, wherein the third moiety having plasticizing ability is selected from the group consisting of a linear alkyl group with up to 10 carbons, a linear alkenyl group with up to 10 carbons, a branched alkyl group with up to 10 carbons, and a branched alkenyl group with up to 10 carbons.

**22.** The composition as recited in any one of Claims 13, 15 and 19 further comprising a plasticizer and a sensitizer.

**23.** The composition as recited in Claim 22, wherein the plascticizer is N-alkyl carbazole or triphenylamine derivatives which contains electron acceptor group as depicted in the following structure 4, 5, or 6:

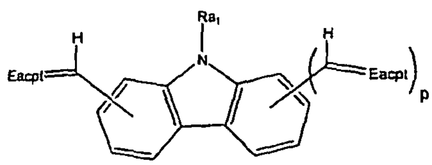

structure 4

wherein $Ra_1$ is independently selected from the group consisting of a hydrogen atom, a linear alkyl group with up to 10 carbons, a branched alkyl group with up to 10 carbons, and an aromatic group with up to 10 carbons; p is 0 or 1;

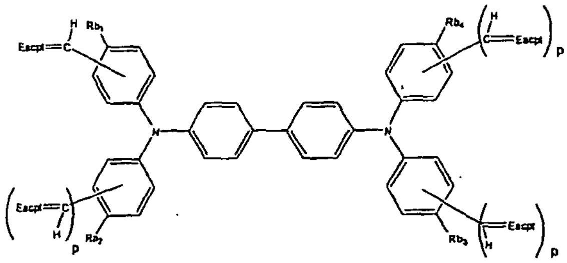

structure 5

wherein $Rb_1$-$Rb_4$ are each independently selected from the group consisting of a hydrogen atom, a linear alkyl group with up to 10 carbons, a branched alkyl group with up to 10 carbons, and an aromatic group with up to 10 carbons; p is 0 or 1;

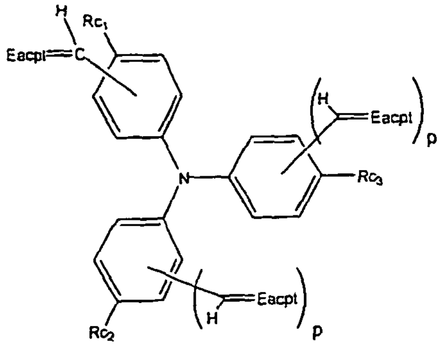

structure 6

wherein $Rc_1$-$Rc_3$ are each independently selected from the group consisting of a hydrogen atom, a linear alkyl group with up to 10 carbons, a branched alkyl group with up to 10 carbons, and an aromatic group with up to 10 carbons; P is 0 or 1;

wherein Eacpt is an electron acceptor group and represented by a structure selected from the group consisting of the structures;

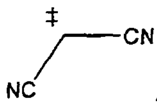 , 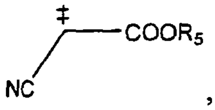 , 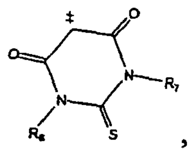 , 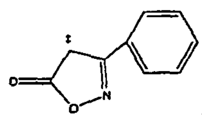 , 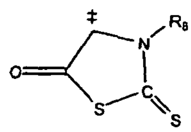

wherein $R_5$, $R_6$, $R_7$ and $R_8$ are each independently selected from the group consisting of a hydrogen atom, a linear alkyl group with up to 10 atoms, a branched alkyl group with up to 10 atoms, and an aromatic group with up to 10 carbons.

**Patentansprüche**

**1.** Polymer, das durch eine Formel dargestellt wird, die aus der Gruppe der Formeln (I), (II), (III) und (IV) ausgewählt ist:

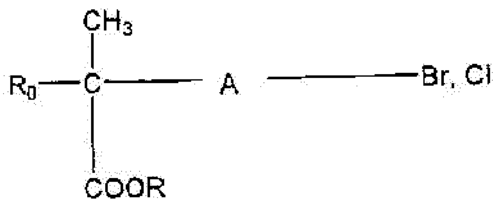

(I)

worin $R_0$ für ein Wasserstoffatom oder eine Alkylgruppe mit bis zu 10 Kohlenstoffen steht; R aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; A für eine Wiederholungsstruktur steht, die mindestens eine der im Folgenden angegebenen Wiederholungseinheiten 1 und 2 umfasst;

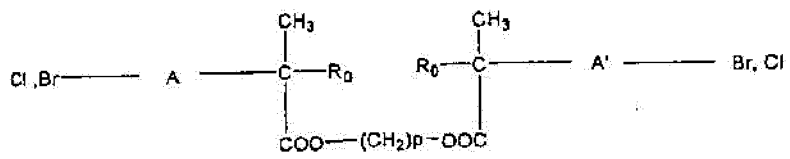

(II)

worin $R_0$ jeweils unabhängig voneinander für ein Wasserstoffatom oder eine Alkylgruppe mit bis zu 10 Kohlenstoffen steht; p für eine ganze Zahl von 2 bis 6 steht; A und A' jeweils unabhängig voneinander für eine Wiederholungsstruktur, die mindestens eine der im Folgenden angegebenen Wiederholungseinheiten 1 und 2 umfasst, stehen;

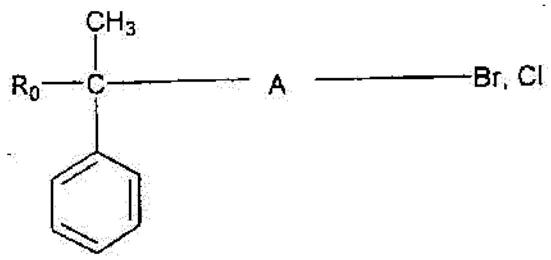

(III)

worin $R_0$ für ein Wasserstoffatom oder eine Alkylgruppe mit bis zu 10 Kohlenstoffen steht; A für eine Wiederholungsstruktur, die mindestens eine der im Folgenden angegebenen Wiederholungseinheiten 1 und 2 umfasst, steht;

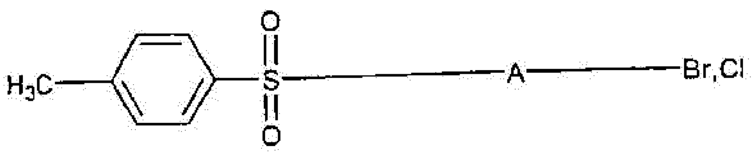

(IV)

worin A für eine Wiederholungsstruktur, die mindestens eine der im Folgenden angegebenen Wiederholungseinheiten 1 und 2 umfasst, steht;

Wiederholungseinheit 1

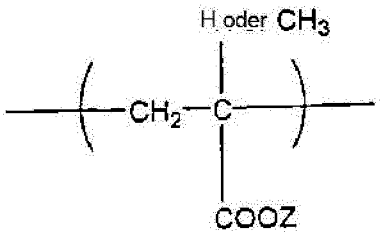

Wiederholungseinheit 2

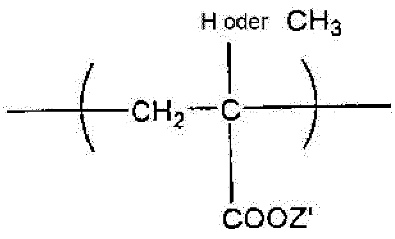

worin Z durch eine Struktur dargestellt wird, die aus der Gruppe der Strukturen (i), (ii) und (iii) ausgewählt ist; und Z' durch die Formel (0) dargestellt wird;

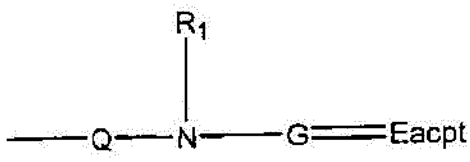

Formel (0)

worin Q für eine Alkylengruppe mit einem oder ohne ein Heteroatom steht; $R_1$ aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; G für eine Gruppe mit einer Brücke einer konjugierten $\pi$-Bindung steht; und Eacpt für eine Elektronenakzeptorgruppe steht;
wobei die Strukturen (i), (ii) und (iii) die Folgenden sind:

Struktur (i)

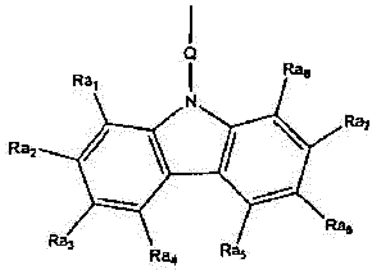

worin Q für eine Alkylengruppe mit einem oder ohne ein Heteroatom steht; $Ra_1$, $Ra_2$, $Ra_3$, $Ra_4$, $Ra_5$, $Ra_6$, $Ra_7$ und $Ra_8$ unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (ii)

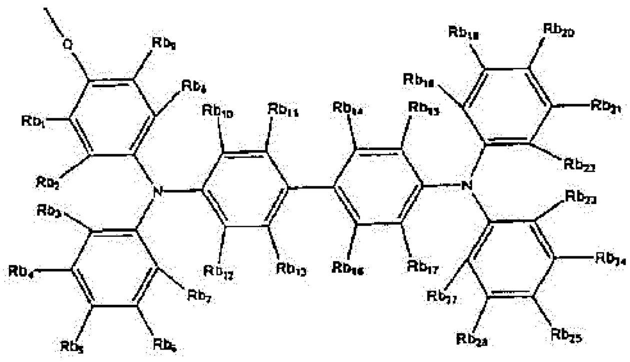

worin Q für eine Alkylengruppe mit einem oder ohne ein Heteroatom steht; $Rb_1$-$Rb_{27}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (iii)

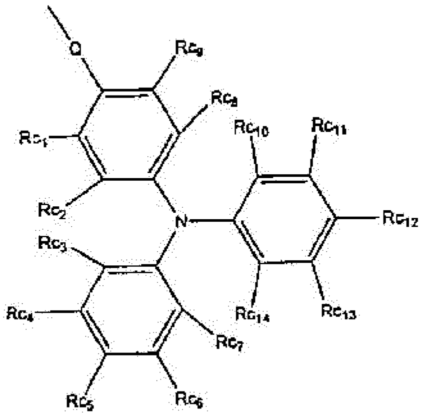

worin Q für eine Alkylengruppe mit einem oder ohne ein Heteroatom steht; $Rc_1$-$Rc_{14}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind.

**2.** Polymer nach Anspruch 1, wobei die Formeln (I), (II), (III) und (IV) für die im Folgenden angegebenen Formeln (Ia), (IIa), (IIIa) bzw. (IVa) stehen:

(Ia)

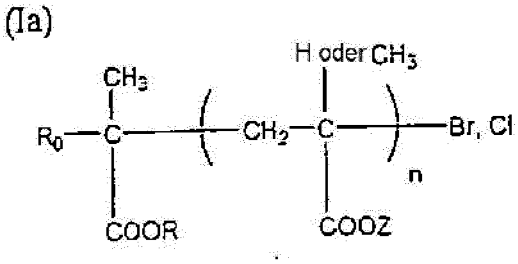

worin $R_0$, R und Z die gleiche Bedeutung wie in Formel (I) aufweisen; und n für eine ganze Zahl von 10 bis 10000 steht;

(IIa)

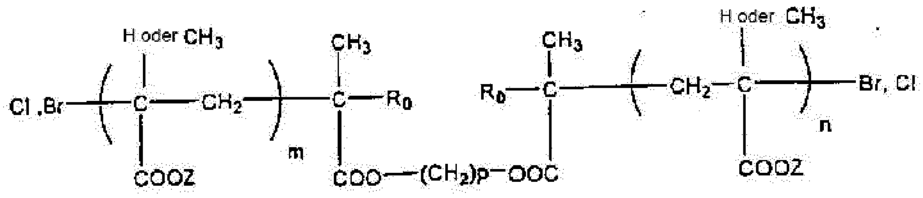

worin $R_0$, R und Z die gleiche Bedeutung wie in Formel (II) aufweisen; und m und n jeweils für eine ganze Zahl von 5 bis 10000 stehen;

(IIIa)

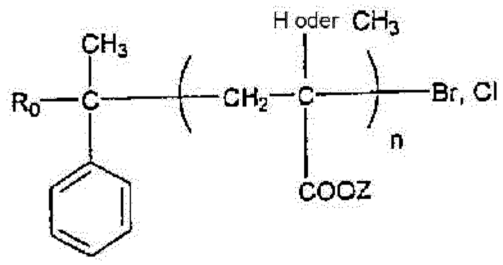

worin $R_0$ und Z die gleiche Bedeutung wie in Formel (III) aufweisen; und n für eine ganze Zahl von 10 bis 10000 steht;

(IVa)

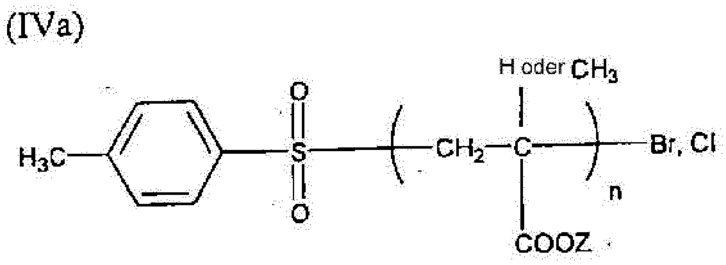

worin Z die gleiche Bedeutung wie in Formel (IV) aufweist; und n für eine ganze Zahl von 10 bis 10000 steht.

3. Polymer nach Anspruch 1 mit der Formel (I).

4. Polymer nach Anspruch 1, wobei die Formeln (I), (II), (III) und (IV) für die im Folgenden angegebenen Formeln (Ib), (IIb), (IIIb) bzw. (IVb) stehen:

(Ib)

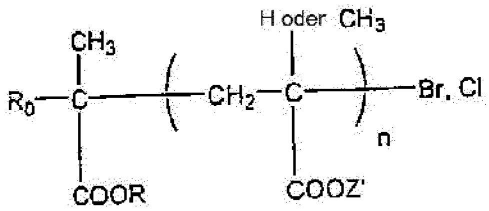

worin $R_0$, R und Z' die gleiche Bedeutung wie in Formel (I) aufweisen; und n für eine ganze Zahl von 10 bis 10000 steht;

(IIb)

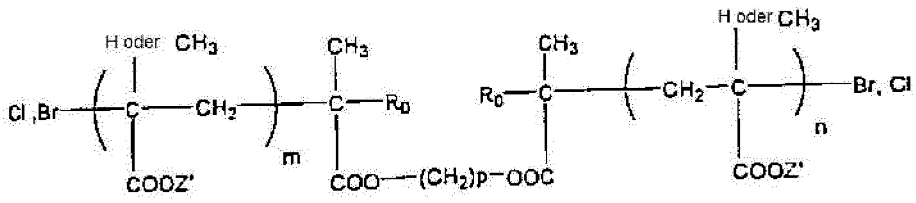

worin $R_0$, R und Z' die gleiche Bedeutung wie in Formel (II) aufweisen; und m und n jeweils für eine ganze Zahl von 5 bis 10000 stehen;

(IIIb)

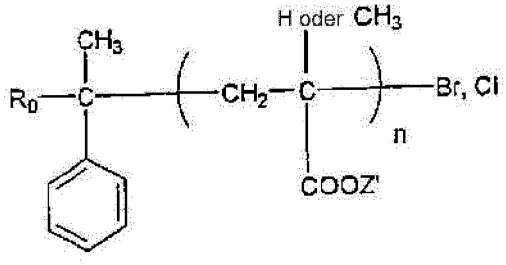

worin $R_0$ und Z' die gleiche Bedeutung wie in Formel (III) aufweisen; und n für eine ganze Zahl von 10 bis 10000 steht;

(IVb)

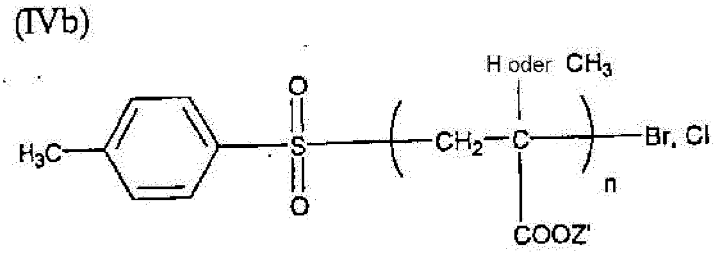

worin Z' die gleiche Bedeutung wie in Formel (IV) aufweist; und n für eine ganze Zahl von 10 bis 10000 steht.

**5.** Polymer nach Anspruch 1, wobei die Formeln (I), (II), (III) und (IV) für die im Folgenden angegebenen Formeln (Ic), (IIc), (IIIc) bzw. (IVc) stehen:

(Ic)

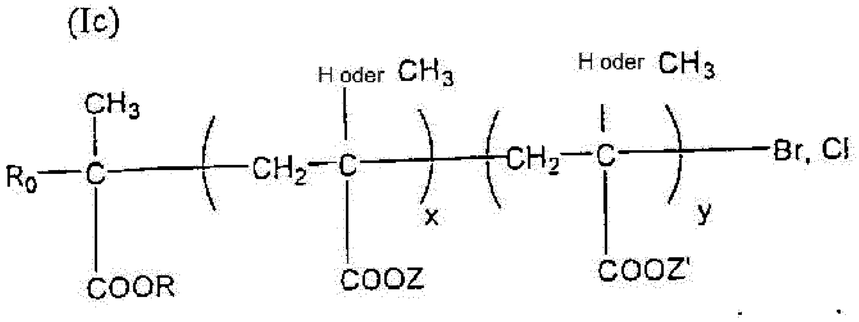

worin $R_0$, R, Z und Z' die gleiche Bedeutung wie in Formel (I) aufweisen; x für eine ganze Zahl von 5 bis 10000 steht; und y für eine ganze Zahl von 5 bis 10000 steht;

(IIc)

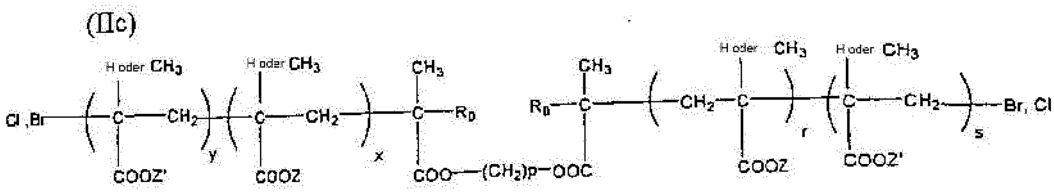

worin $R_0$, R, Z und Z' die gleiche Bedeutung wie in Formel (II) aufweisen; x für eine ganze Zahl von 5 bis 10000 steht; y für eine ganze Zahl von 5 bis 10000 steht; r für eine ganze Zahl von 5 bis 10000 steht; und s für eine ganze Zahl von 5 bis 10000 steht;

(IIIc)

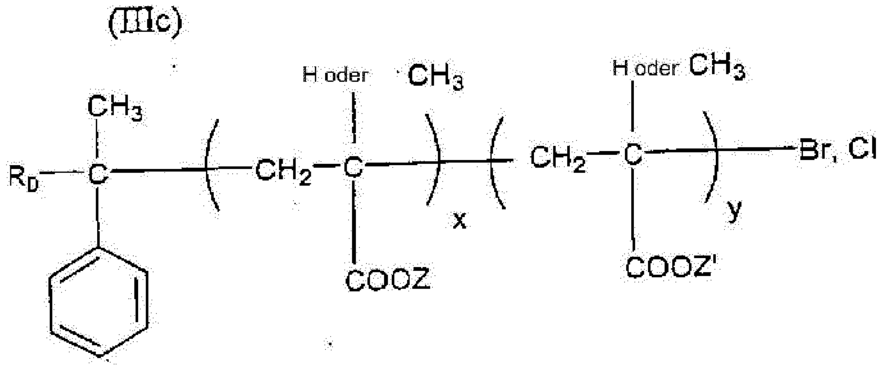

worin $R_0$, Z und Z' die gleiche Bedeutung wie in Formel (III) aufweisen; und x für eine ganze Zahl von 5 bis 10000 steht; und y für eine ganze Zahl von 5 bis 10000 steht;

(IVc)

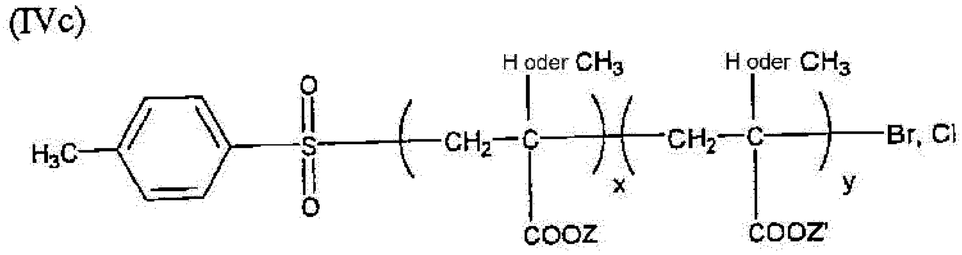

worin Z und Z' die gleiche Bedeutung wie in Formel (IV) aufweisen; und x für eine ganze Zahl von 5 bis 10000 steht; und y für eine ganze Zahl von 5 bis 10000 steht.

**6.** Verfahren zur Herstellung eines Polymers nach Anspruch 1, das das Polymerisieren eines Monomers durch eine lebende radikalische Polymerisationstechnik umfasst, wobei das Monomer eine Struktur umfasst, die aus der Gruppe der Strukturen (i), (ii) und (iii) ausgewählt ist:

Struktur (i)

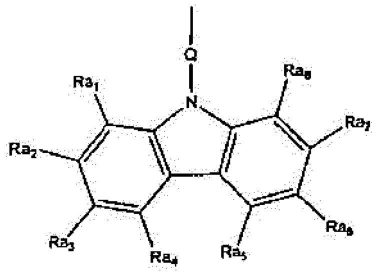

worin Q für eine Alkylengruppe mit einem oder ohne ein Heteroatom steht; $Ra_1$, $Ra_2$, $Ra_3$, $Ra_4$, $Ra_5$, $Ra_6$, $Ra_7$ und $Ra_8$ unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (ii)

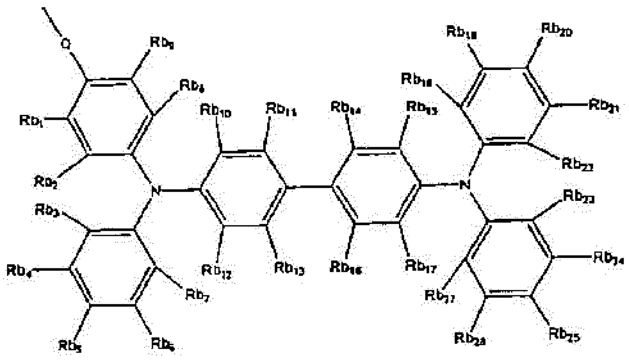

worin Q für eine Alkylengruppe mit einem oder ohne ein Heteroatom steht; $Rb_1$-$Rb_{27}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (iii)

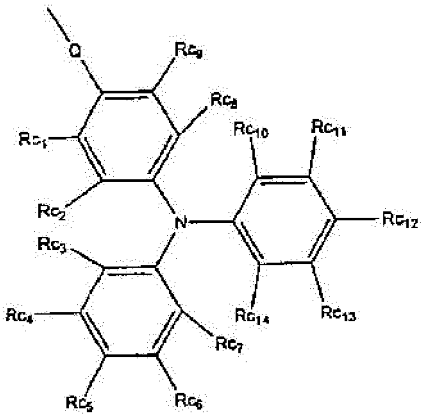

worin Q für eine Alkylengruppe mit einem oder ohne ein Heteroatom steht; $Rc_1$-$Rc_{14}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;
oder wobei das Monomer eine Struktur der Formel (0) umfasst:

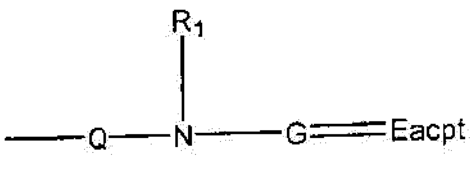
Formel (0)

worin Q für eine Alkylengruppe mit einem oder ohne ein Heteroatom steht; $R_1$ aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; G für eine Gruppe mit einer Brücke einer konjugierten $\pi$-Bindung steht; und Eacpt für eine Elektronenakzeptorgruppe steht.

**7.** Verfahren nach Anspruch 6, wobei das Polymer durch eine Formel dargestellt wird, die aus der Gruppe der in Anspruch 3 angegebenen Formeln (Ia), (IIa), (IIIa) und (IVa) ausgewählt ist.

**8.** Verfahren nach Anspruch 6, wobei die lebende radikalische Polymerisationstechnik das Inkontaktbringen des Monomers mit einem Übergangsmetallkatalysator, der aus der Gruppe von Kupferbromid und Kupferchlorid ausgewählt

ist, umfasst.

**9.** Verfahren nach Anspruch 6, wobei das Polymer durch eine Formel dargestellt wird, die aus der Gruppe der in Anspruch 4 angegebenen Formeln (Ib), (IIb), (IIIb) und (IVb) ausgewählt ist.

**10.** Verfahren zur Herstellung eines Copolymers nach Anspruch 1, das das Copolymerisieren von mindestens einem ersten Monomer und einem zweiten Monomer durch eine lebende radikalische Polymerisationstechnik umfasst, wobei das erste Monomer eine Struktur umfasst, die aus der Gruppe der Strukturen (i), (ii) und (iii) ausgewählt ist:

Struktur (i)

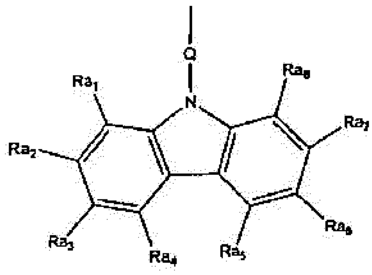

worin Q für eine Alkylengruppe mit einem oder ohne ein Heteroatom steht; $Ra_1$, $Ra_2$, $Ra_3$, $Ra_4$, $Ra_5$, $Ra_6$, $Ra_7$ und $Ra_8$ unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (ii)

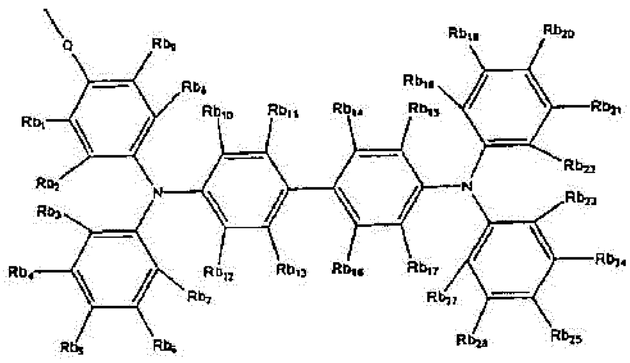

worin Q für eine Alkylengruppe mit einem oder ohne ein Heteroatom steht; $Rb_1$-$Rb_{27}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (iii)

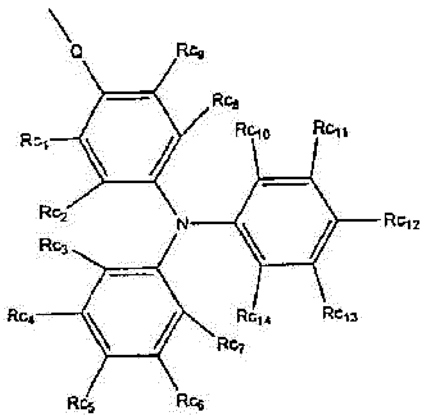

worin Q für eine Alkylengruppe mit einem oder ohne ein Heteroatom steht; $Rc_1$-$Rc_{14}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind; und

wobei das zweite Monomer eine Struktur umfasst, die durch die Formel (0) dargestellt wird:

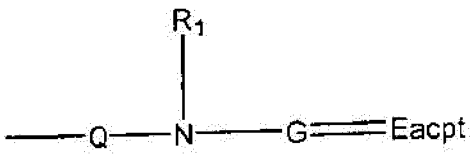

Formel (0)

worin Q für eine Alkylengruppe mit einem oder ohne ein Heteroatom steht; $R_1$ aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; G für eine Gruppe mit einer Brücke einer konjugierten $\pi$-Bindung steht; und Eacpt für eine Elektronenakzeptorgruppe steht

**11.** Verfahren nach Anspruch 10, wobei das Polymer durch eine Formel dargestellt wird, die aus der Gruppe der in Anspruch 5 angegebenen Formeln (Ic), (IIc), (IIIc) und (IVc) ausgewählt ist.

**12.** Verfahren nach Anspruch 10, wobei die lebende radikalische Polymerisationstechnik das Inkontaktbringen des Monomers mit einem Übergangsmetallkatalysator, der aus der Gruppe von Kupferbromid und Kupferchlorid ausgewählt ist, umfasst.

**13.** Zusammensetzung, die ein Polymer umfasst, das durch eine lebende radikalische Polymerisation erhalten werden kann, wobei:

(a) die lebende radikalische Polymerisation unter Verwendung eines Monomers, eines Polymerisationsinitiators, eines Übergangsmetallkatalysators und eines Liganden, der reversibel einen Komplex mit dem Übergangsmetallkatalysator bilden kann, durchgeführt wird,
(b) das Polymer mindestens eine Komponente von einer ersten Wiederholungseinheit, die eine Einheit mit Ladungstransportfähigkeit umfasst, und einer zweiten Wiederholungseinheit, die eine Einheit mit nichtlinearen optischen Eigenschaften umfasst, umfasst und
(c) die Zusammensetzung lichtbrechende Eigenschaften zeigt, wobei die Einheit mit Ladungstransportfähigkeit aus der Gruppe der Strukturen (i), (ii) und (iii) ausgewählt ist, und die Einheit mit nichtlinearen optischen Eigenschaften durch die Formel (0) dargestellt wird;

wobei die Strukturen (i), (ii) und (iii) die Folgenden sind:

Struktur (i)

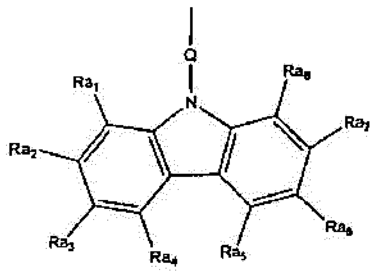

worin Q für eine Alkylengruppe mit einem oder ohne ein Heteroatom steht; $Ra_1$, $Ra_2$, $Ra_3$, $Ra_4$, $Ra_5$, $Ra_6$, $Ra_7$ und $Ra_8$ unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (ii)

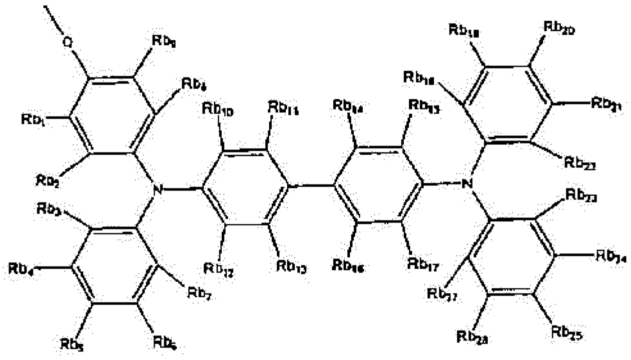

worin Q für eine Alkylengruppe mit einem oder ohne ein Heteroatom steht; $Rb_1$-$Rb_{27}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (iii)

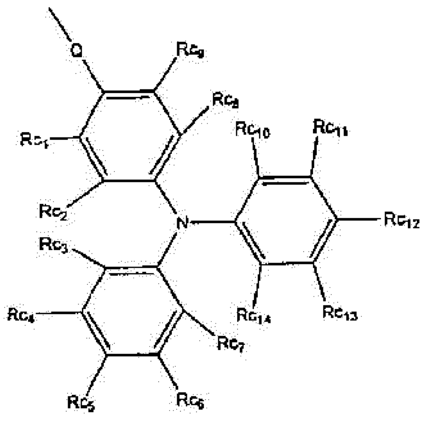

worin Q für eine Alkylengruppe mit einem oder ohne ein Heteroatom steht; $Rc_1$-$Rc_{14}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

wobei die Formel (0) die Folgende ist:

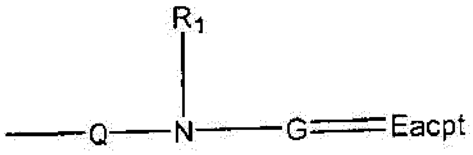

Formel (0)

worin Q für eine Alkylengruppe mit einem oder ohne ein Heteroatom steht; $R_1$ aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; G für eine Gruppe mit einer Brücke einer konjugierten $\pi$-Bindung steht; und Eacpt für eine Elektronenakzeptorgruppe steht.

**14.** Zusammensetzung nach Anspruch 13, wobei der Übergangsmetallkatalysator aus der Gruppe von Kupferbromid und Kupferchlorid ausgewählt ist.

**15.** Zusammensetzung nach Anspruch 13, die ein Copolymer umfasst, das durch eine radikalische Polymerisation erhalten werden kann, wobei (a) das Copolymer eine erste Wiederholungseinheit, die aus der Gruppe der Strukturen (i)", (ii)" und (iii)" ausgewählt ist, und eine zweite Wiederholungseinheit der Formel (0)" umfasst; wobei (b) die Zusammensetzung lichtbrechende Eigenschaften zeigt:

Struktur (i)"

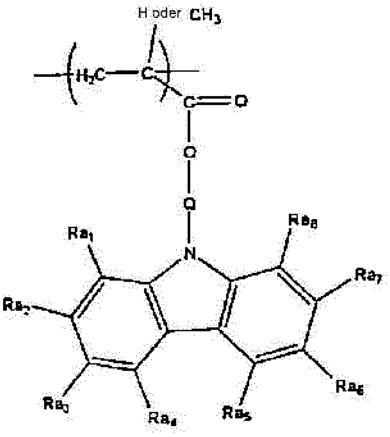

worin Q für eine Alkylengruppe mit einem oder ohne ein Heteroatom steht; $Ra_1$, $Ra_2$, $Ra_3$, $Ra_4$, $Ra_5$, $Ra_6$, $Ra_7$ und $Ra_8$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (ii)"

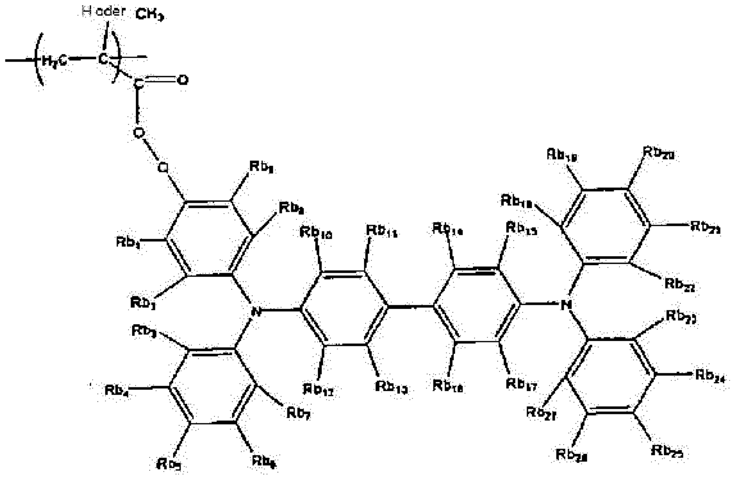

worin Q für eine Alkylengruppe mit einem oder ohne ein Heteroatom steht; $Rb_1$-$Rb_{27}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Struktur (iii)"

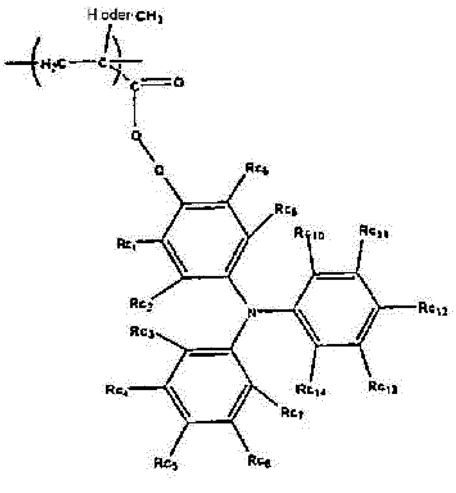

worin Q für eine Alkylengruppe mit einem oder ohne ein Heteroatom steht; $Rc_1$-$Rc_{14}$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind;

Formel (0)"

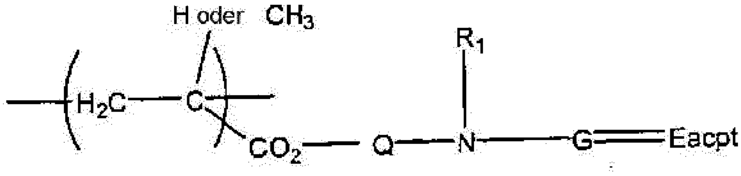

worin Q für eine Alkylengruppe mit einem oder ohne ein Heteroatom steht; $R_1$ aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; G für eine Gruppe mit

einer Brücke einer konjugierten π-Bindung steht; und Eacpt für eine Elektronenakzeptorgruppe steht.

**16.** Polymer nach Anspruch 1, Verfahren nach den Ansprüchen 6 oder 10 oder Zusammensetzungen nach den Ansprüchen 13 oder 15, wobei G in der Formel (0)" durch eine Struktur dargestellt wird, die aus der Gruppe der Strukturen (iv), (v) und (vi) ausgewählt ist;
wobei die Strukturen (iv), (v) und (vi) die Folgenden sind:

Struktur (iv)

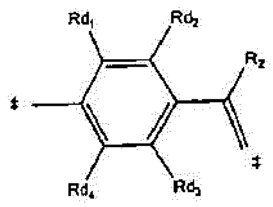

Struktur (v)

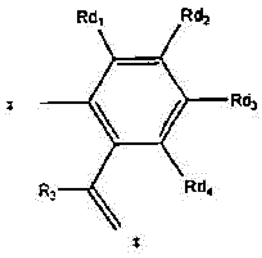

wobei in sowohl Struktur (iv) als auch (v) $Rd_1$-$Rd_4$ jeweils unabhängig voneinander aus der Gruppe von einem Wasserstoffatom, einer linearen Alkylgruppe mit bis zu 10 Atomen, einer verzweigten Alkylgruppe mit bis zu 10 Atomen und einer aromatischen Gruppe mit bis zu 10 Kohlenstoffen ausgewählt sind; $R_2$ aus der Gruppe von einem Wasserstoffatom, einer linearen Alkylgruppe mit bis zu 10 Atomen, einer verzweigten Alkylgruppe mit bis zu 10 Atomen und einer aromatischen Gruppe mit bis zu 10 Kohlenstoffen ausgewählt ist;

Struktur (vi)

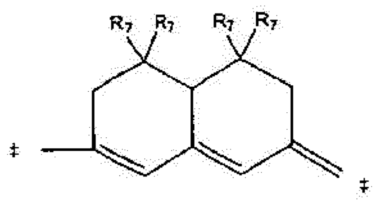

worin $R_7$ für eine lineare oder verzweigte Alkylgruppe mit bis zu 10 Kohlenstoffen steht; und
wobei Eacpt in der Formel (0)" für eine Elektronenakzeptorgruppe steht und durch eine Struktur dargestellt wird, die aus der Gruppe der folgenden Strukturen ausgewählt ist:

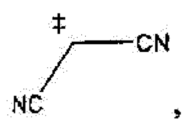 , 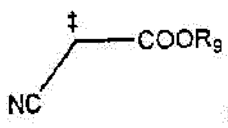 , 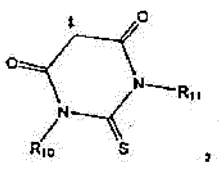 , 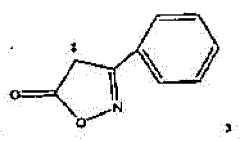 , 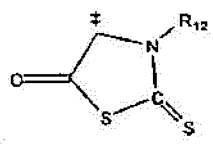

worin $R_9$, $R_{10}$, $R_{11}$ und $R_{12}$ jeweils unabhängig voneinander aus der Gruppe von einem Wasserstoffatom, einer

linearen Alkylgruppe mit bis zu 10 Atomen, einer verzweigten Alkylgruppe mit bis zu 10 Atomen und einer aromatischen Gruppe mit bis zu 10 Kohlenstoffen ausgewählt sind.

**17.** Zusammensetzung nach Anspruch 16, wobei das Copolymer eine dritte Wiederholungseinheit umfasst, die eine dritte Einheit mit Weichmachereigenschaften umfasst.

**18.** Zusammensetzung nach Anspruch 17, wobei die dritte Wiederholungseinheit, die eine dritte Einheit mit Weichmachereigenschaften umfasst, durch die folgende Struktur dargestellt wird:

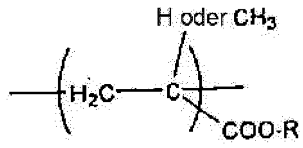

worin R aus der Gruppe von einer linearen Alkylgruppe mit bis zu 10 Kohlenstoffen, einer lineare Alkenylgruppe mit bis zu 10 Kohlenstoffen, einer verzweigten Alkylgruppe mit bis zu 10 Kohlenstoffen und einer verzweigten Alkenylgruppe mit bis zu 10 Kohlenstoffen ausgewählt ist.

**19.** Zusammensetzung nach Anspruch 13 oder Anspruch 15, die ein Blockcopolymer umfasst, wobei (a) das Blockcopolymer eine erste Blockeinheit, die eine erste Einheit, die aus der Gruppe der Strukturen (i), (ii) und (iii) ausgewählt ist, umfasst, und eine zweite Blockeinheit, die eine zweite Einheit der Formel (0) umfasst, umfasst; wobei (b) die Zusammensetzung lichtbrechende Eigenschaften zeigt.

**20.** Zusammensetzung nach Anspruch 19, wobei das Blockcopolymer eine dritte Wiederholungsblockeinheit umfasst, die eine dritte Einheit mit Weichmachereigenschaften umfasst.

**21.** Zusammensetzung nach Anspruch 20, wobei die dritte Einheit mit Weichmachereigenschaften aus der Gruppe von einer linearen Alkylgruppe mit bis zu 10 Kohlenstoffen, einer linearen Alkenylgruppe mit bis zu 10 Kohlenstoffen, einer verzweigten Alkylgruppe mit bis zu 10 Kohlenstoffen und einer verzweigten Alkenylgruppe mit bis zu 10 Kohlenstoffen ausgewählt ist.

**22.** Zusammensetzung nach den Angaben in einem der Ansprüche 13, 15 und 19, die ferner einen Weichmacher und ein Sensibilisierungsmittel umfasst.

**23.** Zusammensetzung nach Anspruch 22, wobei der Weichmacher ein N-Alkylcarbazol- oder ein Triphenylaminderivat ist, das eine Elektronenakzeptorgruppe enthält, wie in den folgenden Strukturen 4, 5 oder 6 angegeben:

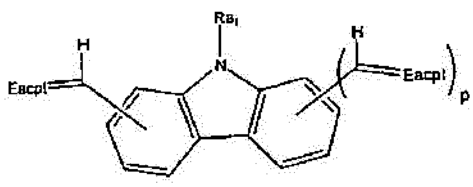

Struktur 4

worin $Ra_1$ unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt ist; p für 0 oder 1 steht;

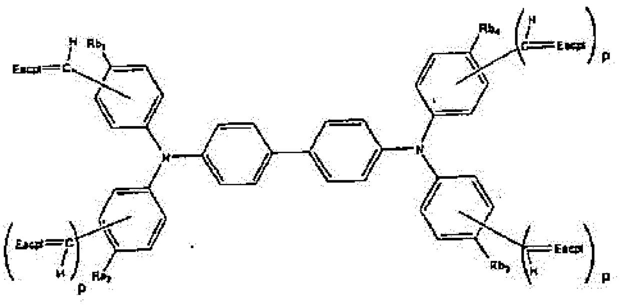

Struktur 5

worin $Rb_1$-$Rb_4$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind; p für 0 oder 1 steht;

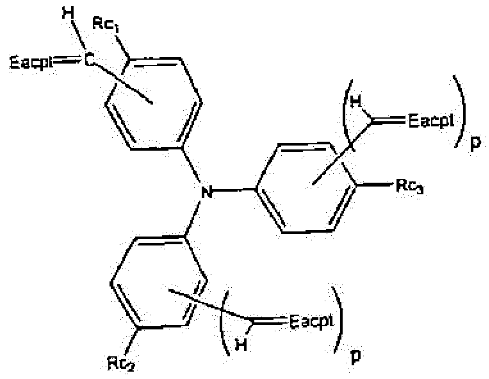

Struktur 6

worin $Rc_1$-$Rc_3$ jeweils unabhängig voneinander aus der Gruppe von einem Wasserstoffatom, einer linearen Alkylgruppe mit bis zu 10 Kohlenstoffen, einer verzweigten Alkylgruppe mit bis zu 10 Kohlenstoffen und einer aromatischen Gruppe mit bis zu 10 Kohlenstoffen ausgewählt sind; p für 0 oder 1 steht;
wobei Eacpt für eine Elektronenakzeptorgruppe steht und durch eine Struktur dargestellt wird, die aus der Gruppe der folgenden Strukturen ausgewählt ist:

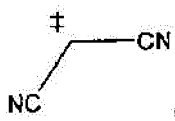 , 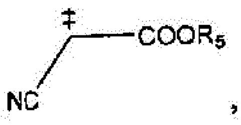 , 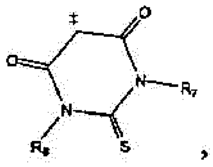 , 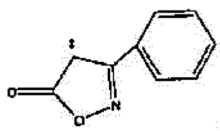 , 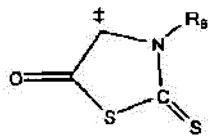

worin $R_5$, $R_6$, $R_7$ und $R_8$ jeweils unabhängig voneinander aus der Gruppe von einem Wasserstoffatom, einer linearen Alkylgruppe mit bis zu 10 Atomen, einer verzweigten Alkylgruppe mit bis zu 10 Atomen und einer aromatischen Gruppe mit bis zu 10 Kohlenstoffen ausgewählt sind.

## Revendications

**1.** Polymère qui est représenté par une formule choisie dans le groupe constitué par les formules (I), (II), (III) et (IV) :

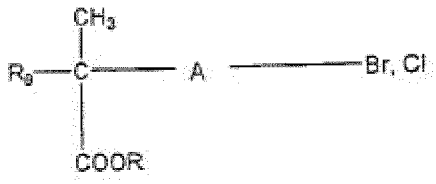

(I)

dans laquelle $R_0$ représente un atome d'hydrogène ou un groupe alkyle ayant jusqu'à 10 atomes de carbone ; R est choisi dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; A représente une structure répétée comprenant au moins l'un du motif répété 1 et du motif répété 2 ci-dessous ;

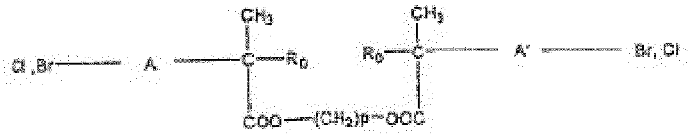

(II)

dans laquelle $R_0$ représentent chacun indépendamment un atome d'hydrogène ou un groupe alkyle ayant jusqu'à 10 atomes de carbone ; p est un nombre entier de 2 à 6 ; A et A' représentent chacun indépendamment une structure répétée comprenant au moins l'un du motif répété 1 et du motif répété 2 ci-dessous ;

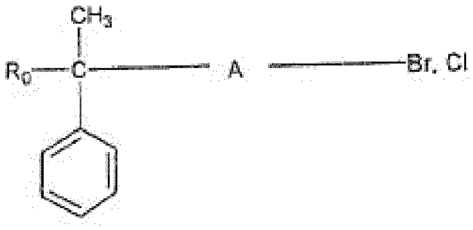

(III)

dans laquelle $R_0$ représente un atome d'hydrogène ou un groupe alkyle ayant jusqu'à 10 atomes de carbone ; A représente une structure répétée comprenant au moins l'un du motif répété 1 et du motif répété 2 ci-dessous ;

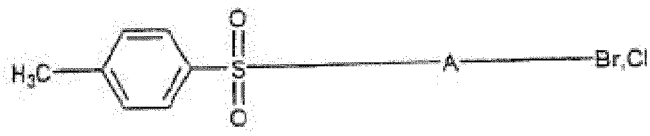

(IV)

dans laquelle A représente une structure répétée comprenant au moins l'un du motif répété 1 et du motif répété 2 ci-dessous ;

Motif répété 1

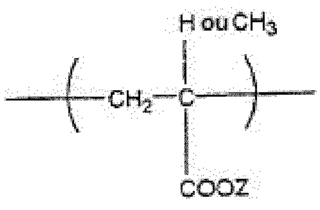

Motif répété 2

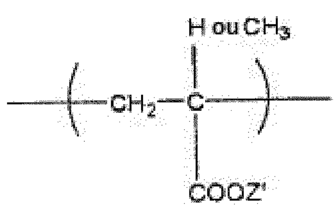

dans lesquels Z est représenté par une structure choisie dans le groupe constitué par les structures (i), (ii) et (iii) ;

et Z' est représenté par la formule (0) ;

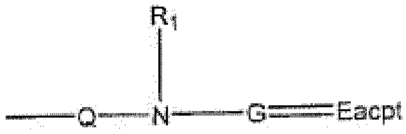

formule (0)

dans laquelle Q représente un groupe alkylène, avec ou sans hétéroatome ; $R_1$ est choisi dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; G est un groupe ayant un pont de liaison $\pi$-conjugué ; et Eacpt est un groupe électroaccepteur ;
dans lequel les structures (i), (ii) et (iii) sont :

Structure (i)

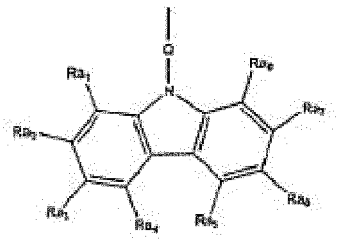

dans laquelle Q représente un groupe alkylène, avec ou sans hétéroatome ; $Ra_1$, $Ra_2$, $Ra_3$, $Ra_4$, $Ra_5$, $Ra_6$, $Ra_7$ et $Ra_8$ sont indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (ii)

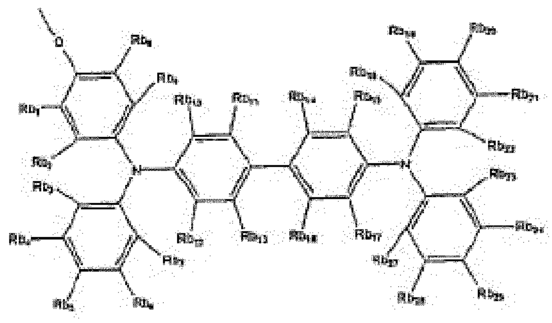

dans laquelle Q représente un groupe alkylène, avec ou sans hétéroatome ; $Rb_1$ à $Rb_{27}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (iii)

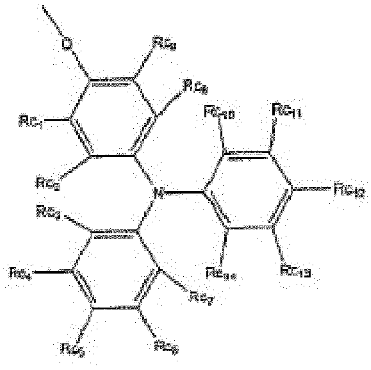

dans laquelle Q représente un groupe alkylène, avec ou sans hétéroatome ; $Rc_1$ à $Rc_{14}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone.

**2.** Polymère selon la revendication 1, dans lequel les formules (I), (II), (III) et (IV) représentent les formules (Ia), (IIa), (IIIa) et (IVa) suivantes, respectivement :

(Ia)

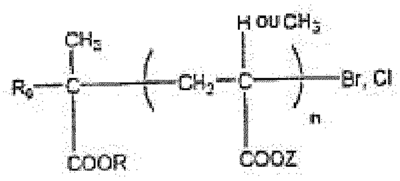

dans laquelle $R_0$, R et Z ont la même signification que dans la formule (I) ; et n est un nombre entier de 10 à 10 000 ;

(IIa)

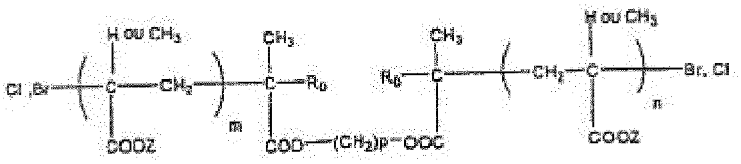

dans laquelle $R_0$, R et Z ont la même signification que dans la formule (II) ; et m et n sont un nombre entier de 5 à 10 000, respectivement ;

(IIIa)

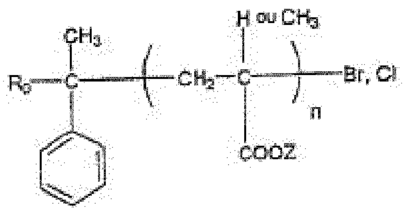

dans laquelle $R_0$ et Z ont la même signification que dans la formule (III) ; et n est un nombre entier de 10 à 10 000 ;

(IVa)

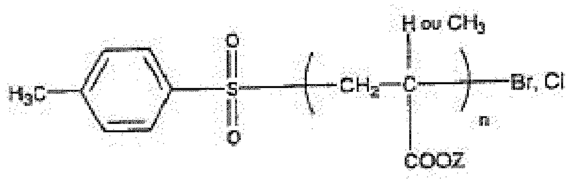

dans laquelle Z a la même signification que dans la formule (IV) ; et n est un nombre entier de 10 à 10 000.

3. Polymère selon la revendication 1, répondant à la formule (I).

4. Polymère selon la revendication 1, dans lequel les formules (I), (II), (III) et (IV) représentent les formules (Ib), (IIb), (IIIb) et (IVb) suivantes, respectivement :

(Ib)

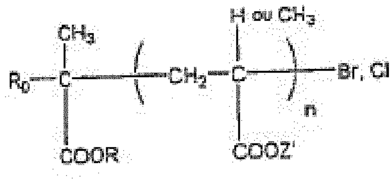

dans laquelle $R_0$, R et Z' ont la même signification que dans la formule (I) ; et n est un nombre entier de 10 à 10 000 ;

(IIb)

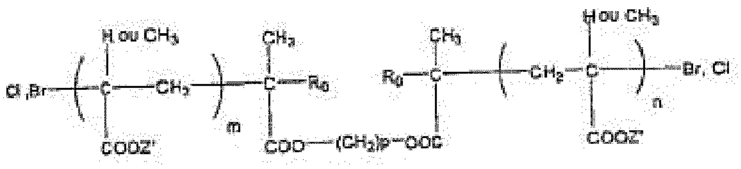

dans laquelle $R_0$, R et Z' ont la même signification que dans la formule (II) ; et m et n sont un nombre entier de 5 à 10 000, respectivement ;

(IIIb)

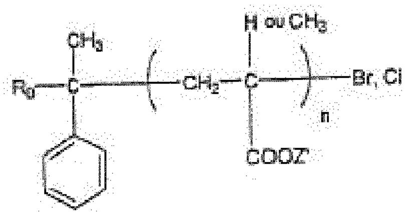

dans laquelle $R_0$ et Z' ont la même signification que dans la formule (III) ; et n est un nombre entier de 10 à 10 000 ;

(IVb)

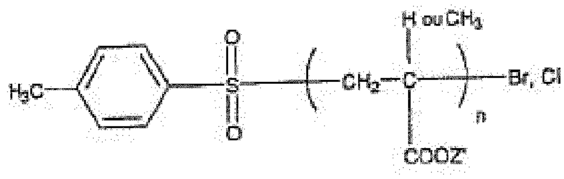

dans laquelle Z' a la même signification que dans la formule (IV) ; et n est un nombre entier de 10 à 10 000.

**5.** Polymère selon la revendication 1, dans lequel les formules (I), (II), (III) et (IV) représentent les formules (Ic), (IIc), (IIIc) et (IVc) suivantes, respectivement :

(Ic)

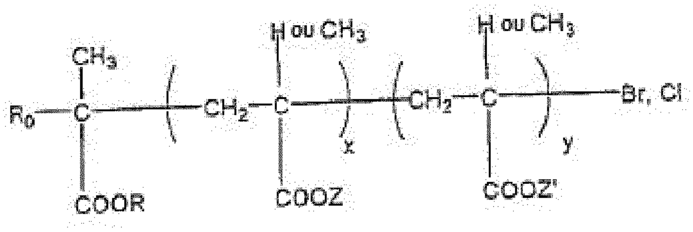

dans laquelle $R_0$, R, Z et Z' ont la même signification que dans la formule (I) ; x est un nombre entier de 5 à 10 000 ; et y est un nombre entier de 5 à 10 000 ;

(IIc)

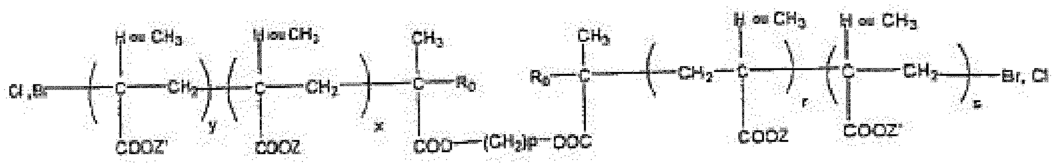

dans laquelle $R_0$, R, Z et Z' ont la même signification que dans la formule (II) ; x est un nombre entier de 5 à 10 000 ; y est un nombre entier de 5 à 10 000 ; r est un nombre entier de 5 à 10 000 ; et s est un nombre entier de 5 à 10 000 ;

(IIIc)

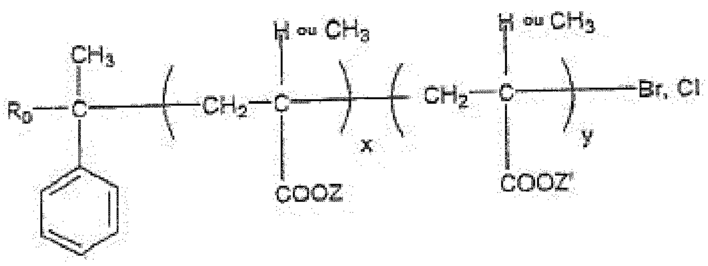

dans laquelle $R_0$, Z et Z' ont la même signification que dans la formule (III) ; et x est un nombre entier de 5 à 10 000 ; et y est un nombre entier de 5 à 10 000 ;

(IVc)

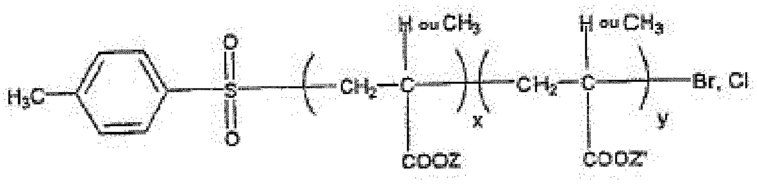

dans laquelle Z et Z' ont la même signification que dans la formule (IV) ; et x est un nombre entier de 5 à 10 000 ; et y est un nombre entier de 5 à 10 000.

**6.** Procédé de production d'un polymère selon la revendication 1, comprenant :

la polymérisation d'un monomère par une technique de polymérisation radicalaire vivante, où le monomère comprend une structure choisie dans le groupe constitué par les structures (i), (ii) et (iii):

Structure (i)

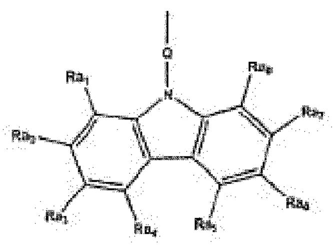

dans laquelle Q représente un groupe alkylène, avec ou sans hétéroatome ; $Ra_1$, $Ra_2$, $Ra_3$, $Ra_4$, $Ra_5$, $Ra_6$, $Ra_7$ et $Ra_8$ sont indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (ii)

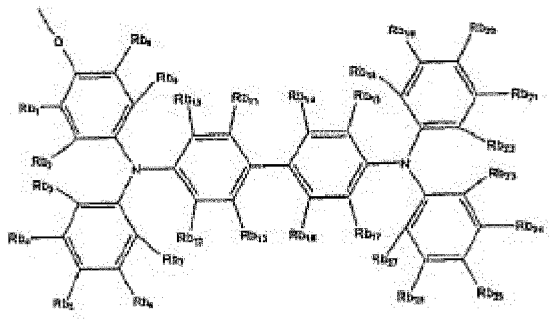

dans laquelle Q représente un groupe alkylène, avec ou sans hétéroatome ; $Rb_1$ à $Rb_{27}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (iii)

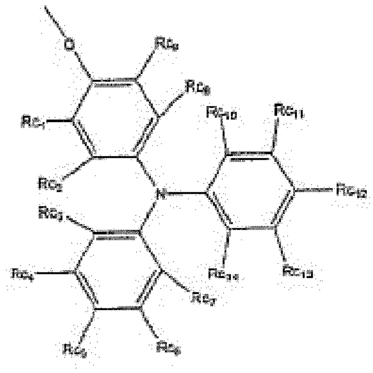

dans laquelle Q représente un groupe alkylène, avec ou sans hétéroatome ; $Rc_1$ à $Rc_{14}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; ou dans lequel le monomère comprend une structure représentée par la formule (0) ;

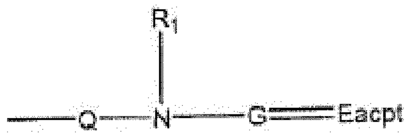

formule (0)

dans laquelle Q représente un groupe alkylène, avec ou sans hétéroatome ; $R_1$ est choisi dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; G est un groupe ayant un pont de liaison $\pi$-conjugué ; et Eacpt est un groupe électroaccepteur.

**7.** Procédé selon la revendication 6, dans lequel le polymère est représenté par une formule choisie dans le groupe constitué par les formules (Ia), (IIa), (IIIa) et (IVa) précisées dans la revendication 3.

**8.** Procédé selon la revendication 6, dans lequel la technique de polymérisation à radicalaire vivante comprend la mise en contact du monomère avec un catalyseur à base de métal de transition choisi dans le groupe constitué par le bromure de cuivre et le chlorure de cuivre.

**9.** Procédé selon la revendication 6, dans lequel le polymère est représenté par une formule choisie dans le groupe constitué par les formules (Ib), (IIb), (IIIb) et (IVb) précisées dans la revendication 4.

**10.** Procédé de production d'un copolymère selon la revendication 1 comprenant :

la copolymérisation d'au moins un premier monomère et d'un second monomère par une technique de polymérisation radicalaire vivante, où le premier monomère comprend une structure choisie dans le groupe constitué par les structures (i), (ii) et (iii) :

Structure (i)

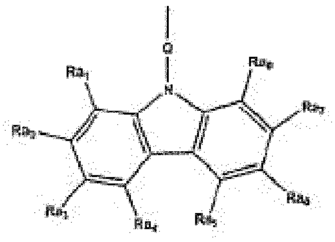

dans laquelle Q représente un groupe alkylène, avec ou sans hétéroatome ; $Ra_1$, $Ra_2$, $Ra_3$, $Ra_4$, $Ra_5$, $Ra_6$, $Ra_7$ et $Ra_8$ sont indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (ii)

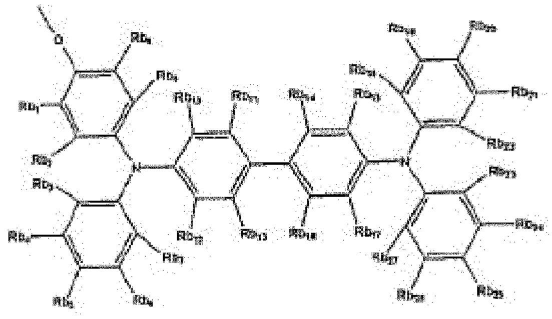

dans laquelle Q représente un groupe alkylène, avec ou sans hétéroatome ; $Rb_1$ à $Rb_{27}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (iii)

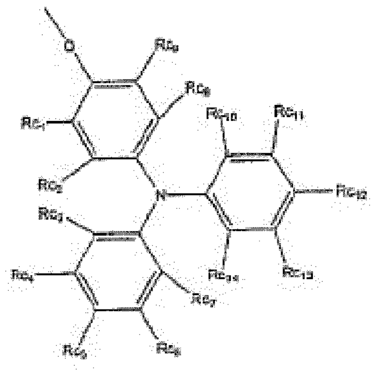

dans laquelle Q représente un groupe alkylène, avec ou sans hétéroatome ; $Rc_1$ à $Rc_{14}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; et

dans lequel le second monomère comprend une structure représentée par la formule (0) :

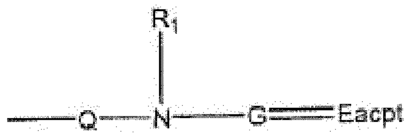 formule (0)

dans laquelle Q représente un groupe alkylène, avec ou sans hétéroatome ; $R_1$ est choisi dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; G est un groupe ayant un pont de liaison $\pi$-conjugué ; et Eacpt est un groupe électroaccepteur.

**11.** Procédé selon la revendication 10, dans lequel le polymère est représenté par une formule choisie dans le groupe constitué par les formules (Ic), (IIc), (IIIc) et (IVc) précisées dans la revendication 5.

**12.** Procédé selon la revendication 10, dans lequel la technique de polymérisation radicalaire vivante comprend la mise en contact du monomère avec un catalyseur à base de métal de transition choisi dans le groupe constitué par le bromure de cuivre et le chlorure de cuivre.

**13.** Composition comprenant un polymère pouvant être obtenu par polymérisation radicalaire vivante, dans laquelle :

(a) la polymérisation radicalaire vivante est réalisée en utilisant un monomère, un initiateur de polymérisation, un catalyseur à base de métal de transition et un ligand capable de former réversiblement un complexe avec le catalyseur à base de métal de transition,
(b) le polymère comprend au moins l'un d'un premier motif répété incluant un fragment ayant une capacité de transport de charges et un second motif répété incluant un fragment ayant une capacité optique non linéaire, et
(c) la composition affiche une capacité photoréfractive, dans laquelle le fragment ayant une capacité de transport de charges est choisi dans le groupe constitué par les structures (i), (ii) et (iii) et le fragment ayant une capacité optique non linéaire est représenté par la formule (0) :

dans laquelle les structures (i), (ii) et (iii) sont :

Structure (i)

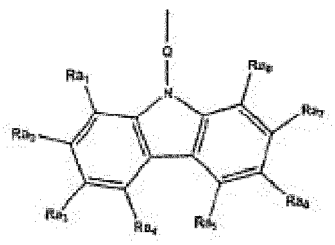

dans laquelle Q représente un groupe alkylène, avec ou sans hétéroatome ; $Ra_1$, $Ra_2$, $Ra_3$, $Ra_4$, $Ra_5$, $Ra_6$, $Ra_7$ et $Ra_8$ sont indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (ii)

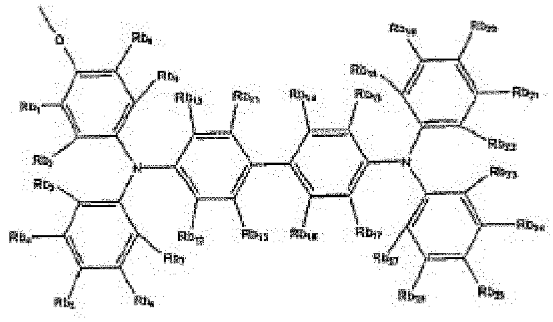

dans laquelle Q représente un groupe alkylène, avec ou sans hétéroatome ; $Rb_1$ à $Rb_{27}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (iii)

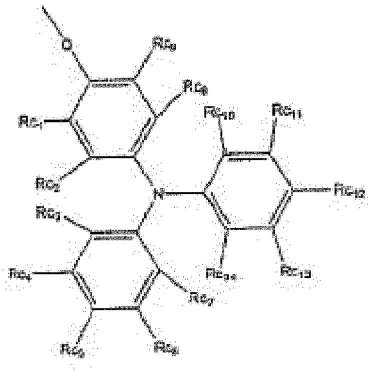

dans laquelle Q représente un groupe alkylène, avec ou sans hétéroatome ; $Rc_1$ à $Rc_{14}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;
dans laquelle la formule (0) est :

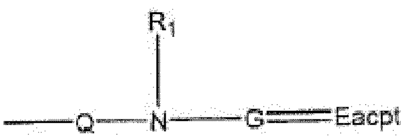

formule (0)

dans laquelle Q représente un groupe alkylène, avec ou sans hétéroatome ; $R_1$ est choisi dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; G est un groupe ayant un pont de liaison $\pi$-conjugué ; et Eacpt est un groupe électroaccepteur.

**14.** Composition selon la revendication 13, dans laquelle le catalyseur à base de métal de transition est choisi dans le groupe constitué par le bromure de cuivre et le chlorure de cuivre.

**15.** Composition selon la revendication 13, comprenant un copolymère pouvant être obtenu par polymérisation radicalaire, dans laquelle (a) le copolymère comprend un premier motif répété choisi dans le groupe constitué par les structures (i)", (ii)" et (iii)", et un second motif répété représenté par la formule (0)" ; dans laquelle (b) la composition

affiche une capacité photoréfractive ;

Structure (i)''

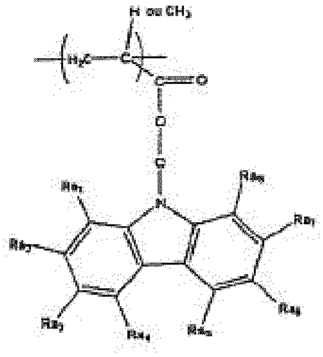

dans laquelle Q représente un groupe alkylène, avec ou sans hétéroatome ; $Ra_1$, $Ra_2$, $Ra_3$, $Ra_4$, $Ra_5$, $Ra_6$, $Ra_7$ et $Ra_8$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (ii)''

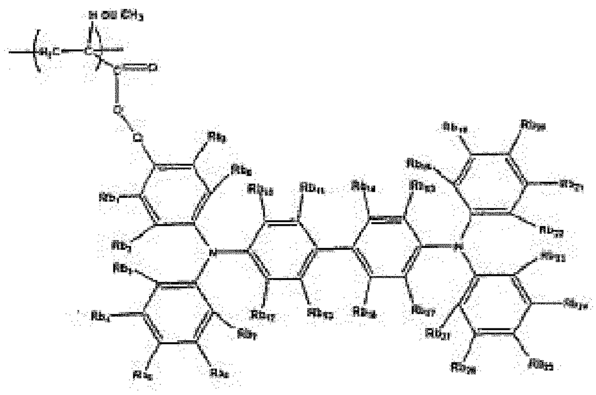

dans laquelle Q représente un groupe alkylène, avec ou sans hétéroatome ; $Rb_1$ à $Rb_{27}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

Structure (iii)''

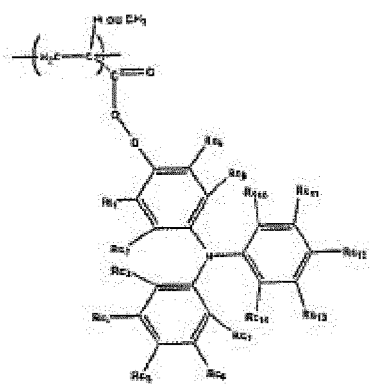

dans laquelle Q représente un groupe alkylène, avec ou sans hétéroatome ; $Rc_1$ à $Rc_{14}$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ;

formule (0)''

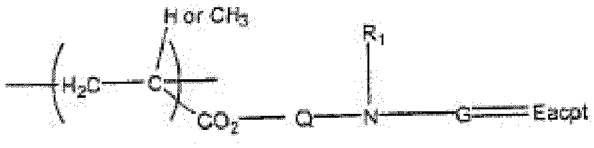

dans laquelle Q représente un groupe alkylène, avec ou sans hétéroatome ; $R_1$ est choisi dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; G est un groupe ayant un pont de liaison $\pi$-conjugué ; et Eacpt est un groupe électroaccepteur.

**16.** Polymère selon la revendication 1, procédé selon la revendication 6 ou 10, ou composition selon la revendication 13 ou 15, dans lequel ou laquelle G dans le formule (0)" est représenté par une structure choisie dans le groupe constitué par les structures (iv), (v) et (vi) ;
dans lequel ou laquelle les structures (iv), (v) et (vi) sont :

Structure (iv)

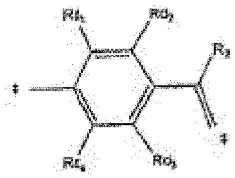

Structure (v)

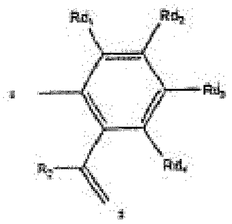

dans lesquelles, dans les deux structures (iv) et (v), $Rd_1$ à $Rd_4$ sont chacun indépendamment choisis dans le groupe constitué par un atome d'hydrogène, un groupe alkyle linéaire ayant jusqu'à 10 atomes, un groupe alkyle ramifié ayant jusqu'à 10 atomes et un groupe aromatique ayant jusqu'à 10 atomes de carbone ; $R_2$ est choisi dans le groupe constitué par un atome d'hydrogène, un groupe alkyle linéaire ayant jusqu'à 10 atomes, un groupe alkyle ramifié ayant jusqu'à 10 atomes et un groupe aromatique ayant jusqu'à 10 atomes de carbone ;

Structure (vi)

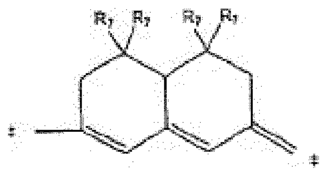

dans laquelle $R_7$ représente un groupe alkyle linéaire ou ramifié ayant jusqu'à 10 atomes de carbone ; et

dans laquelle Eacpt dans la formule (0)" est un groupe électroaccepteur et est représenté par une structure choisie dans le groupe constitué par les structures ;

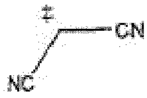 , 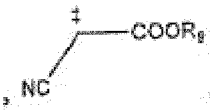 , 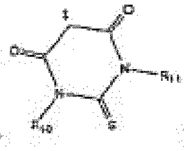 , 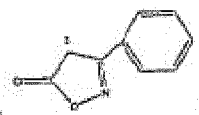 , 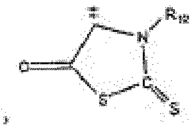

dans lesquelles $R_9$, $R_{10}$, $R_{11}$ et $R_{12}$ sont chacun indépendamment choisis dans le groupe constitué par un atome d'hydrogène, un groupe alkyle linéaire ayant jusqu'à 10 atomes, un groupe alkyle ramifié ayant jusqu'à 10 atomes et un groupe aromatique ayant jusqu'à 10 atomes de carbone.

**17.** Composition selon la revendication 16, dans laquelle le copolymère comprend un troisième motif répété incluant un troisième fragment ayant une capacité plastifiante.

**18.** Composition selon la revendication 17, dans laquelle le troisième motif répété incluant un troisième fragment ayant une capacité plastifiante est représenté par la structure suivante :

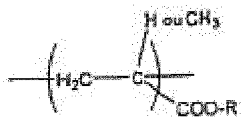

dans laquelle R est choisi dans le groupe constitué par un groupe alkyle linéaire ayant jusqu'à 10 atomes de carbone, un groupe alcényle linéaire ayant jusqu'à 10 atomes de carbone, un groupe alkyle ramifié ayant jusqu'à 10 atomes de carbone et un groupe alcényle ramifié ayant jusqu'à 10 atomes de carbone.

**19.** Composition selon la revendication 13 ou la revendication 15, comprenant un copolymère séquencé, dans laquelle (a) le copolymère séquencé comprend un premier motif de séquence incluant un premier fragment choisi dans le groupe constitué par les structures (i), (ii) et (iii), et un second motif de séquence incluant un second fragment représenté par la formule (0) ; dans laquelle (b) la composition affiche une capacité photoréfractive.

**20.** Composition selon la revendication 19, dans laquelle le copolymère séquencé comprend un troisième motif de séquence répété incluant un troisième fragment ayant une capacité plastifiante.

**21.** Composition selon la revendication 20, dans laquelle le troisième fragment ayant une capacité plastifiante est choisi dans le groupe constitué par un groupe alkyle linéaire ayant jusqu'à 10 atomes de carbone, un groupe alcényle linéaire ayant jusqu'à 10 atomes de carbone, un groupe alkyle ramifié ayant jusqu'à 10 atomes de carbone et un groupe alcényle ramifié ayant jusqu'à 10 atomes de carbone.

**22.** Composition selon l'une quelconque des revendications 13, 15 et 19, comprenant en outre un plastifiant et un sensibilisateur.

**23.** Composition selon la revendication 22, dans laquelle le plastifiant est un N-alkyl carbazole ou des dérivés de triphénylamine qui contiennent un groupe électroaccepteur tel qu'illustré dans la structure 4, 5 ou 6 suivante :

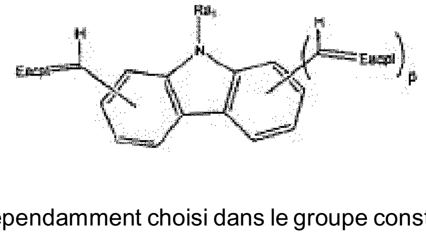

Structure 4

dans laquelle $Ra_1$ est indépendamment choisi dans le groupe constitué par un atome d'hydrogène, un groupe alkyle linéaire ayant jusqu'à 10 atomes de carbone, un groupe alkyle ramifié ayant jusqu'à 10 atomes de carbone et un

groupe aromatique ayant jusqu'à 10 atomes de carbone ; p vaut 0 ou 1 ;

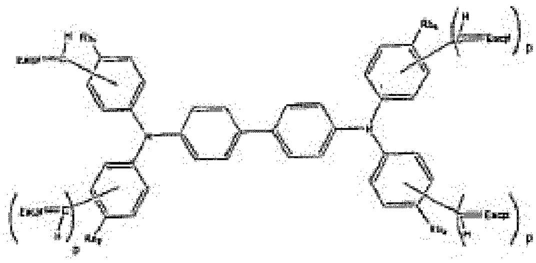

Structure 5

dans laquelle $Rb_1$ à $Rb_4$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; p vaut 0 ou 1 ;

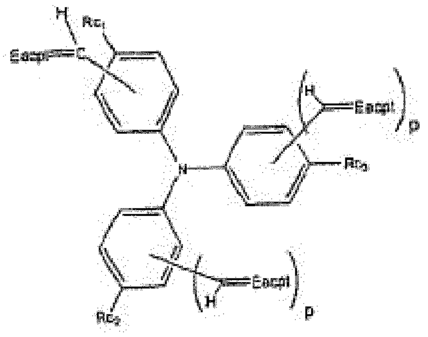

Structure 6

dans laquelle $Rc_1$ à $Rc_3$ sont chacun indépendamment choisis dans le groupe constitué par un atome d'hydrogène, un groupe alkyle linéaire ayant jusqu'à 10 atomes de carbone, un groupe alkyle ramifié ayant jusqu'à 10 atomes de carbone et un groupe aromatique ayant jusqu'à 10 atomes de carbone ; p vaut 0 ou 1 ;
dans laquelle Eacpt est un groupe électroaccepteur et est représenté par une structure choisie dans le groupe constitué par les structures ;

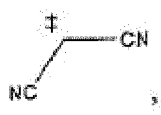 , 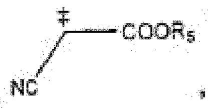 , 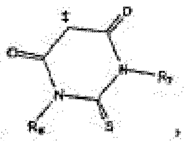 , 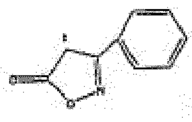 , 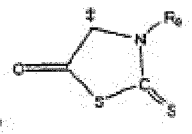

dans lesquelles $R_5$, $R_6$, $R_7$ et $R_8$ sont chacun indépendamment choisis dans le groupe constitué par un atome d'hydrogène, un groupe alkyle linéaire ayant jusqu'à 10 atomes, un groupe alkyle ramifié ayant jusqu'à 10 atomes et un groupe aromatique ayant jusqu'à 10 atomes de carbone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5064264 A, Ducharme
- JP 7318992 A
- JP 10333195 A, Showa Denko
- US 5807937 A
- JP 2001115124 A, M. Yamamoto
- US P6267913 B
- US 6267913 B
- US 6090332 A, Seth R. Marder
- US 5763548 A

### Non-patent literature cited in the description

- **N. PEYGHAMBARIAN et al.** *Nature,* 1994, vol. 371, 497
- **N. PEYGHAMBARIAN et al.** *Applied Phys. Lett.,* 1992, vol. 60, 1803
- **N. PEYGHAMBARIAN et al.** *J. Mater. Chem.,* 1999, vol. 9, 2251
- **T. KAWAKAMI ; N. SONODA.** *Applied Phys. Lett.,* 1993, vol. 62, 2167
- **H. SATO et al.** *Technical report of IEICE.,* 1995, 43
- **VAN STEENWICKEL et al.** *Macromolecules,* 2000, vol. 33, 4074
- **Y.CHEN et al.** *Modern Optics,* 1999, vol. 46, 1003
- **T. PATTEN et al.** Radical polymerization yielding polymers with Mw/Mn ~1.05 by homogeneous atom transfer radical polymerization. *Polymer Preprints,* 1996, vol. 37, 575
- **MATYJASEWSKI et al.** Controlled/living radical polymerization. Halogen atom transfer radical polymerization promoted by a Cu(I)/Cu(II) redox process. *Macromolecules,* 1995, vol. 28, 7901
- **M. SAWAMOTO et al.** Ruthenium-mediated living radical polymerization of methyl methacrylate. *Macromolecules,* 1996, vol. 29, 1070
- **E. HATTEMER et al.** Polymer Preprints. Am. Chem. Soc., Div. Polym. Chem, 2000, vol. 41, 785
- **K. MATYJASEWSKI et al.** Controlled/living radical polymerization. Halogen atom transfer radical polymerization promoted by a Cu(I)/Cu(II) redox process. *Macromolecules,* 1995, vol. 28, 7901
- **D.S. CHEMLA ; J. ZYSS.** Nonlinear Optical Properties of Organic Molecules and Crystals. Academic Press, 1987
- **M.A. DIAZ-GARCIA et al.** *Chem. Mater.,* 1999, vol. 11, 1784
- **W.F. MOEMER.** *Appl. Phys. Lett.,* 1998, vol. 73, 1490
- **T. PATTEN et al.** Radical polymerization yielding polymers with Mw/Mn ~1.05 by homogeneous atom transfer radical polymerization. *Polymer Preprints,* 1996, vol. 37, 575
- **W.F. MOERNER.** *Appl. Phys. Lett.,* 1998, vol. 73, 1490